(19) Europäisches Patentamt
European Patent Office
Office européen des brevets

(11) **EP 4 016 864 A1**

(12) **EUROPEAN PATENT APPLICATION**
published in accordance with Art. 153(4) EPC

(43) Date of publication:
**22.06.2022 Bulletin 2022/25**

(21) Application number: **19950348.3**

(22) Date of filing: **28.10.2019**

(51) International Patent Classification (IPC):
**H04B 7/06** (2006.01)     **H04B 7/08** (2006.01)
**H04B 7/10** (2017.01)

(52) Cooperative Patent Classification (CPC):
**H04B 7/06; H04B 7/08; H04B 7/10**

(86) International application number:
**PCT/JP2019/042230**

(87) International publication number:
**WO 2021/084592 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sony Group Corporation**
**Tokyo 108-0075 (JP)**

(72) Inventor: **NAKAYAMA, Takashi**
**Tokyo 140-0002 (JP)**

(74) Representative: **D Young & Co LLP**
**120 Holborn**
**London EC1N 2DY (GB)**

(54) **INFORMATION PROCESSING DEVICE, COMMUNICATION DEVICE, INFORMATION PROCESSING METHOD, COMMUNICATION METHOD, INFORMATION PROCESSING PROGRAM, AND COMMUNICATION PROGRAM**

(57)     An information processing device includes: an acquisition unit that acquires measurement information obtained by a plurality of antenna elements included in an antenna device that transmits a radio signal using a first polarized wave and a second polarized wave that is inclined by a predetermined angle with respect to the first polarized wave; and a generation unit that generates control information for controlling directivity of the radio signal based on the measurement information. The measurement information includes: first information based on a measurement result of a first polarized wave transmitted from a first antenna element among the plurality of antenna elements; second information indicating a relative difference between the first polarized wave transmitted from the first antenna element and a second polarized wave transmitted from the first antenna element; and third information indicating a relative difference between a radio signal transmitted from the first antenna element and a radio signal transmitted from a second antenna element different from the first antenna element.

FIG.10

EP 4 016 864 A1

**Description**

Field

The present disclosure relates to an information processing device, a communication device, an information processing method, a communication method, an information processing program, and a communication program.

Background

There has been an advancement in the utilization of radio waves in high frequency bands. In recent years, for the utilization of radio waves in the high frequency bands, a technology referred to as beamforming has been attracting attention. In the beamforming technology, for example, a control device included in a communication device controls the directivity of a radio signal using an antenna device including a plurality of antenna elements, thereby forming a directional beam.

Citation List

Non Patent Literature

Non Patent Literature 1: Satoshi Suyama et al., "5G Multi-Antenna Technology", NTT DOCOMO Technical Journal, Vol. 23, No. 4, 2016, p30-39

Summary

Technical Problem

In order to achieve high communication performance (for example, high antenna gain, high throughput, or the like), the control device needs to accurately control the directivity of the radio signal. However, the control device may not be able to accurately control the directivity of the radio signal due to the characteristics specific to the device (for example, the difference in the material of the antenna device constituting the device and the length of the wiring).
In view of this, the present disclosure proposes a technique capable of achieving high communication performance.

Solution to Problem

To solve the above problem, an information processing device according to the present disclosure includes: an acquisition unit that acquires measurement information obtained by a plurality of antenna elements included in an antenna device that transmits a radio signal using a first polarized wave and a second polarized wave that is inclined by a predetermined angle with respect to the first polarized wave; and a generation unit that generates control information for controlling directivity of the radio signal based on the measurement information, wherein the measurement information includes: first information based on a measurement result of a first polarized wave transmitted from a first antenna element among the plurality of antenna elements; second information indicating a relative difference between the first polarized wave transmitted from the first antenna element and a second polarized wave transmitted from the first antenna element; and third information indicating a relative difference between a radio signal transmitted from the first antenna element and a radio signal transmitted from a second antenna element different from the first antenna element.
Moreover, to solve the above problem, a communication device according to the present disclosure includes: an antenna part including a plurality of antenna elements; an acquisition unit that acquires control information for controlling directivity of a radio signal transmitted from the antenna part, the radio signal being transmitted by using at least a first polarized wave and a second polarized wave that is inclined by a predetermined angle with respect to the first polarized wave; and a communication control unit that controls the directivity of the radio signal transmitted from the antenna part based on the control information, wherein the control information is information generated based on: first information based on a measurement result of a first polarized wave transmitted from a first antenna element among the plurality of antenna elements; second information indicating a relative difference between the first polarized wave transmitted from the first antenna element and a second polarized wave transmitted from the first antenna element; and third information indicating a relative difference between a radio signal transmitted from the first antenna element and a radio signal transmitted from a second antenna element different from the first antenna element.

Brief Description of Drawings

FIG. 1 is a diagram illustrating a configuration example of a communication system according to an embodiment of the present disclosure.

FIG. 2 is a diagram illustrating a configuration example of a base station device according to an embodiment of the present disclosure.

FIG. 3 is a diagram illustrating a configuration example of a terminal device according to an embodiment of the present disclosure.

FIG. 4 is a diagram illustrating a configuration example of an antenna device according to an embodiment of the present disclosure.

FIG. 5 is a diagram illustrating an example of a system configuration of a mobile communication system assumed in NSA.

FIG. 6 is a diagram for describing an outline of an example of cell arrangement design in 5G.

FIG. 7 is a diagram for describing an outline of a beam management procedure.

FIG. 8 is a diagram for describing an example of a measurement system that applies an IFF method.

FIG. 9 is a diagram for describing an example of an EIPR measurement system using a CATR measurement system.

FIG. 10 is a diagram for describing an example of an EIPR measurement system using a CATR measurement system.

FIG. 11 is a diagram for describing an example of a configuration of an information processing system according to an embodiment.

FIG. 12 is a diagram for describing an example of a configuration of an antenna device included in a terminal device according to an embodiment.

FIG. 13 is a diagram illustrating an example of measurement results of a phase and power of an antenna device related to generation of a LUT according to a first exemplary embodiment.

FIG. 14 is a diagram for describing a method of measuring a phase of a radio signal in the information processing system according to the embodiment.

FIG. 15 is a diagram for describing a method of measuring amplitude of a radio signal in the information processing system according to the embodiment.

FIG. 16 is a diagram illustrating an image of an influence of polarization mismatch on transmission on a UE side.

FIG. 17 is a diagram illustrating variation in PD measurement results due to mismatch of polarization reference.

FIG. 18 is a diagram illustrating variation in PD measurement results due to mismatch of polarization reference.

FIG. 19 is a diagram illustrating an example of measurement results of a phase and power of an antenna device related to generation of a LUT according to a second exemplary embodiment.

FIG. 20 is a flowchart illustrating a basic operation of a terminal device related to radio wave protection.

FIG. 21 is a flowchart illustrating a selection operation of a power backoff table.

FIG. 22 is a diagram for describing a method of measuring PD characteristics.

FIG. 23 is a diagram illustrating an example of a LUT in which a power backoff value is written.

FIG. 24 is a diagram illustrating a state in which sensors are arranged in a terminal device.

FIG. 25 is a flowchart illustrating a control example using detection results of a sensor.

FIG. 26 is a functional block diagram illustrating a configuration example of a hardware configuration of an information processing device constituting the system according to the embodiment.

FIG. 27 is a diagram for describing an application example of the communication device according to the embodiment.

FIG. 28 is a diagram for describing an application example of the communication device according to the embodiment.

Description of Embodiments

Embodiments of the present disclosure will be described below in detail with reference to the drawings. In each of the following embodiments, the same parts are denoted by the same reference symbols, and a repetitive description thereof will be omitted.

Moreover, in the present specification and the drawings, a plurality of components having substantially the same functional configuration will be distinguished by attaching different alphabets after the same reference numerals. For example, a plurality of configurations having substantially the same functional configuration are distinguished as necessary, such as terminal devices 200A, 200B, and 200C. However, when it is not particularly necessary to distinguish between the plurality of components having substantially the same functional configuration, only the same reference numeral is given. For example, when it is not necessary to distinguish between the terminal devices 200A, 200B and 200C, the device is simply referred to as the terminal device 200.

The present disclosure will be described in the following order.

1. Introduction

    1-1. Utilization of beamforming technology
    1-2. Outline of present embodiment

2. Configuration of communication system

    2-1. Overall configuration of communication system
    2-2. Configuration example of base station device
    2-3. Configuration example of terminal device
    2-4. Configuration example of antenna device

3. Generation of control information (first exemplary embodiment)

    3-1. Overview of communication assuming utilization of millimeter waves
    3-2. Examination related to application of beamforming technology
    3-3. Example of measurement system related to generation of LUT
    3-4. Method of generating control information

4. Generation of control information (second exemplary embodiment)

    4-1. Problems in creating control information
    4-2. Method of generating control information
    4-3. Execution of power backoff

5. Hardware configuration example
6. Modification

    6-1. Example of application to other communication devices
    6-2. Example of application to communication based on other communication standards
    6-3. Other modifications

7. Summary

<<1. Introduction>>

<1-1. Utilization of beamforming technology>

In mobile communication systems based on a communication standard referred to as LTE/LTE-Advanced (LTE-A), radio signals with a frequency referred to as ultra-high frequency around 700 MHz to 3.5 GHz are mainly used for communication.

In addition, in communication utilizing ultra-high frequencies such as the above-described communication standards, employment of a technology referred to as Multiple-Input and Multiple-Output (MIMO) makes it possible to improve communication performance even in a fading environment. Since MIMO inevitably uses a plurality of antennas, there are ongoing examinations on a method of further suitably arranging the plurality of antennas.

In recent years, the fifth generation (5G) mobile communication system following LTE/LTE-A has been studied. For example, in the 5G mobile communication system, there has been a study for the utilization of a millimeter wave band (frequency band of 24.25 to 52.6 GHz), which has not been used in conventional cellular systems. In the following description, radio signals transmitted using the millimeter wave band may be simply referred to as millimeter wave(s).

Generally, the higher the frequency, the larger the path loss (spatial propagation loss). The large path loss causes problems such as narrowed coverage of one base station. Therefore, the communication utilizing millimeter waves tends to require an antenna having a high gain.

In order to satisfy such a requirement, there has been an examination of utilization of a beam for communication between a base station and a terminal device. Here, the beam is a directional beam formed by a technique referred to as beamforming. In the beamforming technology, an antenna device included in a base station or terminal device forms a radiated radio wave with a narrow beam width so as to have sharp directivity.

The beam formed by the beamforming technology concentrates radio waves in a specific direction. Therefore, when the antenna device increases the directivity of the beam, the total antenna gain increases by the amount of the directivity increase. This is generally referred to as beamforming gain (BF gain). This BF gain makes it possible to compensate for the path loss even in the high frequency band (for example, even in the millimeter wave band of 30 GHz or more).

The beamforming technology is described in Non

Patent Literature 1 (Satoshi Suyama et al., "5G Multi-Antenna Technology", NTT DOCOMO Technical Journal, Vol. 23, No. 4, 2016, p30-39), for example. This literature discloses the discussions related to the communication using millimeter waves in the 5G mobile communication system, in particular, the discussion related to the utilization of the beamforming technology.

In beamforming technology, controlling the directivity of radio signals becomes a weight. In order to improve the accuracy of directivity control, for example, it is important to improve the accuracy of control of radio signals transmitted from each of a plurality of antenna elements included in the antenna device (for example, the accuracy of phase control).

However, the antenna device has characteristics specific to the device (hereinafter referred to as device characteristics) such as a difference in material and a difference in length of the wiring. Due to these device characteristics, the radio signal output from each of the plurality of antenna elements has an error (for example, phase shift) compared with the ideal signal. In particular, when a high frequency radio signal is used, the influence of the error caused by these device characteristics tends to be large.

<1-2. Outline of present embodiment>

In view of these, the present embodiment proposes a technique capable of further suitably reducing the influence of an error caused by the hardware configuration of an antenna device in controlling the directivity of the radio signal.

For example, a communication device of the present embodiment includes an antenna device (antenna part) including a plurality of antenna elements. The antenna device includes, for example, a first antenna element and a second antenna element as a plurality of antenna elements. When the antenna device includes four patch antennas, for example, one of the four patch antennas is the first antenna element and each of the remaining three patch antennas is the second antenna element. The antenna device may be a dual polarized antenna.

When the antenna device is a dual polarized antenna, the communication device may use a vertically polarized wave (V polarized wave) and a horizontally polarized wave (H polarized wave) when transmitting radio signals. In addition, the communication device may acquire control information for controlling the directivity of the radio signals transmitted using the vertically polarized wave (V polarized wave) and the horizontally polarized wave (H polarized wave). At this time, the communication device (UE) may acquire the control information from the storage device inside the device. Then, the communication device (UE) may control the directivity of the radio signal transmitted from the antenna device based on the control information.

The control information is generated by an information processing device (for example, a computer owned by the designer of the communication device) in consideration of the device characteristics regarding the antenna device. For example, the information processing device generates control information based on measurement information regarding the radio signal output by the antenna device. Specifically, the information processing device generates the control information based on first measurement information regarding radio signals (for example, V polarized wave and H polarized wave) transmitted from the first antenna element included in the antenna device, and based on second measurement information regarding radio signals (for example, V polarized wave and H polarized wave) transmitted from the second antenna element included in the antenna device. At this time, the second measurement information may be information indicating a relative difference (for example, a difference in phase or amplitude) between the radio signal transmitted from the first antenna element and the radio signal transmitted from the second antenna element.

More specifically, the information processing device generates control information based on measurement information including: first information based on a measurement result of a first polarized wave (one of V polarized wave or H polarized wave) transmitted from a first antenna element; second information indicating a relative difference (for example, a difference in phase or amplitude) between the first polarized wave transmitted from the first antenna element and a second polarized wave (the other of V polarized wave or H polarized wave) transmitted from the first antenna element; and third information indicating a relative difference between a radio signal transmitted from the first antenna element and a radio signal transmitted from a second antenna element different from the first antenna element. At this time, the third information may include, for example, information indicating a phase difference between the V polarized wave output from the first antenna element and the V polarized wave output from the second antenna element, and information indicating a phase difference between the H polarized wave output from the first antenna element and the H polarized wave output from the second antenna element.

The communication device can control the directivity of the radio signal with high accuracy by controlling the antenna device using the control information generated by the information processing device. As a result, the communication device can achieve high communication performance (for example, high antenna gain).

The outline of the present embodiment has been described above. Now, the configuration of a communication system 1 to which the technology of the present embodiment can be applied will be specifically described below.

## <<2. Configuration of communication system>>

The communication system 1 includes a base station device and can be connected to a terminal device by radio communication.

The communication system 1 may be compatible with a radio access technology (RAT) such as Long Term Evolution (LTE) and New Radio (NR). LTE and NR are a type of cellular communication technology, and enable mobile communication of terminal devices by using cellular arrangement of a plurality of areas covered by base stations.

In the following, it is assumed that "LTE" includes LTE-advanced (LTE-A), LTE-advanced pro (LTE-A Pro), and evolved universal terrestrial radio access (EUTRA). In addition, it is assumed that NR includes new radio access technology (NRAT) and further EUTRA (FEUTRA). A single base station may manage a plurality of cells. In the following, a cell corresponding to LTE may be referred to as an LTE cell, and a cell corresponding to NR may be referred to as an NR cell.

NR is the next generation (fifth generation) radio access technology (RAT) subsequent to LTE (fourth generation communication including LTE-Advanced and LTE-Advanced Pro). The NR is a radio access technology that can support various use cases including enhanced mobile broadband (eMBB), massive machine type communications (mMTC), and Ultra-Reliable and Low Latency Communications (URLLC). NR is being studied with the aim of creating a technical framework that supports use scenarios, requirements, and deployment scenarios for these use cases.

Hereinafter, the configuration of the communication system 1 will be specifically described.

## <2-1. Overall configuration of communication system>

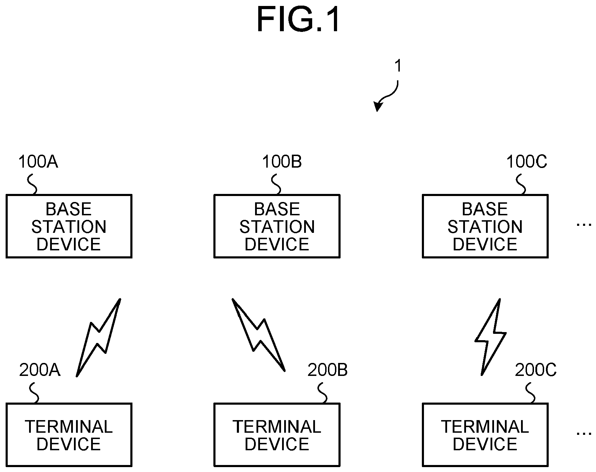

FIG. 1 is a diagram illustrating a configuration example of the communication system 1 according to the embodiment of the present disclosure. The communication system 1 is a radio communication system that provides a radio access network to a terminal device. For example, the communication system 1 is a cellular communication system using a radio access technology such as LTE and NR. Here, the radio access network may be an Evolved Universal Terrestrial Radio Access Network (E-UTRAN) or a Next Generation Radio Access Network (NG-RAN).

As illustrated in FIG. 1, the communication system 1 includes a base station device 100 and a terminal device 200. Each base station device 100 includes an antenna device (antenna part) including a plurality of antenna elements. With individual radio communication devices constituting the communication system 1 operating in cooperation with each other, the communication system 1 provides a user with a radio network capable of mobile communication. The radio network of the present embodiment includes a radio access network and a core network, for example. The radio communication device is a device having a radio communication function, and in the example of FIG. 1, the base station device 100 and the terminal device 200 are examples of this device. In the present embodiment, a radio communication device may be simply referred to as a communication device.

The communication system 1 may include a plurality of base station devices 100 and a plurality of terminal devices 200. In the example of FIG. 1, the communication system 1 includes base station devices 100A, 100B, 100C, and so on as the base station device 100, and includes terminal devices 200A, 200B, 200C, and so on as the terminal device 200.

The device in the figure may be considered as a device in a logical sense. That is, parts of the device in the drawing may be partially realized by a virtual machine (VM), a container, a docker, or the like, and they may be implemented on physically the same hardware.

The base station in LTE may be referred to as Evolved Node B (eNodeB) or eNB. The NR base station may be referred to as Next Generation RAN node (NGRAN Node), gNodeB, or gNB. In LTE and NR, a terminal device (also referred to as a mobile station, mobile station device, or terminal) may be referred to as user equipment (UE). The terminal device is a type of communication device, and is also referred to as a mobile station, a mobile station device, or a terminal.

In the present embodiment, the concept of the "communication device" includes not only a portable mobile device (terminal device) such as a mobile terminal but also a device installed in a structure or a mobile body. The structure or a mobile body itself may be regarded as a communication device. In addition, the concept of the communication device includes not only a terminal device but also a base station device and a relay device. The communication device is a type of processing device and information processing device. The communication device can be paraphrased as a transmission device or a reception device.

(Base station device)

The base station device 100 is a radio communication device that performs radio communication with the terminal device 200. As described above, the base station device 100 is a type of communication device. The base station device 100 is also a type of information processing device.

The base station device 100 may be, for example, a device corresponding to a radio base station (such as Base Station, NodeB, eNB, or gNB) or a radio access point. When the base station device 100 is eNB, gNB, or the like, the base station device 100 may be referred to as 3GPP access. Furthermore, when the base station device 100 is a radio access point, it may be referred to as non-3GPP access. Furthermore, the base station device 100 may be a radio relay station (Relay Node). Furthermore, the base station device 100 may be an optical link device referred to as a Remote Radio Head (RRH). Furthermore, the base station device 100 may be a receiving station device such as a field pickup unit (FPU). In addition, the base station device 100 may be an Integrated Access and Backhaul (IAB) donor node or an IAB relay node that provides a radio access channel and a radio backhaul channel by using time division multiplexing, frequency division multiplexing, or space division multiplexing.

When the base station device 100 is gNB, the base station device may be referred to as any of or a combination of gNB Central Unit (CU) and gNB Distributed Unit (DU). In the present embodiment, a base station of a radio communication system may be referred to as a base station device. The base station device 100 may be configured to be capable of radio communication with another base station device 100. For example, when a plurality of base station devices 100 is eNB each or a combination of eNBs and gNBs, the devices may be connected by an X2 interface. Furthermore, when a plurality of base station devices 100 is gNB each or a combination of eNBs and gNBs, the devices may be connected by an Xn interface. Furthermore, when a plurality of base station devices 100 is a combination of gNB CU and gNB DU, the devices may be connected by an F1 interface. The message information (RRC signaling or DCI information) described below may be transmitted in communication between a plurality of base station devices 100 (for example, via the X2, Xn, and F1 interfaces).

Note that the radio access technology used by the base station device 100 may be a cellular communication technology or a wireless LAN technology. Needless to say, the radio access technology used by the base station device 100 is not limited thereto, and may be other radio access technologies. For example, the radio access technology used by the base station device 100 may be a low power wide area (LPWA) communication technology. Here, the LPWA communication is communication conforming to the LPWA standard. Examples of the LPWA standard include ELTRES, ZETA, SIGFOX, LoRaWAN, and NB-lot. Needless to say, the LPWA standard is not to be limited thereto, and may be other LPWA standards. In addition, the radio communication used by the base station device 100 may be radio communication using millimeter waves. Furthermore, the radio communication used by the base station device 100 may be radio communication using radio waves or wireless communication (optical wireless communication) using infrared rays or visible light.

The base station device 100 may be capable of performing multiple-input and multiple-output (MIMO) communication with the terminal device 200. Furthermore, it is allowable to have a configuration enabling communication with the terminal device 200 using a plurality of polarized waves (for example, a vertically polarized wave and a horizontally polarized wave). For example, the base station device 100 may be capable of communicating with the terminal device 200 using polarized MIMO. The base station device 100 may be capable of Non-Orthogonal Multiple Access (NOMA) communication with the terminal device 200. Here, NOMA communication refers to communication (transmission, reception, or both) using non-orthogonal resources. The base station device 100 may be capable of communicating with a communication device other than the terminal device 200 (for example, another base station device 100) using MIMO or NOMA. Needless to say, the base station device 100 may be capable of communicating with a communication device other than the terminal device 200 using a plurality of polarized waves.

The base station devices 100 may be capable of communicating with each other via a base station device-core network interface (for example, S1 Interface). This interface may be implemented as wired or wireless interface. Furthermore, the base station devices may be capable of communicating with each other via an interface between the base station devices (for example, X2 Interface, S1 Interface, or the like). This interface may be implemented as wired or wireless interface.

The plurality of base station devices 100 may be capable of communicating with each other via a base station device-core network interface (for example, NG Interface, S1 Interface, or the like). This interface may be implemented as wired or wireless interface. Furthermore, the base station devices may be capable of communicating with each other via an interface between the base station devices (for example, Xn Interface, X2 Interface, or the like). This interface may be implemented as wired or wireless interface.

Furthermore, the base station device 100 may be composed of a set of a plurality of physical or logical devices. For example, in the present embodiment, the base station may be classified into a plurality of devices of Baseband Unit (BBU) and Radio Unit (RU), and may be interpreted as an aggregate of these plurality of devices. Furthermore, in the embodiment of the present disclosure, the base station device 100 may be either or both of BBU and RU. The RU may be a device integrally formed with an antenna.

The antenna (for example, the antenna integrally formed with the RU) included in the base station device 100 may adopt an advanced antenna system. In addition, the base station device 100 may support MIMO (for example, FD-MIMO) or beamforming. When the base station device 100 adopts the advanced antenna system, the antenna included in the base station device 100 may include a plurality of transmitting antenna ports and a plurality of receiving antenna ports. For example, the antenna included in the base station device 100 may include 64 transmitting antenna ports and 64 receiving antenna ports.

The plurality of base station devices 100 may be connected to each other. One or the plurality of base station devices 100 may be included in a radio access network (RAN). That is, the base station may be simply referred to as a RAN, a RAN node, an Access Network (AN), or an AN node. RAN in LTE is sometimes referred to as Enhanced Universal Terrestrial RAN (EUTRAN). RAN in NR is referred to as NGRAN. RAN in W-CDMA (UMTS) is sometimes referred to as UTRAN.

The base station in LTE may be referred to as Evolved Node B (eNodeB) or eNB. That is, EUTRAN includes one or a plurality of eNodeBs (eNBs). NR base stations are sometimes referred to as gNodeB or gNB. That is, NGRAN contains one or a plurality of gNBs. In addition, EUTRAN may include gNB (en-gNB) connected to the core network (EPC) in LTE communication systems (EPS). Similarly, NGRAN may include an ng-eNB connected to the core network 5GC in a 5G communication system (5GS).

When the base station device 100 is eNB or gNB, the base station device 100 may be referred to as 3GPP access. Furthermore, when the base station device 100 is a radio access point, the base station device 100 may be referred to as non-3GPP access. Furthermore, the base station device 100 may be an optical link device referred to as a Remote Radio Head (RRH). When the base station device 100 is gNB, the base station device 100 may be either a gNB Central Unit (CU) or a gNB Distributed Unit (DU). Furthermore, when the base station device 100 is gNB, the base station device 100 may be composed of a combination of a gNB Central Unit (CU) and a gNB Distributed Unit (DU).

The base station device 100 can be utilized, operated, and/or managed by various entities (subjects). Assumable examples of the entity include: a mobile network operator (MNO), a mobile virtual network operator (MVNO), a mobile virtual network enabler (MVNE), a neutral host network (NHN) operator, an enterprise, an educational institution (incorporated educational institutions, boards of education of local governments, and the like), a real estate (building, apartment, and the like) administrator, an individual, or the like.

Needless to say, the subject of use, operation, and/or management of the base station device 100 is not limited thereto. The base station device 100 may be installed and/or operated by one business operator, or may be installed and/or operated by one individual. Needless to say, the installation/operation subject of the base station device 100 is not limited thereto. For example, the base station device 100 may be installed and operated by a plurality of business operators or a plurality of individuals in cooperation. Furthermore, the base station device 100 may be a shared facility used by a plurality of business operators or a plurality of individuals. In this case, installation and/or operation of the facility may be performed by a third party different from the user.

The concept of the base station device (also referred to as a base station) includes not only a donor base station but also a relay base station (also referred to as a relay station, a relaying base station, a relay station device, or a relay device). Furthermore, the concept of the base station includes not only a structure having a function of a base station but also a device installed in the structure.

The structure is, for example, a building such as a high-rise building, a house, a steel tower, a station facility, an airport facility, a port facility, or a stadium. The concept of the structure includes not only buildings but also non-building structures such as tunnels, bridges, dams, fences, and steel columns, as well as facilities such as cranes, gates, and windmills. In addition, the concept of the structure includes not only land-based (ground-based, in a narrow sense) structures or underground structures but also structures on the water, such as a jetty and a mega-float, and underwater structures such as an ocean observation facility. The base station device can be rephrased as a processing device or an information processing device.

The base station device 100 may be a donor station or a relay station. The base station device 100 may be a fixed station or a mobile station. The mobile station is a radio communication device (for example, a base station device) configured to be movable. At this time, the base station device 100 may be a device installed on a mobile body, or may be the mobile body itself. For example, a relay station device having mobility can be regarded as the base station device 100 as a mobile station. In addition, a device designed to have mobility, such as a vehicle, a drone (aerial vehicle), or a smartphone, and having a function of a base station device (at least a part of the function of a base station device) also corresponds to the base station device 100 as a mobile station.

Here, the mobile body may be a mobile terminal such as a smartphone or a mobile phone. The mobile body may be a mobile body that moves on the land (ground in a narrow sense) (for example, a vehicle such as an automobile, a motorcycle, a bus, a truck, a motorbike, a train, or a linear motor car), or a mobile body (for example, subway) that moves under the ground (for example, through a tunnel).

The mobile body may be a mobile body that moves on the water (for example, a ship such as a passenger ship, a cargo ship, and a hovercraft), or a mobile body that moves underwater (for example, a submersible ship such as a submersible boat, a submarine, or an unmanned submarine).

Furthermore, the mobile body may be a mobile body that moves in the atmosphere (for example, an aircraft (aerial vehicle) such as an airplane, an airship, or a drone), or may be a mobile body that moves outside the atmosphere (for example, an artificial astronomical object such as an artificial satellite, a spaceship, a space station, or a spacecraft). A mobile body moving outside the atmosphere can be rephrased as a space mobile body.

Furthermore, the base station device 100 may be a terrestrial base station device (ground station device) installed on the ground. For example, the base station device 100 may be a base station device arranged in a structure on the ground, or may be a base station device installed in a mobile body moving on the ground. More specifically, the base station device 100 may be an antenna installed in a structure such as a building and a signal processing device connected to the antenna. Note that the base station device 100 may be a structure or a mobile body itself. The "ground" represents not only a land (ground in a narrow sense) but also a ground or terrestrial in a broad sense including underground, above-water, and underwater. Note that the base station device 100 is not limited to the terrestrial base station device. The base station device 100 may be a non-terrestrial base station device (non-ground station device) capable of floating in the air or space. For example, the base station device 100 may be an aircraft station device or a satellite station device.

The aircraft station device is a radio communication device capable of floating in the atmosphere (including stratosphere), such as an aircraft. The aircraft station device may be a device mounted on an aircraft or the like, or may be an aircraft itself. The concept of the aircraft includes not only heavy aircraft such as an airplane and a glider but also light aircraft such as a hot-air balloon and an airship. In addition, the concept of the aircraft includes not only a heavy aircraft and a light aircraft but also a rotorcraft such as a helicopter and an auto-gyro. The aircraft station device (or the aircraft on which the aircraft station device is mounted) may be an unmanned aerial vehicle such as a drone (aerial vehicle). When the aircraft station device functions as user equipment (UE), the aircraft station equipment may be Aerial UE.

Note that the concept of the unmanned aerial vehicle also includes an unmanned aircraft system (UAS) and a tethered UAS. The concept of unmanned aerial vehicles also includes a Lighter-than-Air (LTA) unmanned aircraft system (UAS) and a Heavier-than-Air (HTA) unmanned aircraft system (UAS). Other concepts of unmanned aerial vehicles also include High Altitude Platforms (HAPs) unmanned aircraft system (UAS).

The satellite station device is a radio communication device capable of floating outside the atmosphere. The satellite station device may be a device mounted on a space mobile body such as an artificial satellite, or may be a space mobile body itself. The satellite serving as the satellite station device may be any of a low earth orbiting (LEO) satellite, a medium earth orbiting (MEO) satellite, a geostationary earth orbiting (GEO) satellite, or a highly elliptical orbiting (HEO) satellite. Accordingly, the satellite station device may be a device mounted on a low earth orbiting satellite, a medium earth orbiting satellite, a geostationary earth orbiting satellite, or a highly elliptical orbiting satellite.

The coverage of the base station device 100 may be large such as a macro cell or small such as a pico cell. Needless to say, the coverage of the base station device 100 may be extremely small such as a femto cell. Furthermore, the base station device 100 may have a beamforming capability. In this case, the base station device 100 may form a cell or a service area for each beam.

The cell provided by the base station device 100 is sometimes referred to as a serving cell. One downlink component carrier and one uplink component carrier may be associated with one cell. In addition, the system bandwidth corresponding to one cell may be divided into a plurality of bandwidth parts (BWPs). In this case, one or a plurality of BWPs may be configured for the UE, and one BWP may be used for the UE as an active BWP. In addition, radio resources (for example, a frequency band, a numerology (subcarrier spacing), and a slot format (slot configuration)) usable by the terminal device 200 may be different for each cell, each component carrier, or each BWP. Furthermore, one base station device 100 may provide a plurality of cells.

(Terminal device)

The terminal device 200 is a radio communication device that performs radio communication with the base station device 100. As described above, the terminal device 200 is a type of communication device. The terminal device 200 is also a type of information processing device.

Examples of the terminal device 200 include a mobile phone, a smart device (smartphone or tablet), a personal digital assistant (PDA), or a personal computer. Furthermore, the terminal device 200 may be a device such as a business camera equipped with a communication function, or may be a motorcycle, a moving relay vehicle, or the like on which a communication device such as a field pickup unit (FPU) is mounted. The terminal device 200 may be a machine to machine (M2M) device or an Internet of Things (IoT) device. The terminal device 200 may be referred to as MTC UE, NB-IoT UE, Cat.M UE, for example. In addition, the terminal device may be referred to as a mobile station (MS) or a Wireless Transmission Reception Unit (WTRU).

Furthermore, the terminal device 200 may be capable of sidelink communication with another terminal device 200. When performing sidelink communication, the terminal device 200 may be capable of using an automatic retransmission technology such as hybrid automatic repeat request (Hybrid ARQ (HARQ)). The terminal device 200 may be capable of MIMO communication or NOMA communication with the base station device 100. Furthermore, the terminal device 200 may be capable of performing communication with the base station device 100 using a plurality of polarized waves (for example, vertically polarized waves and horizontally polarized waves). For example, the other terminal device 200 may be capable of communicating with the terminal device 200 using polarized MIMO. The terminal device 200 may also be capable of MIMO communication and NOMA communication in communication (sidelink) with another terminal device 200. Needless to say, also in the communication (sidelink) with another terminal device 200, the terminal device 200 may be capable of performing communication using a plurality of polarized waves (for example, vertically polarized waves and horizontally polarized waves) with the terminal device 200.

Furthermore, the terminal device 200 may be capable of LPWA communication with another communication device (for example, the base station device 100 or another terminal device 200). In addition, the radio communication used by the terminal device 200 may be radio communication using millimeter waves. The radio communication (including sidelink communication) used by the terminal device 200 may be radio communication using radio waves or wireless communication (optical wireless communication) using infrared rays or visible light.

Furthermore, the terminal device 200 may be a mobile device. Here, the mobile device is a movable radio communication device. At this time, the terminal device 200 may be a radio communication device installed on a mobile body, or may be the mobile body itself. For example, the terminal device 200 may be a vehicle that moves on a road, such as an automobile, a bus, a truck, or a motorbike, or may be a radio communication device mounted on the vehicle. The mobile body may be a mobile terminal, or may be a mobile body that moves on land (on the ground in a narrow sense), in the ground, on water, or under water. Furthermore, the mobile body may be a mobile body that moves inside the atmosphere, such as a drone (aerial UE) or a helicopter, or may be a mobile body that moves outside the atmosphere, such as an artificial satellite.

The terminal device 200 does not necessarily have to be a device directly used by a person. The terminal device 200 may be a sensor installed in a machine or the like in a factory, such as a sensor used for communication referred to as machine type communication (MTC). The terminal device 200 may be a machine to machine (M2M) device or an Internet of Things (IoT) device. Furthermore, the terminal device 200 may be a device having a relay communication function as represented by Device to Device (D2D) and Vehicle to everything (V2X). Furthermore, the terminal device 200 may be a device referred to as Client Premises Equipment (CPE) used in a radio backhaul or the like.

Hereinafter, configuration of each device included in the communication system 1 according to the embodiment will be specifically described. The configuration of each device illustrated below is just an example. The configuration of each device may differ from the configuration below.

<2-2. Configuration example of base station device>

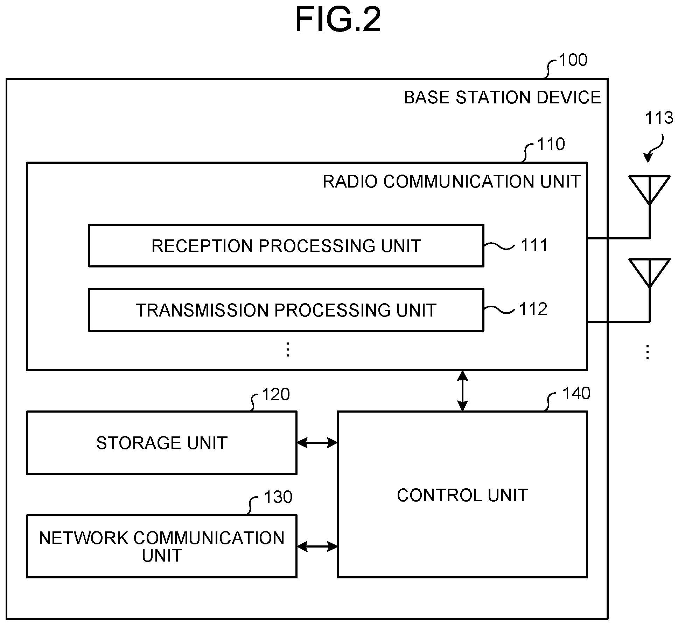

Next, a configuration of the base station device 100 will be described. FIG. 2 is a diagram illustrating a configuration example of the base station device 100 according to the embodiment of the present disclosure. The base station device 100 can simultaneously perform data transmission and data reception using the same band. For example, the base station device 100 can perform in-band full-duplex communication with another radio communication device such as the terminal device 200. The base station device 100 may be capable of MIMO communication or NOMA communication with other radio communication devices. Furthermore, the base station device 100 may be capable of communicating with another radio communication device using a plurality of polarized waves (for example, vertically polarized waves and horizontally polarized waves).

The base station device 100 includes a radio communication unit 110, a storage unit 120, a network communication unit 130, and a control unit 140. Note that the configuration illustrated in FIG. 2 is a functional configuration, and the hardware configuration may be different from this. Furthermore, the functions of the base station device 100 may be implemented in a distributed manner in a plurality of physically separated devices.

The radio communication unit 110 is a signal processing unit for performing radio communication with another radio communication device (for example, a terminal device 200 or another base station device 100). The radio communication unit can be rephrased as a communication unit. The radio communication unit 110 can simultaneously perform data transmission and data reception using the same band. For example, the base station device 100 is capable of full-band in-band full-duplex communication with other communication devices such as the terminal device 200. The radio communication unit 110 operates under the control of the control unit 140. The radio communication unit 110 may support one or a plurality of radio access methods. For example, the radio communication unit 110 supports both NR and LTE. The radio communication unit 110 may support W-CDMA or cdma2000 in addition to NR and LTE. Furthermore, the radio communication unit 110 may support communication using MIMO or NOMA. Furthermore, the radio communication unit 110 may support communication using polarized waves (for example, polarized MIMO).

The radio communication unit 110 includes a reception processing unit 111, a transmission processing unit 112, and an antenna 113. The radio communication unit 110 may include a plurality of the reception processing units 111, a plurality of the transmission processing units 112, and a plurality of the antennas 113. In a case where the radio communication unit 110 supports a plurality of radio access methods, individual portions of the radio communication unit 110 can be configured separately for each of the radio access methods. For example, the reception processing unit 111 and the transmission processing unit 112 may be individually configured depending on LTE and NR.

The reception processing unit 111 processes an uplink signal received via the antenna 113. For example, the reception processing unit 111 performs processing on the uplink signal, such as down-conversion, removal of unnecessary frequency components, amplification level control, orthogonal demodulation, conversion to digital signal, removal of guard interval (cyclic prefix), and frequency domain signal extraction using fast Fourier transform. The reception processing unit 111 then demultiplexes an uplink channel such as a physical uplink shared channel (PUSCH) or a physical uplink control channel (PUCCH) and an uplink reference signal from the signal that has undergone this processing. Subsequently, the reception processing unit 111 demodulates a received signal using a modulation scheme such as binary phase shift keying (BPSK) or quadrature phase shift keying (QPSK) for the modulation symbol of the uplink channel. The modulation scheme used by the reception processing unit 111 may be 16 quadrature amplitude modulation (QAM), 64 QAM, or 256 QAM. The reception processing unit 111 performs decoding processing on the coded bits of the demodulated uplink channel. The decoded uplink data and uplink control information are output to the control unit 140, for example.

The transmission processing unit 112 performs transmission processing of downlink control information and downlink data. The transmission processing unit 112 codes the downlink control information and the downlink data input from the control unit 140 by using a coding method such as block coding, convolutional coding, or turbo coding. The transmission processing unit 112 may be coded by a polar code or a Low Density Parity Check Code (LDPC code). The transmission processing unit 112 modulates the coded bits by a predetermined modulation scheme such as BPSK, QPSK, 16 QAM, 64 QAM, or 256 QAM. The transmission processing unit 112 multiplexes the modulation symbol of each of channels and the downlink reference signal and allocates the multiplexed signals on a predetermined resource element. Subsequently, the transmission processing unit 112 performs various types of signal processing on the multiplexed signal. For example, the transmission processing unit 112 performs processing such as conversion to the time domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 112 is transmitted from the antenna 113.

The antenna 113 is an antenna device (antenna part) including a plurality of antenna elements. Beamforming is feasible by controlling the directivity of the radio signal by the control unit 140 using the antenna 113. The antenna 113 can be regarded as the antenna device of the present embodiment. A part or all of the radio communication unit 110 including the antenna 113 may be regarded as the antenna device of the present embodiment.

The storage unit 120 is a data readable/writable storage device such as DRAM, SRAM, a flash drive, and a hard disk. The storage unit 120 functions as a storage means in the base station device 100. The storage unit 120 stores the control information used by the control unit 140 to control the radio communication unit 110 (or the antenna 113). The control information is, for example, a Luck Up Table (LUT) for the control unit 140 to control the directivity of the radio signal. The control information will be described below.

The network communication unit 130 is a communication interface for communicating with a node located at a higher level on the network. For example, the network communication unit 130 is a LAN interface such as an NIC. Furthermore, the network communication unit 130 may be a wired interface or a wireless interface. The network communication unit 130 functions as a network communication means of the base station device 100.

The control unit 140 is a controller that controls individual components of the base station device 100. The control unit 140 is realized by a processor (hardware processor) such as a central processing unit (CPU) or a micro processing unit (MPU). For example, the control unit 140 is realized by execution of various programs stored in the storage device inside the base station device 100 by the processor using random access memory (RAM) or the like as a work area. Note that the control unit 140 may be realized by an integrated circuit such as an application specific integrated circuit (ASIC) or a field programmable gate array (FPGA). The CPU, MPU, ASIC, and FPGA can all be regarded as controllers.

The control unit 140 may include a plurality of functional blocks. For example, the control unit 140 may include functional blocks such as an acquisition unit and a communication control unit. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. The functional block may be configured by using any method.

Note that the control unit 140 may be configured in a functional unit different from the above-described functional block. Furthermore, the operations of individual blocks (for example, the acquisition unit and the communication control unit) constituting the control unit 140 may be similar to the operations of individual blocks (for example, the acquisition unit and the communication control unit) constituting the control unit of the terminal device 200. The configuration of the terminal device 200 will be described below.

<2-3. Configuration example of terminal device>

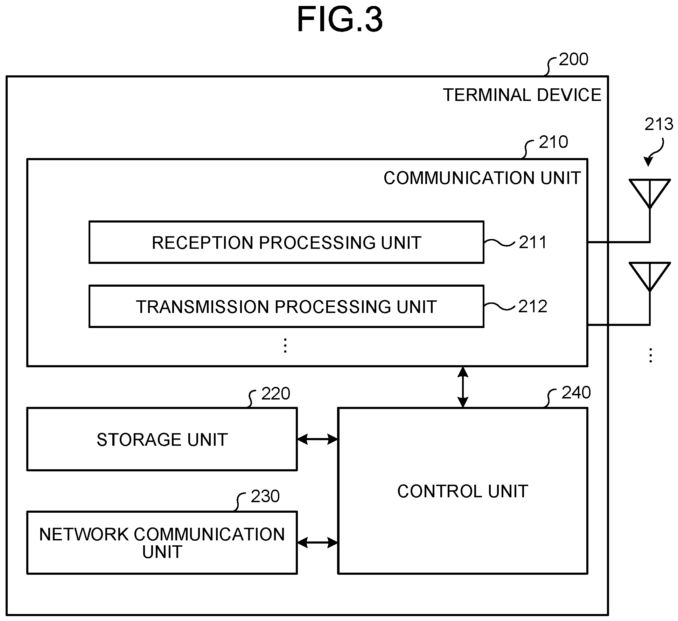

Next, a configuration of the terminal device 200 will be described. FIG. 3 is a diagram illustrating a configuration example of the terminal device 200 according to an embodiment of the present disclosure. The terminal device 200 can simultaneously perform data transmission and data reception using the same band. For example, the terminal device 200 can perform in-band full-duplex communication with another radio communication device such as the base station device 100. The terminal device 200 may be capable of MIMO communication or NOMA communication with other radio communication devices. Furthermore, the terminal device 200 may be capable of communicating with another radio communication device using a plurality of polarized waves (for example, vertically polarized waves and horizontally polarized waves).

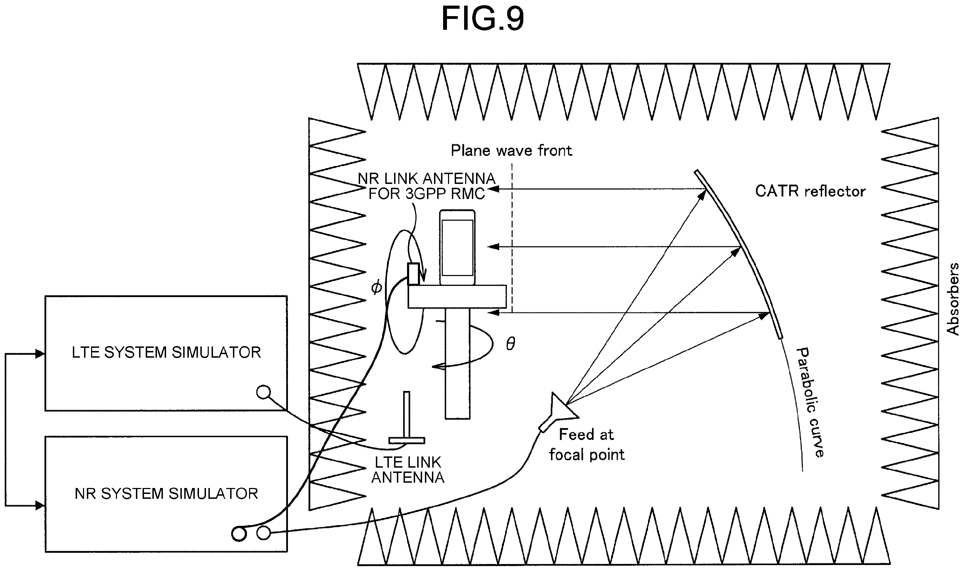

The terminal device 200 includes a communication unit 210, a storage unit 220, a network communication unit 230, and a control unit 240. Note that the configuration illustrated in FIG. 9 is a functional configuration, and the hardware configuration may be different from this. Furthermore, the functions of the terminal device 200 may be implemented in a distributed manner in a plurality of physically separated configurations. In the configuration of the terminal device 200, the network communication unit 230 does not have to be an indispensable component.

The communication unit 210 is a signal processing unit for radio communication with other radio communication devices (for example, the base station device 100 and another terminal device 200). The communication unit can be rephrased as a radio communication unit. The communication unit 210 can simultaneously perform data transmission and data reception using the same band. For example, the communication unit 210 can perform in-band full-duplex communication with other communication devices such as the base station device 100 and the terminal device 200. The communication unit 210 operates under the control of the control unit 240. The communication unit 210 may support one or a plurality of radio access methods. For example, the communication unit 210 supports both NR and LTE. The communication unit 210 may support W-CDMA and cdma2000 in addition to NR and LTE. Furthermore, the communication unit 210 may support communication using MIMO or NOMA. Furthermore, the communication unit 210 may support communication using polarized waves (for example, polarized MIMO).

The communication unit 210 includes a reception processing unit 211, a transmission processing unit 212, and an antenna 213. The communication unit 210 may include a plurality of the reception processing units 211, a plurality of the transmission processing units 212, and a plurality of the antennas 213. The configuration of the reception processing unit 211 and the transmission processing unit 212 may respectively be similar to the configuration of the reception processing unit 111 and the transmission processing unit 112 of the base station device 100.

The antenna 213 is an antenna device (antenna part) including a plurality of antenna elements. Beamforming is feasible by controlling the directivity of the radio signal by the control unit 240 using the antenna 213. The antenna 213 can be regarded as the antenna device of the present embodiment. A part or all of the communication unit 210 including the antenna 113 may be regarded as the antenna device of the present embodiment. In addition, the configuration of the antenna 213 may be similar to that of the antenna 113 of the base station device 100.

The storage unit 220 is a data readable/writable storage device such as DRAM, SRAM, a flash drive, and a hard disk. The storage unit 220 functions as a storage means in the terminal device 200. The storage unit 220 stores control information used by the control unit 240 to control the communication unit 210 (or antenna 213). The control information is, for example, a Lookup Table (LUT) for the control unit 240 to control the directivity of the radio signal. The control information will be described below.

The network communication unit 230 is a communication interface for communicating with a node located at a higher level on the network. For example, the network communication unit 230 may be a LAN interface such as an NIC. Furthermore, the network communication unit 230 may be a wired interface or a wireless interface. The network communication unit 230 functions as a network communication means of the terminal device 200. The network communication unit 230 communicates with other devices under the control of the control unit 240.

The control unit 240 is a controller that controls individual parts of the terminal device 200. The control unit 240 is realized by a processor (hardware processor) such as a CPU or MPU, for example. For example, the control unit 240 is realized by a processor executing various programs stored in a storage device inside the terminal device 200 using RAM or the like as a work area. Note that the control unit 240 may be realized by an integrated circuit such as an ASIC or an FPGA. The CPU, MPU, ASIC, and FPGA can all be regarded as controllers.

The control unit 240 may have a plurality of functional blocks. For example, the control unit 240 may have functional blocks such as an acquisition unit and a communication control unit. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. The functional block may be configured by using any method.

Note that the control unit 240 may be configured in a functional unit different from the above-described functional block. The operations of individual blocks (for example, the acquisition unit and the communication control unit) constituting the control unit 240 may be similar to the operations of individual blocks (for example, the acquisition unit and the communication control unit) constituting the control unit of the base station device 100.

<2-4. Configuration example of antenna device>

Next, the configuration of the antenna device 250 will be described. The antenna device 250 is an antenna device (antenna part) included in the communication device of the present embodiment. At this time, the antenna device 250 may be an antenna device (antenna part) included in the base station device 100, or may be an antenna device (antenna part) included in the terminal device 200. Needless to say, the antenna device 250 may be regarded as one device separate from the base station device 100 and the terminal device 200.

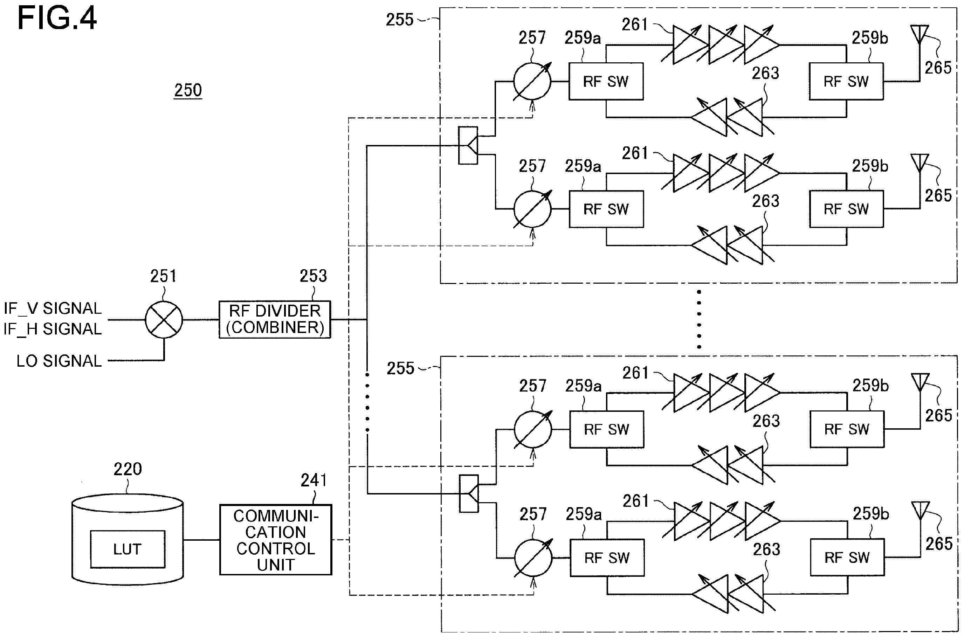

FIG. 4 is a diagram illustrating a configuration example of the antenna device 250 according to an embodiment of the present disclosure. The antenna device 250 illustrated in FIG. 4 is capable of controlling the directivity of the radio signal by beamforming technology. As an example of a configuration of the antenna device 250, FIG. 4 illustrates a configuration of a portion corresponding to the communication unit 210 (or antenna 213) in the example illustrated in FIG. 3 and a portion of the control unit 240 related to the control of the communication unit 210 (or antenna 213).

As illustrated in FIG. 4, the antenna device 250 includes a plurality of antenna units 255, a mixer 251, an RF divider (combiner) 253, a storage unit 220, and a communication control unit 241.

It is assumed that the antenna device 250 illustrated in FIG. 4 is capable of transmitting a V polarized wave and an H polarized wave as a radio signal. That is, in FIG. 4, an IF_V signal and an IF_H signal respectively indicate a signal corresponding to the V polarized wave and a signal corresponding to the H polarized wave among analog signals corresponding to the modulation result of the data as a transmission target. Furthermore, an LO signal schematically illustrates an output signal from a local oscillator used for converting the IF_V signal and the IF_H signal into a millimeter wave RF signal. That is, each of the IF_V signal and the IF_H signal is individually mixed with the LO signal by the mixer 251 so as to be converted into a millimeter wave RF signal. Subsequently, each of the IF_V signal and the IF_H signal converted into the millimeter wave RF signal is supplied to each antenna unit 255 by the RF divider (combiner) 253.

The antenna unit 255 schematically illustrates a configuration including a plurality of antenna elements included in the antenna device 250 and a circuit group for transmitting and receiving radio signals via the antenna elements. As a specific example, when the antenna device 250 is composed of a plurality of patch antennas, the antenna unit 255 is schematically illustrated to include portions corresponding to the individual patch antennas. Furthermore, the antenna unit 255 includes two systems, one for transmitting and receiving the V polarized wave and the other for transmitting and receiving the H polarized wave among the radio signals transmitted and received. Note that each of these configurations has substantially similar configuration except that the polarized wave as a transmission target is different. Therefore, in the following, only the configuration related to the transmission/reception of one polarized wave will be described, and the detailed description of the configuration related to the transmission/reception of the other polarized wave will be omitted.

The configuration for transmitting each polarized wave includes a phase shifter 257, RF switches 259a and 259b, amplifiers 261 and 263, and an antenna element 265.

The antenna element 265 is schematically illustrated as a portion of the antenna element included in the antenna unit 255 related to transmission/reception of the target polarized wave. As a specific example, when the antenna unit 255 is configured as a patch antenna, the antenna element 265 is schematically illustrated as a portion of the flat plate-shaped antenna element related to the transmission of the target polarized wave. That is, the antenna element 265 radiates the millimeter wave RF signal (transmission signal) supplied from the RF switch 259b side into space as a radio wave (radio signal). Furthermore, the antenna element 265 converts a radio wave in space into a millimeter wave RF signal (reception signal), and supplies the millimeter wave RF signal to the RF switch 259 side.

The phase shifter 257 controls the phase of the input signal. Specifically, the millimeter wave RF signal as a transmission target (transmission signal) is input to the phase shifter 257 from the RF divider (combiner) 253 side, and undergoes phase adjustment by the phase shifter 257 and then is input to the RF switch 259a. Furthermore, the millimeter wave RF signal (received signal) obtained by converting the radio wave in space by the antenna element 265 is input to the phase shifter 257 from the RF switch 259a side, undergoes phase adjustment by the phase shifter 257, and then is input to the RF divider (combiner) 253.

Each of amplifiers 261 and 263 amplifies the input signal (millimeter wave RF signal). Specifically, the amplifier 261 amplifies the transmission signal. The amplifier 263 amplifies the reception signal. Furthermore, each of the amplifiers 261 and 263 may be configured to be capable of controlling the gain related to the amplification of the signal.

RF switches 259a and 259b switch the paths through which millimeter wave RF signals are propagated. Specifically, when the antenna unit 255 transmits a radio signal, the RF switches 259a and 259b control propagation routes of the transmission signal output from the phase shifter 257 so that the transmission signal will be supplied to the antenna element 265 via the amplifier 261. In addition, when the antenna unit 255 receives a radio signal, the RF switches 259a and 259b control propagation routes of the reception signal converted from the radio wave in space by the antenna element 265 so that the reception signal will be supplied to the phase shifter 257 via the amplifier 263.

By controlling the operation of each phase shifter 257 included in each antenna unit 255, the communication control unit 241 controls the phase of the millimeter wave RF signal to be input to the phase shifter 257. Furthermore, the communication control unit 241 may control the gain related to the signal amplification by the amplifiers 261 and 263 included in each antenna unit 255. With such a configuration, for example, by individually controlling each phase shifter 257 included in each antenna unit 255, the communication control unit 241 can control the directivity of the beam related to the transmission of the radio signal by the antenna device 250. Furthermore, at this time, the communication control unit 241 may individually control the operation of the amplifier 261 included in each antenna unit 255. Similarly, for example, by individually controlling each phase shifter 257 included in each antenna unit 255, the communication control unit 241 can control the directivity of the beam related to the reception of the radio signal by the antenna device 250. Furthermore, at this time, the communication control unit 241 may individually control the operation of the amplifier 263 included in each antenna unit 255.

Furthermore, when controlling the operation of at least one of the phase shifter 257, the amplifier 261 or the amplifier 263 included in each antenna unit 255, the communication control unit 241 may read out information specific to each antenna unit 255 from the Lookup Table (LUT) held in the storage unit 220. Such a configuration will make it possible for the communication control unit 241 to reduce (or suppress) the influence of a delay caused by a factor specific to each antenna unit 255 (for example, a delay caused by a difference in the wiring length of the millimeter wave antenna element on the substrate) and the like. The details of the above LUT will be described below. The LUT corresponds to an example of "control information" for controlling the directivity of the radio signal transmitted from the antenna device.

The configuration of the antenna device 250 is applicable not only to the terminal device 200 but also to the base station device 100. Needless to say, the antenna device 250 may be regarded as a device separate from the terminal device 200 or the base station device 100. In this case, the antenna device 250 can also be regarded as a communication device.

<<3. Generation of control information (first exemplary embodiment)>>

Next, an example (first exemplary embodiment) of a method of generating control information for controlling such an antenna device 250 will be described. Before describing the method of generating control information, the outline of communication assuming the utilization of millimeter waves will be described.

<3-1. Overview of communication assuming utilization of millimeter waves>

In recent years, various studies have been conducted on the fifth generation (5G) mobile communication system following LTE/LTE-A, together with the progress of studies on introduction of Radio Access Technology (RAT) different from LTE, also referred to as New Radio (NR), as a next-generation radio access method.

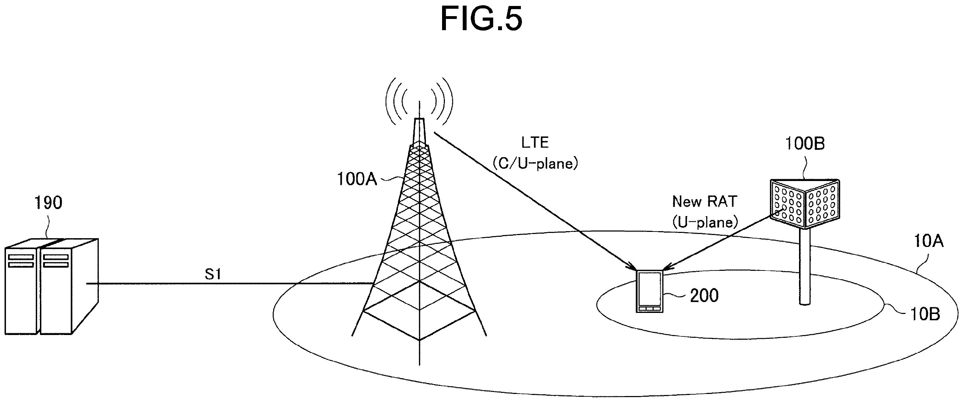

In addition, along with the introduction of NR, a standard referred to as Non-standalone (NSA), which is assumed to be used in combination with an existing LTE network, is also being studied. For example, FIG. 5 is a diagram illustrating an example of a system configuration of a mobile communication system assumed in NSA. As illustrated in FIG. 5, NSA conducts transmission and reception of C-plain (control information) between a macro cell base station device 100A and a terminal device 200 using the existing LTE as an anchor. Furthermore, U-plain (user data) is transmitted and received by NR between a small cell base station device 100B and the terminal device 200. With such a configuration, U-plain transmission/reception can be implemented with higher throughput. In addition, 5G Radio Access Network (RAN) is controlled by an EPC 190 via an S1 interface.

In the 5G mobile communication systems in particular, the use of communication using radio signals of frequencies such as 28 GHz and 39 GHz referred to as millimeter waves (hereinafter, simply referred to as "millimeter waves") is being studied. Furthermore, in general, millimeter waves have a relatively large spatial attenuation, and thus, an antenna having a high gain tends to be required when millimeter waves are used for communication. In order to satisfy such a requirement, there has been a study, regarding the 5G mobile communication system, on the formation of a directional beam using a technique referred to as beamforming so as to utilize the directional beam for communication between a base station and a terminal device. Using such a technique enables spatial multiplexing of the communication between the base station and the terminal device in addition to temporal and frequency multiplexing. With such a configuration, it is possible, in a 5G mobile communication system, to increase the number of users who can simultaneously perform end-to-end communication at a very high data rate and possible to dramatically increase the cell capacity, leading to an expectation of achievement of higher level broadband referred to as enhanced Mobile Broadband (eMBB).

(Outline of cell arrangement design)

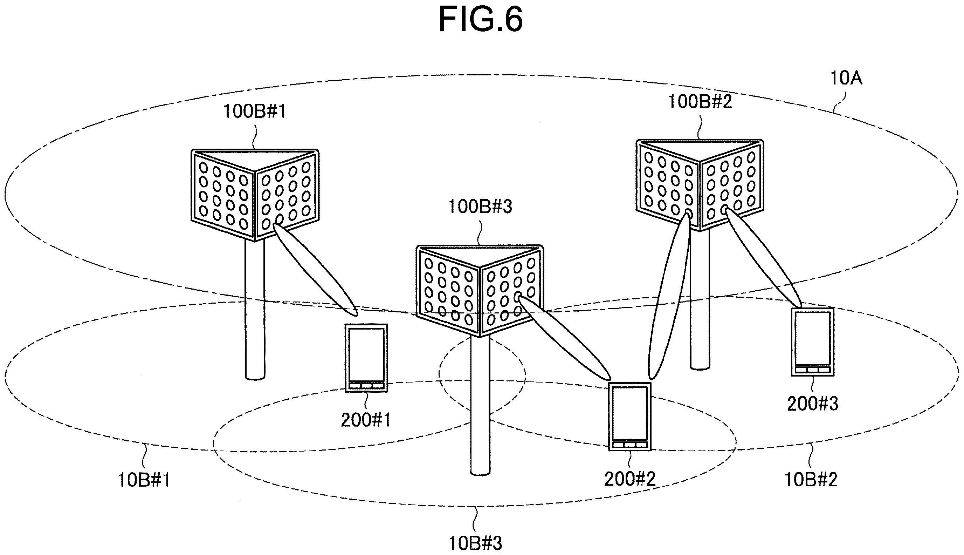

Here, with reference to FIG. 6, an outline of an example of cell arrangement design in 5G will be described. FIG. 6 is a diagram for describing an outline of an example of cell arrangement design in 5G. In the example illustrated in FIG. 6, an existing cell 10A based on the LTE standard is utilized as an overlaid cell, on which small cells 10B #1 to 10B #3 capable of communicating using millimeter waves overlapping in the cell 10A, so as to form a heterogeneous network (HetNet). The small cells 10B #1 to 10B #3 indicate small cells formed by small cell base station devices 100B #1 to 100B #3, respectively. Based on such a configuration, transmission and reception of U-plain (user data) are conducted between each of the small cell base station devices 100B #1 to 100B #3 and each of the terminal devices 200 #1 to 200 #3 respectively located in the small cells 10B #1 to 10B #3. This makes it possible to further improve the throughput related to the transmission and reception of U-plain (user data).

(Beam management)

Next, the procedure of beam management (BM: Beam Management) in 5G will be described with particular attention to the procedure for narrowing the beam utilized for communication between the base station and the terminal device.

5G (NR) using the millimeter wave band is referred to as FR2 (24.25G to 52.6GHz) from the frequency range in the specifications, and TS38.101-2 (2018/09) has stipulated test items of the radio characteristics on the terminal device (5G terminal) side and the minimum requirements for the test items.

In the case of NSA, for example, it is possible to obtain 5G information related to the timing and frequency required for synchronization from the LTE side, which is an anchor, by exchanging C-plain (control information). This subject is specified as an RRC parameter in TS38.331 (2018/09), for example.

In FR2 5G (NR), the coverage of one base station (for example, eNB, gNB, TRP, etc.) might be narrowed due to path loss. To handle this, for example, beamforming is used to concentrate the radio waves radiated from an antenna in a desired direction, thereby forming the radio wave of a narrow beam width so as to have sharp directivity. Application of such control will make it possible, with the beamforming gain, to compensate for the path loss in FR2.

Moreover, 5G (NR) of FR2 adopts the TDD method, and performs communication by ping-pong transmission using an identical frequency for both the DL signal and the UL signal. Therefore, the beamforming function for compensating for the path loss in FR2 described above can be necessary not only on the base station side but also on the terminal device (5G terminal) side.

In addition, discussions and studies have been conducted actively regarding the operation of the FR2 system, specifically regarding the beam management (BM) operation in RAN1.

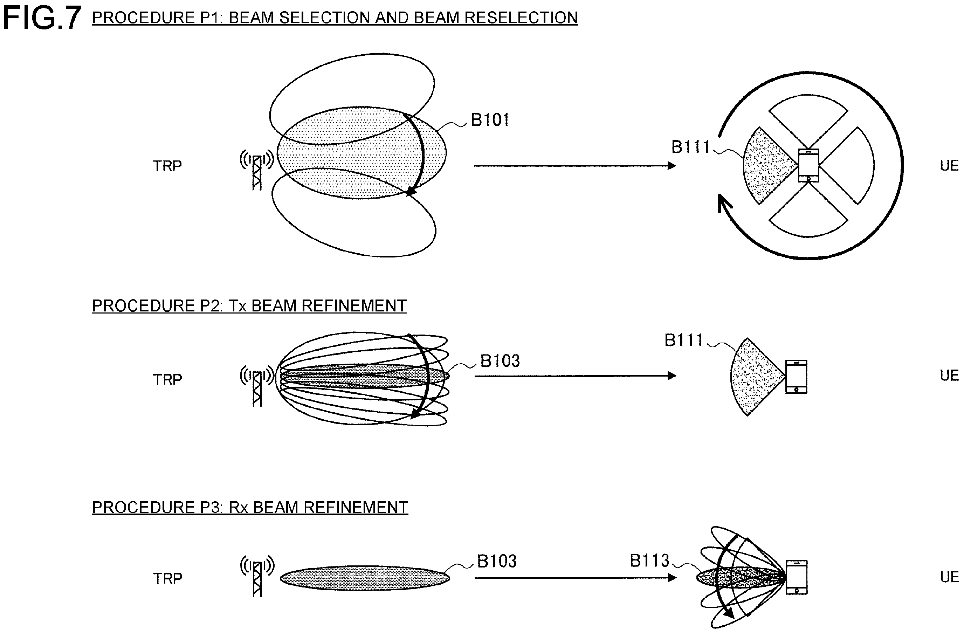

Here, the procedure of beam management will be outlined with reference to FIG. 7. FIG. 7 is a diagram for describing the outline of the beam management procedure. As described above, 3GPP defines operations of beam management (BM) represented by procedures P1, P2, and P3 as the procedure for narrowing the beams. Using procedures P1, P2, and P3, beam refinement (BR) between the base station and the terminal device is performed.

Procedure P1 is defined by beam selection and beam reselection. Procedure P1 basically assumes the operation of beam alignment at the time of initial access using a wide beam with a relatively wide beam width.

Procedure P2 is defined in Tx beam refinement. Procedure P2 assumes operations in which the beam refinement (BR) is performed for the Downlink (DL) Tx beam on the base station side, and beam alignment (beam correspondence) is performed between the narrow beam with a narrower beam width on the base station side and the beam on the terminal device side.

The procedure P3 is defined in Rx beam refinement. The procedure P3 assumes operations in which the beam refinement (BR) is performed for a DLRx beam on the terminal device side, and beam alignment (beam correspondence) is performed between the narrow beam on the base station side and the narrow beam with a narrower beam width on the terminal device side.

<3-2. Examination related to application of beamforming technology>

Subsequently, technical problems of the system according to the present embodiment will be described below, focusing on the application of the beamforming technology.

As described above, in FR2 5G (NR), it may be necessary to perform beamforming on the terminal device (5G terminal) side in order to compensate for path loss. That is, as the system operation of FR2, it may be necessary to perform the beam management operation on the terminal device (5G terminal) side as well.

On the other hand, the number of beams formed by a plurality of antenna elements included in the antenna device mounted on the terminal device and the phase and power characteristics of the beams sometimes depend on the form factor of the own terminal device, the terminal design, and the terminal architectures. Examples of specific factors include characteristics of the antenna element of the antenna device mounted on the terminal device, the number of antenna devices installed per terminal device (5G terminal), the position in the terminal where the antenna device is disposed, the quality and type of material used for the terminal, the design of the terminal, and the like.

Therefore, it may be necessary to control the phase and power associated with radio signal transmission for each beam generated by each antenna element included in each antenna device mounted on the terminal device in consideration of the influence of the above factors specific to the terminal device (in other words, factors specific to the antenna device). For example, information related to such control of phase and power is acquired in a beam-by-beam measurement beforehand, and a series of information associating each beam with the information acquired for the beam is stored in a predetermined storage region (for example, the storage unit 220 illustrated in FIG. 4) in a form referred to as a Lookup Table (LUT). That is, by controlling the phase and power related to the transmission of the radio signal from each antenna element included in the desired antenna device by using the information held in the LUT, it is possible for the terminal device to reduce the influence of the above factors specific to the terminal device.

On the other hand, in order to generate the above-described LUT, for each beam that can be formed by the antenna device, there is a need to perform measurement of the phase and power related to the transmission of the radio signal by each antenna element included in the antenna device at the time of forming the beam. When the terminal device includes four antenna devices, for example, it would be necessary to measure, for each antenna device, the phase and power related to the transmission of the radio signal by each antenna element for each beam that can be formed by the antenna device, and this would take relatively long measurement time for the data related to the control of the phase and the power for creating the LUT. In such a situation where the measurement takes a long time, heat dissipation of each element (for example, an amplifier) provided in the antenna device would cause deviation in the frequency of the IF signal (specifically, the IF_V signal and the IF_H signal illustrated in FIG. 4), the LO signal, and the like. That is, such a frequency deviation can lead to a situation having difficulty in accurately measuring the phase and power of the radio signal transmitted by each antenna element when forming the beam.

As described above, 5G (NR) using the millimeter wave band adopts the TDD method, and performs communication by ping-pong transmission using the same frequency for both the DL signal and UL signal. Therefore, the beamforming function for compensating for the path loss in FR2 can be necessary not only on the base station side but also on the terminal device (5G terminal) side.

Furthermore, regarding the operation of the FR2 system, it is necessary on the base station side and the terminal device (5G terminal) side to have the capability to align the spatial positions of the beams with each other. In 3GPP, the capability to align the spatial position of the beam is referred to as Beam Correspondence (BC). That is, it is important that the terminal device (5G terminal) side of FR2 has this capability in order to perform rapid and stable communication with the base station side in the millimeter wave band. For reference, regarding the above-described capability of Beam Correspondence, test items are disclosed in Section 6.6 Beam correspondence of TS38.101-2 of 3GPP as core specifications to be the minimum requirements for UE RF characteristics.

The terminal device (5G terminal) can have the above-described beam correspondence capability by holding the above-described LUT generated as described above in a referenceable state for the antenna device provided in the terminal device (5G terminal).

On the other hand, as described above, measuring the phase and power related to the generation of the LUT takes a relatively long time, and thus, heat dissipation from the element provided in the antenna device will cause a problem of occurrence of an error in the measurement value.

In view of the above circumstances, the present disclosure proposes, in particular, a technique to more suitably make the generation of the LUT feasible as an example of a technique capable of more suitably reducing the influence of an error due to the hardware configuration of the antenna device. Specifically, the present disclosure proposes an example of a measurement system that suppresses the above-described occurrence of errors due to frequency deviation caused by heat dissipation in the elements and that enables the above-described generation of the LUT without complicated operations.

<3-3. Example of measurement system related to generation of LUT>

Here, in order to simplify the feature of the technique according to an embodiment of the present disclosure, as an example of a method for verifying Radio Frequency (RF) characteristics (for example, phase, power, etc.) of a terminal device, Over The Air (OTA) test will be focused and described below.

3GPP TR38.810 summarizes the results of studies on the Over The Air (OTA) test method for UE RF characteristics in 5G (NR) of FR2. The concept of the OTA test methodology for UE RF characteristics is a requirement to meet the equivalence criteria for the far field environment. Examples of the OTA test method of UE RF characteristics include the following three methods.

- Direct far field (DFF)

- Indirect far field (IFF)
- Near field to far field transform (NFTF)

These three methods will be individually described below.

(DFF)

In the DFF method, the measurement system is configured such that the DUT (UE) and the measurement antenna are separated from each other by a distance R, which is a far field in which the electromagnetic wave is directly regarded as a plane wave. This distance R is expressed by the following equation (1).

$$R > \frac{2D^2}{\lambda} \qquad (1)$$

In equation (1), R indicates the minimum far-field distance. Furthermore, $\lambda$ indicates the wavelength of the radio signal as a target of RF characteristic measurement (that is, the wavelength of the radio signal corresponding to the frequency as the target of RF characteristic measurement). In addition, D indicates the diameter of the smallest sphere that encloses the radiating parts of the DUT. The value of D is determined by, for example, the diagonal length of the housing of the terminal device (5G terminal). In typical smartphones, the length of the diagonal line is about 15 cm in a current trend. Furthermore, in the case of a tablet terminal, the length of the diagonal line is about 30 cm in a current trend. Based on the above, the formula for calculating the distance that can be regarded as the far field and the free space loss derived from the distance are disclosed in 3GPP TR38.810. In the DFF method, due to its characteristics, the size of the anechoic chamber, which can be regarded as a far field, tends to be relatively large, and the free space loss tends to be large.

(NFTF)

In the NFTF measurement system, after measuring the amplitude and phase on the surface (in this case, the spherical surface) around the DUT, the transform from the near field to the far field is performed. Specifically, the 3D far-field pattern is obtained by using the modal spherical wave expansion, and the Near Field to Far Field Transform is based on the Huygen's principle. A direct solution of the Helmholtz equations is found by applying boundary conditions on the surface at an infinite distance away from the DUT From the tangential fields over the surface of the sphere, the modal coefficients can be determined using the orthogonality of the modal expansion. Details of this matter are disclosed in Annex F of TR38.810.

In NFTF measurement, it is possible to measure a 3D pattern with rotation in azimuth (azimuth direction) by using a circular probe array. Furthermore, through the use of the electronic switching between the antenna elements of the probe array, it is possible to measure points in elevation (elevation direction) without rotating the DUT in the elevation plane.

In the NFTF method, the signals transmitted by the DUT is simultaneously measured by using two probes. At this time, one corresponds to the probe for the measurement signal and the other corresponds to the probe for the reference signal. Under such a configuration, the measurement results of the measurement signal and the reference signal obtained with the above two probes are input to the Phase Recovery Unit (PRU), and the amplitude and absolute phase of the measurement signal are acquired.

As described above, the NFTF method tends to complicate the measurement system due to the characteristic of using PRF.

(IFF)

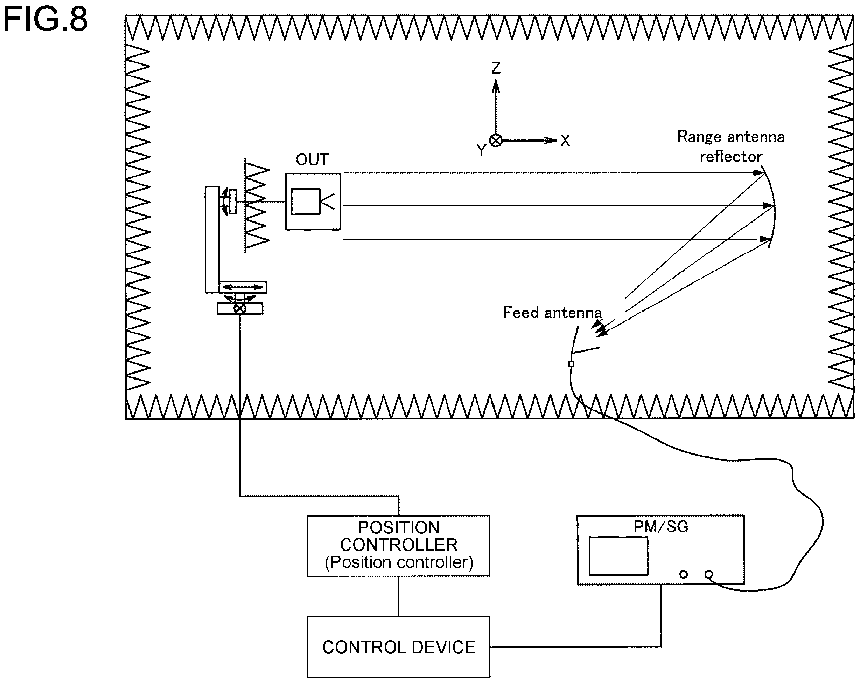

The IFF method indirectly constructs a far-field environment by using transformation with a parabolic reflector. Such a configuration is known, for example, as the Compact Antenna Test Range (CATR). Here, an example of a measurement system that applies the IFF method will be described with reference to FIG. 8. FIG. 8 is a diagram for describing an example of a measurement system that applies the IFF method. The example of FIG. 8 illustrates an exemplary configuration of a system referred to as a CATR measurement system (hereinafter, also simply referred to as "CATR").

The CATR illustrated in FIG. 8 has the following features (1) to (4), for example.

(1) Possibility of providing a positioning system that has a rotation shaft of at least two axes of freedom at an angle between the dual-polarized measurement antenna and the DUT and that maintains a polarization reference.

(2) In TR38.810 of 3GPP, it is agreed that EIRP, TRP, EIS, EVM, spurious emissions and blocking metrics can be tested.

(3) Before performing the beam-lock function (UBF), the measurement probe acts as a link antenna maintaining the polarization reference with respect to the DUT. On the other hand, when the beam is locked by the UBF, the link with the SS (gNB emulator) side is passed to the link antenna, and the link antenna can maintain a reliable signal level with respect to the DUT.

(4) For setups intended for measurements of UE RF characteristics in NSA mode with 1UL configuration, an LTE link antenna can be used to provide the link to the LUT side as an anchor to the DUT.

From the above characteristics, CATR as illustrated in FIG. 8 is typically used as a standard measurement system for the Over The Air (OTA) test method of UE RF characteristics in 5G (NR) of FR2. In the Tx measurement in the CATR setup, the DUT radiates a spherical wave front to a collimator (a system that parallelizes radio waves) that is within the range of focusing the propagation vector which matches with the boresite direction of the reflector on the feed antenna. On the other hand, in Rx measurement, the feed antenna radiates the spherical wave front to the reflector in the range where the radio waves are parallel in the direction of DUT. That is, CATR is a system that transforms a spherical wave front into a plane wave front when the spherical wave front is at the DUT.

In order to meet the requirements, the following parameters are mainly considered when designing a CATR:

- Quiet Zone (QZ)
- Focal length
- Offset angle
- Location of feed antenna

Basically, the plane wave front (uniform amplitude and phase) is a measurement system guaranteed in a certain cylinder volume. The size of the QZ mainly depends on the reflector, the taper of the feed antenna, and the anechoic chamber design. The details of the concept of QZ in CATR and an example of the phase distribution in QZ of CATR designed for QZ size are disclosed in TR38.810 of 3GPP, and thus, detailed description is omitted. The total phase variation in the QZ for a CATR is much lower than the phase variation (22.5 degrees) for a typical DFF range.

One of the features of CATR is that the NR RF FR2 requirement CATR includes a link antenna that is provided to maintain the NR link and that enables off-center beam measurements. Together with testing with the UE Beam Lock Function (UBF), this link antenna makes it possible to measure the whole emission pattern of UE RF characteristics at 5G (NR) of FR2. Here, the outline of the measurement routine will be described below.

First, before UBF is performed, the antenna probe for measurement functions as a link antenna maintaining a polarization reference with respect to the DUT. When the system simulator (SS) side and the terminal device (UE) side are in the CONNECTED state, positioning is performed in the Tx peak beam direction, and the Tx beam is beam-locked by the UBF, the above link is passed towards the link antenna that maintains the signal level reliable for the DUT. Note that this link antenna also includes the LTE link antenna in the case of NSA and the link antenna for 5G NR in order to correctly receive the 5G NR measurement reference signal (RMC) specified by 3GPP. Thereafter, even when the terminal device side is rotated, the entire emission pattern can be measured without losing the link with the system simulator, that is, the connected mode.

Due to these characteristics, with the LTE link antenna in the case of NSA, the link antenna for correctly receiving the 5G NR measurement reference signal (RMC), and the beam lock test function on the terminal device side, the CATR can perform beam measurement both on the center side of the beam and off-center of the beam.

In addition, in the setup intended for measurements of UE RF characteristics in non-standalone (NSA) mode using the 1UL setting, by using the LTE link antenna as an anchor and the link antenna for 5G NR for correctly receiving the 5G NR measurement reference signal (RMC) specified by 3GPP, it is possible to provide a link with the System Simulator (SS) side to the DUT side even under beamlock by the UBF. The LTE link antenna provides stable LTE signals without accurate path loss or polarization control. CATR is provided with such an LTE link antenna and a link antenna for 5G NR for correctly receiving the 5G NR measurement reference signal (RMC) specified by 3GPP.

Here, an outline of an example of the EIPR measurement system using the CATR measurement system will be described with reference to FIG. 9. FIG. 9 is a diagram for describing an example of the EIPR measurement system using the CATR measurement system, and illustrates an example of the EIPR measurement system at the time of non-standalone (NSA). In addition, a typical measurement procedure will be described below.

First, the terminal device (UE) side that entered the test mode by the test SIM performs almost the same operation as during normal IA, and uses the antenna module group provided on the terminal device side to start search reception of "SS Block" transmitted from the NR system simulator (SS) side. In Rel-15, the "threshold information" of "SS Block" to be selected and the gNB side "Tx transmission power information" for the RSRP received by each antenna module are transmitted from the LTE side of the anchor to the terminal device.

On the other hand, in stand-alone (SA), since "NR-SIB" information is carried to RMSI, it is possible to receive the above "SS Block" by specifying the position on "T-F Mapping" from Common Search Space (CSS). The RSRP measurement enables the selection of "path loss (PL) estimate", the optimum "SS Block" in the area cell for Msg1 transmission, (spatial) quasi co-located "PRACH resource" corresponding to the "SS Block", PRACH opportunity (RO) which is the timing to transmit the "PRACH resource", and the like, based on the "SS Block" that meets a threshold.

Since the TDD method is adopted in FR2, the "Tx-Rx Reciprocity characteristics" are sufficiently established in the anechoic chamber, and thus, the direction in which the RSRP measurement result is the largest can be set as a beam peak direction on the Tx-Rx side. It is agreed in 3GPP that the beam direction of PRACH is spatially quasi co-located (QCL) with "SS Block" which has the largest RSRP value.

Using a test SIM, the terminal device (5G terminal) performs operations in almost the same manner as at the time of normal IA, receives the SS Block signal from the NR system simulator, and obtains "SIB1" information from the side of LTE to be an anchor of EN-DC (NSA). Then, the terminal device performs a beamforming (BF) operation so as to maximize the RSRP value of the "SIB1" information. Specifically, the terminal device controls the direction in which the peak beam is pointed so as to satisfy the beam correspondence (BC) characteristic from the optimum antenna module.

Here, by further fine-tuning a 3D positioner as a measurement system, the Tx-Rx side beam peak direction is detected. After transitioned to the "CONNECTED" state, based on the DCI format, the transmission output is raised until the Tx peak beam is formed in the direction specified above by "UL RMC setting" and "TPC power control", and thereafter the beam-lock function (UBF) is performed. Note that the above measurement is performed for each of the V polarized wave and the H polarized wave for each frequency as targets in FR2.

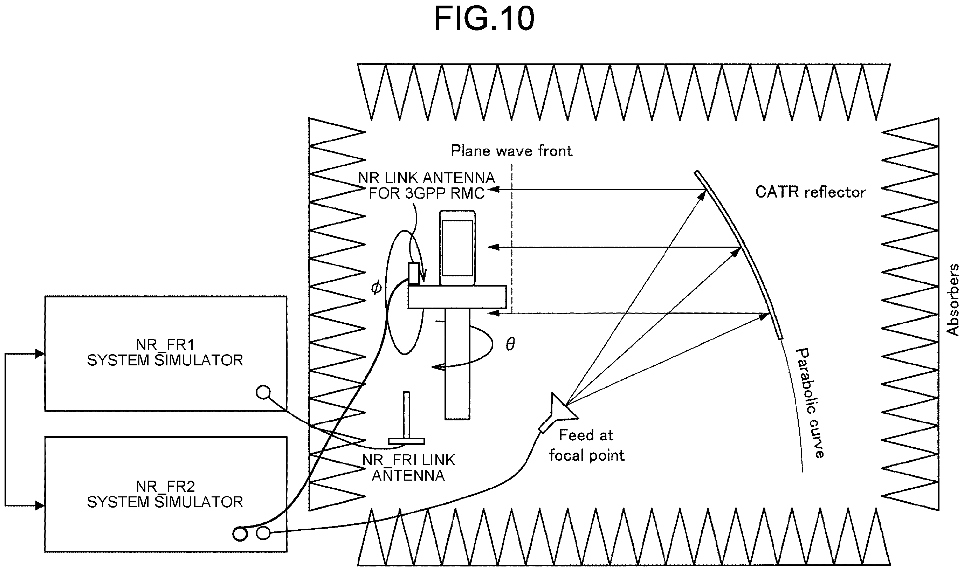

Furthermore, FIG. 10 is a diagram for describing an example of an EIPR measurement system using a CATR measurement system. FIG. 10 illustrates an example of an EIPR measurement system in stand-alone (SA) mode. As described above, in order to enable off-center beam measurement, the CATR measurement system of the NR RF FR2 requirement in FIG. 9 includes a link antenna to maintain the NR link even at off-center of the beam using the LTE link antenna as an anchor and a link antenna for 5G NR specified by 3GPP to properly receive and detect the measurement reference signal (RMC) of 5G NR. That is, by using the same principle measurement method as the measurement of UE RF characteristics in non-standalone (NSA) mode that uses the 1UL setting, the "CONNECTED" state is maintained and the link is maintained between the terminal device (5G terminal) side and the system simulator (SS) side by using the above-described two link antennas, even with the beam-lock by the UBF.

On the other hand, when measuring UE RF characteristics in stand-alone (SA) mode, it is generally reasonable to consider that the terminal device (5G terminal) supports both bands, namely Sub6 (FR1) and millimeter wave band (FR2). Accordingly, similarly to the case of LTE, which is the anchor in the measurement of UE RF characteristics in non-standalone (NSA) mode using the 1UL setting described above, it is possible to apply the similar concept that by using the link antenna for Sub6 (FR1) and the link antenna for 5G NR in order to correctly receive and detect 5G NR measurement reference signal (RMC) specified in 3GPP, the "CONNECTED" state remains maintained between the terminal device (5G terminal) side and the system simulator (SS) side, even at the off-center of the beam.

The 5G (NR) FR1 in the 3GPP specifications operates in the frequency band similar to LTE (for example, 7.125GHz or less). Therefore, in general, the antenna on the terminal device (5G terminal) side can have an omni-directional pattern. In other words, in the measurement of UE RF characteristics in stand-alone (SA) mode, call connection is attempted for the 5G (NR) side of FR1 with an antenna having an omni-directional pattern initially until achieving a "CONNECTED" state with the NR system simulator SS side. This makes it possible to maintain the link with the FR1 NR system simulator side inside the measurement system of the anechoic chamber as well as with the LTE side which is the anchor of the non-standalone (NSA) mode. In addition, by using a link antenna for 5G (NR) to correctly receive and detect the 5G NR measurement reference signal (RMC) specified in 3GPP, it is possible to perform off-center beam measurement of UE RF characteristics in 5G (NR) of FR2, similar to the non-standalone (NSA) mode.

As described above, the use of the CATR measurement system will enable EIRP measurement and the like in both the non-standalone (NSA) mode and the stand-alone (SA) mode.

As illustrated in FIG. 9, a common reference CLK (Ref_CLK) is used between a measurement device on the FR2 NR system simulator side where beamforming is performed and a measurement device on the LTE system simulator side which is an anchor in NSA to achieve clock synchronization, making it possible to completely achieve frequency synchronization between the above two measurement devices. The above can be constructed with a similar mechanism also between a measurement device on the FR2 NR system simulator side and the measurement device on the FR1 NR system simulator side, which is initially turned to the "CONNECTED" state, in the stand-alone (SA) in FIG. 10.

As described above, in the measurement system of the anechoic chamber, the terminal device (5G terminal) side having an antenna with an omni-directional pattern can stably maintain a link with a measurement device on the LTE system simulator side or the FR1 NR system simulator side. Therefore, by autonomous operations of the Channel Estimation (CE) function and frequency tracking function of a Base Band (BB) modem inside the terminal device (5G terminal), even in a situation where frequency deviation occurs due to an influence of heat dissipation caused by the extended measurement time, or the like, the frequency deviation would be autonomously self-compensated by the terminal device. Incidentally, TS36.101, which describes the core specifications of LTE RF characteristics, and TS38.101, which describes the core specifications of 5G (NR) RF characteristics, both stipulate that core specifications of the frequency error when the "CONNECTED" state is maintained would be within ± 0.1 PPM.

<<3-4. Method of generating control information>>

Subsequently, a method of generating control information according to the first exemplary embodiment, which is an example of the present embodiment, will be specifically described.

(Overview)

First, an outline of a method of generating control information will be described.

As described above, by using the CATR measurement system, in the measurement system of the anechoic chamber, the terminal device (5G terminal) side having an antenna with an omni-directional pattern can stably maintain a link with a measurement device on the LTE system simulator side or the FR1 NR system simulator side. That is, by the Channel Estimation (CE) function and the frequency tracking function of the BB modem inside the terminal device (5G terminal), even in a situation where frequency deviation occurs due to an influence of heat dissipation due to the extended measurement time, or the like, the frequency deviation would be autonomously self-compensated by the terminal device.

By utilizing the advantages of the CATR measurement system described above, the system according to the present embodiment provides a mechanism enabling the generation of the above-described LUT with no complicated operations while suppressing an influence of frequency deviation (for example, phase shift in radio signals) due to heat dissipation.

As described above, when conducting the conformance test of UE RF characteristics in 3GPP, the "Black Box approach", which does not declare the location of the antenna device on the terminal device (5G terminal) side, is currently agreed on in RAN4 and RAN5. On the other hand, when the terminal device (UE) vendor side generates a LUT specific to the antenna device provided in the terminal device, the position where the antenna device is arranged can be clearly grasped. The system according to the present embodiment utilizes such a characteristic to generate a LUT specific to the antenna device provided in the terminal device. In the following, for convenience, the terminal device is assumed to include four antenna devices as illustrated in the example illustrated in FIG. 7. Furthermore, as illustrated in the example illustrated in FIG. 4, the antenna device is assumed to have a configuration in which each antenna element is configured to be able to transmit and receive a V polarized wave and an H polarized wave, with the four antenna elements formed in an array.

Examples of the method of measuring the phase and power of a radio signal which is a millimeter wave for each beam formed by each antenna device provided in the terminal device include a method using a vector network analyzer (VNA). In this case, for example, a hole is made in the housing of the terminal device (5G terminal), a cable is connected to each antenna device provided in the terminal device via the hole, and various types of signals related to transmission of the radio signal (for example, the IF_V polarized wave signal, the IF_H polarized wave signal, and the signal corresponding to the RFLO signal in FIG. 4) are input from the VNA via the cable. Such a configuration makes it possible to more accurately measure the phase and power related to the transmission of the radio signal by each antenna device included in the terminal device.

However, due to the characteristic of the method using the VNA described above, such as making a hole in the housing of the terminal device and connecting a cable to each antenna device through the hole, there is a possibility that measurement data varies depending on states of the hole routing of the cable. In addition, the work of making a hole in the housing of the terminal device, the work of routing the cable, and the like, involve the possibility of occurrence of a human error, and this error can presumably influence the measurement result. In addition, since each of the above-described works needs to be performed so as not to influence the rotation measurement system of the 3D positioner, complicated and delicate works are required, making this method a very inefficient method even in the development on the terminal vendor side.

In the present disclosure, it is assumed that the BB modem side of 5G (NR) has a setting of operating in a special test mode as a development test function, for example. As a specific example, a case of creating a LUT for millimeter wave (FR2) for non-standalone (NSA) mode and stand-alone (SA) mode terminal devices (5G terminals) will be described. For example, in the case of NSA mode, the "CONNECTED" state is first maintained with the system simulator side for LTE, which is the anchor. Subsequently, for each of beams formed by each of antenna devices included in the terminal device, a test mode for measuring the phase and the power of the radio signal transmitted by the antenna element included in the antenna device is to be set on each of the measurement device side in the CATR measurement system and the terminal device (5G terminal) side. In contrast, in the case of SA mode, as Inter-band CA, the "CONNECTED" state is first maintained with the NR system simulator side of FR1. Subsequently, for each of beams formed by each of antenna devices included in the terminal device, a test mode for measuring the phase and the power of the radio signal transmitted by the antenna element included in the antenna device is to be set on each of the measurement device side in the CATR measurement system and the terminal device (5G terminal) side.

In the state where the link to be the anchor is maintained, similarly to the signal output from the VNA described above, a Continuous Wave (CW) signal, which is an unmodulated carrier, is used as a signal for operation of the antenna device so as to be output from the BB modem side of 5G (NR).

(Configuration example of measurement system)

Subsequently, a configuration example of the measurement system will be described.

In the present embodiment, it is assumed that the phase shifter inside the antenna device for millimeter waves is operating according to the IC design, and the phase and power of the radio signal transmitted by the antenna element included in the antenna device are measured for each beam formed by each antenna device. As described above, the QZ of CATR has a cylindrical shape, and the phase variation in the QZ is smaller than the phase variation in the case of DFF. For example, a CATR measurement system having a QZ with a diameter of 30 cm has already been put into practical use. In addition, the vector signal analyzer (VSA) used for phase and amplitude (power) measurement is also equipped with the latest high-speed ADC, and a measurement device capable of measuring frequencies directly up to 85 GHz with maximum bandwidth (BW) of 2GHz without the need for an upconverter has already been put into practical use.

In the present embodiment, using the VSA that applies the above-described high-speed ADC in the CATR measurement system, the radio signal phase and amplitude (power) transmitted by each antenna element included in an antenna device mounted on a terminal device (5G terminal) are measured for each of beams formable by the antenna device. Furthermore, at this time, the above measurement is performed while changing the posture of the terminal device (in other words, the antenna device) in the azimuth direction and the elevation direction with a measurement grid having a predetermined step size.

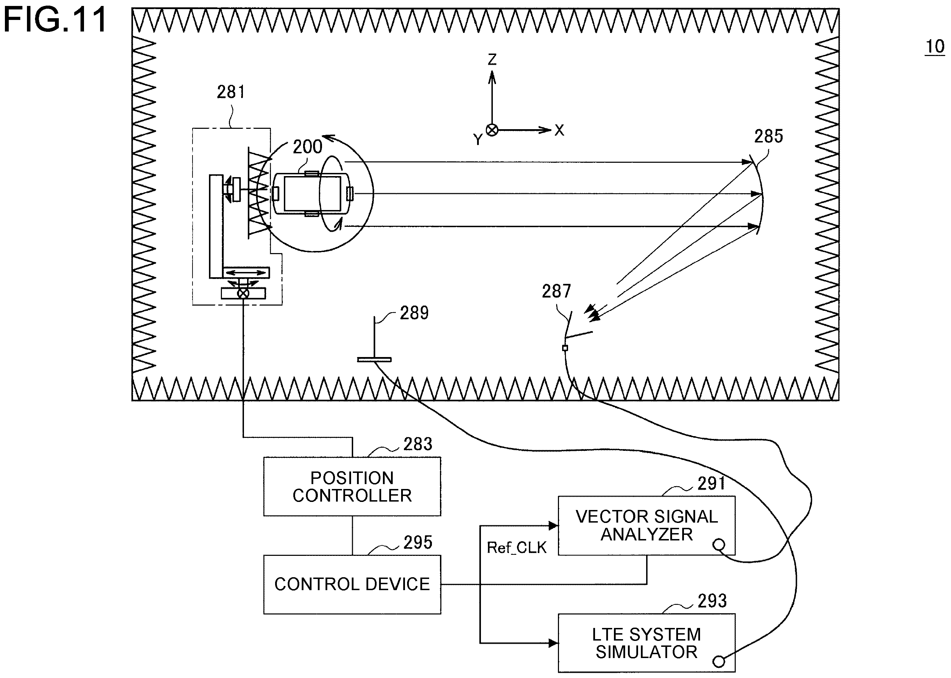

For example, FIG. 11 is a diagram for describing an example of a configuration of an information processing system according to an embodiment of the present disclosure. As illustrated in FIG. 11, an information processing system (that is, a measurement system) 10 according to the present embodiment includes a terminal device 200, a posture control device 281, a position controller 283, a reflector 285, a feed antenna 287, an LTE link antenna 289, a vector signal analyzer (VSA) 291, an LTE system simulator 293, and a control device 295.

The posture control device 281 includes a support part configured to support the terminal device 200. Furthermore, the support part is supported by a member rotatably formed with respect to each of a plurality of rotation shafts different from each other. Based on such a configuration, the posture of the support part is controlled by the rotational drive of the member conducted by the drive of an actuator or the like. That is, the posture of the terminal device 200 supported by the support part is controlled. The operation of the posture control device 281 is controlled, for example, by the position controller 283 to be described below.

The reflector 285 corresponds to a reflector for indirectly forming a far-field environment in the IFF measurement system. The reflector 285 is arranged so as to face the terminal device 200 supported by the posture control device 281, at a predetermined distance. Based on such a configuration, the reflector 285 reflects the radio signal transmitted from the antenna device included in the terminal device 200 toward the feed antenna 287.

The feed antenna 287 receives the radio signal transmitted by the antenna device included in the terminal device 200 and then reflected by the reflector 285, and outputs the reception result to the vector signal analyzer 291.

The LTE system simulator 293 and the LTE link antenna 289 respectively play a role as the LTE system simulator and the LTE link antenna described with reference to FIG. 9. That is, by using the LTE link antenna 289 as an anchor and maintaining the "CONNECTED" state for the terminal device 200 and the LTE as an anchor, the link between the terminal device 200 and the LTE system simulator 293 is maintained. That is, by performing radio communication (LTE) with the terminal device 200 via the LTE link antenna 289, the LTE system simulator 293 autonomously operates to achieve the frequency error of $\pm$ 0.1 PPM or less as described above, making it possible to solve the problem in the phase measurement due to frequency deviation due to heat dissipation of the element included in the antenna device. In addition, the LTE system simulator 293 supplies the vector signal analyzer 291 with a control signal according to the operation control details of the terminal device 200, enabling notifying the vector signal analyzer 291 of information related to the control of the terminal device 200.

As a specific example, on the LTE system simulator 293 side, when the "CONNECTED" state is maintained, a Cell Specific RS (CRS) or a Demodulation RS (DMRS) placed at a predetermined density in PDSCH payload data are constantly transmitted in downlink transmission on the signal format defined in the 3GPP specifications, enabling the terminal device 200 side to autonomously compensate for the frequency deviation. As described above, since measurement of the phase and power takes a relatively long time, a frequency shift occurs due to heat dissipation of the element provided in the antenna device, having a concern that the resulting phase measurement value includes an error.

However, on the terminal device 200 side in which the "CONNECTED" state is maintained, it is possible, as described above, to autonomously compensate for the frequency deviation by receiving RS signals that are known on both sides. Furthermore, the LTE system simulator 293 and the vector signal analyzer 291 are both supplied with the same reference clock (Ref_CLK) in the measurement system. It can be seen from this measurement system described above that the vector signal analyzer 291, the LTE system simulator 293, and the terminal device 200 are constantly compensated to be synchronized in both the frequency domain and the time domain. Under a special test mode state for LUT generation, the terminal device 200 outputs a CW signal being an unmodulated carrier from the 5G BB modem side to each of the internal antenna devices, so as to be an IF_V polarized wave signal and an IF_H polarized wave signal. Furthermore, under the special test mode state for LUT generation, the transmission timing can be recognized by the entire measurement system in time synchronization. That is, it is obviously possible to perform synchronization of timings related to the transmission of the CW signal which is the unmodulated carrier as well as a test mode signal between the terminal device 200 and the vector signal analyzer 291.

The vector signal analyzer 291 acquires the reception result of the radio signal from the feed antenna 287 and measures the phase and amplitude of the radio signal. As described above, since the entire measurement system is synchronized in time, the vector signal analyzer 291 can constantly recognize the transmission timing of the CW signal, which is the unmodulated carrier as well as a test mode signal by the terminal device 200. As long as the vector signal analyzer 291 can measure the phase of the CW radio signal based on the reception result of the CW signal being the unmodulated carrier, the method is not to be limited to the above-described example. Subsequently, the vector signal analyzer 291 outputs the measurement result of the phase and amplitude of the radio signal to the control device 295.

By controlling the operation of the posture control device 281, the position controller 283 controls the posture of the terminal device 200 supported by the support part of the posture control device 281. This enables control of the terminal device 200 with respect to the reflector 285. That is, together with the control of the posture control device 281 by the position controller 283, control is performed such that one of the plurality of antenna devices included in the terminal device 200 faces the reflector 285, as well as the control of the posture of the antenna device with respect to the reflector 285. By using such a configuration, for example, it is possible to selectively switch the antenna device facing the reflector 285 (in other words, the antenna device that transmits a radio signal toward the reflector 285).

The control device 295 performs control of the operation related to the measurement of the phase and amplitude of the radio signal transmitted from the antenna device of the terminal device 200, as well as generation of the LUT specific to the antenna device based on the measurement result.

Specifically, the control device 295 causes the position controller 283 to control the operation of the posture control device 281 such that the antenna device to be measured among the plurality of antenna devices included in the terminal device 200 is in a state of facing the reflector 285. Furthermore, at this time, the control device 295 may cause the position controller 283 to control the operation of the posture control device 281 such that the posture of the antenna device with respect to the reflector 285 is controlled according to the direction in which the antenna device forms a beam.

Furthermore, the control device 295 instructs the vector signal analyzer 291 to perform an operation related to the measurement of the phase and amplitude of the radio signal transmitted by the target antenna device. In response to the instruction, the vector signal analyzer 291 operates in cooperation with the LTE system simulator 293 to execute a series of processing related to the above-described measurement.

When having acquired information according to the phase and amplitude measurement results from the vector signal analyzer 291, the control device 295 associates the information with information related to the antenna device set as the measurement target at that time and information related to the posture of the antenna device (in other words, information related to the direction in which the directivity of the beam is pointed), thereby generating the above-described LUT. The details of the operation related to the series of measurements described above and the operation related to the generation of the LUT according to the result of the measurement will be described below. Additionally, the control device 295 corresponds to an example of the "information processing device" related to the generation of the LUT.

(Measurement flow)

Subsequently, a flow of a series of operations related to the measurement of the phase and amplitude of the radio signal transmitted from the antenna device for each antenna device included in the terminal device 200 will be described.

As described above, the vendor side of the terminal device can grasp the location of the antenna device on the terminal device (5G terminal) side. Therefore, for example, it is possible to perform fine-tuning of the posture of the antenna device so as to maximize the measurement value of the power of the beam formed by the antenna device by the vector signal analyzer 291.

As a specific example, in a CATR measurement system having a QZ with a diameter of 30 cm, the beam formed by the antenna device is assumed to have a broad beam width when the phase shifter is set to 0 degrees. Even in such a case, by performing the visual alignment according to the emission pattern of the antenna device and then adjusting the posture of the antenna device (in other words, the terminal device 200) based on the measurement value of the vector signal analyzer 291, it is possible to specify the position where the power of the beam is maximized. That is, the posture at this time can be determined, for example, as the reference position of the antenna device at "Phase Shifter = 0 degree".

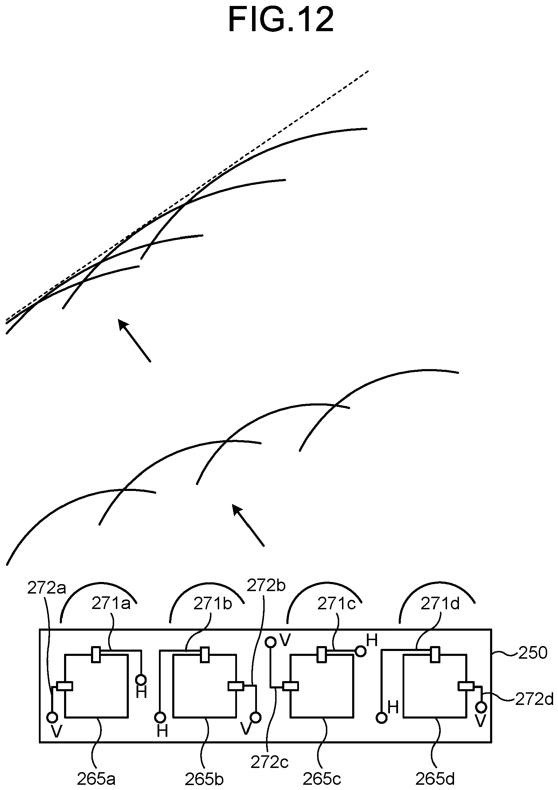

Here, an example of a configuration of the antenna device to be measured will be described with reference to FIG. 12. FIG. 12 is a diagram for describing an example of the configuration of the antenna device included in the terminal device according to the present embodiment. The antenna device 250 illustrated in FIG. 12 includes antenna elements 265a to 255d configured as a patch antenna (plane antenna). In the following description, when the antenna elements 265a to 255d are not particularly distinguished, they may be referred to as "antenna element 265". The antenna element 265 is capable of transmitting V polarized wave and H polarized wave. Furthermore, reference numerals 271a to 271d and reference numerals 272a to 272d schematically indicate wiring for transmitting an electric signal related to transmission of a radio signal to each feeding point of the antenna elements 265a to 255d.

It is difficult with the vector signal analyzer 291 to measure the absolute phase of the radio waves (radio signals) emitted by each of the antenna elements 265a to 255d. Due to such characteristics, the information processing system 10 according to an embodiment of the present disclosure sets one of the antenna elements 265a to 255d as a reference antenna element 265. In the information processing system 10, the phase and power of the radio signal measured for the reference antenna element 265 are set as reference values related to the measurement of the phase and power of the radio signal for other antenna elements 265. Under such a setting, for the other antenna elements 265, the measurement values of the phase and power are acquired as a measurement value of deviation with respect to the reference value (that is, a measurement value relative to the reference value). The method of determining the reference antenna element 265 from among the plurality of antenna elements 265 (for example, antenna elements 265a to 255d) included in the antenna device 250 is not particularly limited. The present description assumes that the antenna element 265b (hereinafter, also referred to as "Patch 2") is set as a reference. The antenna element 265 included in the reference antenna element 265b corresponds to an example of a "first antenna element". Furthermore, the information corresponding to the above reference value corresponds to an example of "first information".

First, a radio signal is transmitted from the antenna element 265b (Patch 2), and the vector signal analyzer 291 is used to measure the phase and amplitude of the V polarized wave of the radio signal. The measurement results of the phase and amplitude (power) are held as reference values. At this time, it is assumed that the settings on the CATR measurement system and the 5G (NR) BB modem side are controlled in advance such that the polarization plane of the antenna element 265 is to be used for the radiation signal of V polarized waves.

Next, a radio signal is transmitted from the antenna element 265a (hereinafter, also referred to as "Patch 1"), and the vector signal analyzer 291 is used to measure the phase and amplitude (power) deviation of the V polarized wave of the radio signal with respect to the reference value. Similarly, the antenna element 265c (hereinafter, also referred to as "Patch 3") and the antenna element 265d (hereinafter, also referred to as "Patch 4") are also used to transmit a radio signal, and the vector signal analyzer 291 is used to measure the deviation of the phase and amplitude (power) of the V polarized wave of the radio signal with respect to the reference value. Note that an antenna element 265 other than the reference antenna element 265b, such as the antenna element 265a, corresponds to an example of a "second antenna element". The information according to the measurement result of the phase and amplitude (power) deviation corresponds to an example of "second information" regarding the antenna element 265a.

When performing the above measurement for each antenna element 265, the other antenna element 265 may be disabled. That is, the above measurement may be performed for each antenna element 265 while sequentially enabling each of the antenna elements 265b, 255a, 255c, and 255d.

Next, the above measurement is performed for H polarized wave in a similar manner. Specifically, a radio signal is transmitted from the antenna element 265b, and the vector signal analyzer 291 is used to measure the phase and amplitude of the H polarized wave of the radio signal. The measurement results of the phase and amplitude (power) are held as reference values. Next, a radio signal is transmitted for each of the antenna elements 265a, 255c, and 255d, and the vector signal analyzer 291 is used to measure the phase and amplitude (power) deviation of the H polarized wave of the radio signal with respect to the reference value.

As described above, the phases and amplitudes of V polarized wave and H polarized wave are measured for the antenna elements 265a to 255d included in the target antenna device 250. With such measurement as one set, the posture of the antenna device 250 is adjusted for each measurement grid having a predetermined step size in the azimuth direction and the elevation direction, and the measurement is executed for each posture. That is, for one antenna device, the measurement results of the phases and amplitudes of V polarized wave and H polarized wave are acquired for the antenna elements 265a to 255d for each posture in the azimuth direction and the elevation direction. Furthermore, as described above, the measurement results acquired at this time include the measurement results of the phase and amplitude (power) of the V polarized wave and the H polarized wave transmitted from the reference antenna element 265b, and include the measurement results of the phase and amplitude deviations of the V polarized wave and the H polarized wave individually transmitted from the antenna elements 265a, 255c, and 255d, with respect to the results for the antenna element 265b as reference values.

Based on the measurement results obtained as described above, a LUT specific to the target antenna device 250 is generated.

Furthermore, by sequentially executing the series of measurements described above for each antenna device 250 included in the terminal device 200, it is also possible to generate a LUT specific to the antenna device 250, for each antenna device 250.

(Generation of LUT)

Subsequently, the generation of the LUT using the result of the above-described measurement will be described in detail below. The LUT generated here corresponds to an example of the control information of the present embodiment.

As described above, the antenna device 250 illustrated in FIG. 12 is capable of transmitting V polarized wave (vertically polarized wave) and H polarized wave (horizontally polarized wave), and includes four antenna elements 265. Furthermore, as in the example described with reference to FIG. 4, the antenna device 250 is composed of each TXRU (Tx & Rx chain) including a plurality of antenna elements (for example, four antenna elements).

On the other hand, as illustrated in the example of FIG. 12, due to the influence of the size restriction in the configuration and the like, a line routing (feed line) occurs in the antenna device 250 in the range up to the feeding point of each antenna element 265. Furthermore, there will be a difference in the form factor, peripheral members, materials, and the like, of the terminal device 200 depending on the position of the terminal device 200 in which the millimeter wave antenna device 250 is to be arranged.

In order to have the ability to align the spatial position of the beam (BC Capability) between the base station side and the terminal device (5G terminal) side, for example, there is a need to have a LUT specific to the terminal device that depends on the following conditions.

- Characteristics of the antenna element of the antenna device
- Number of antenna devices
- Position where the antenna device is installed
- Materials and designs applied to terminal devices

Correspondingly, by using the above-described LUT, the deviation of the phase and amplitude (power) of the radio signal due to the following factors is compensated, and the alignment of spatial position of the beam is possible as ideal BC Capability.

- Influence of line routing (feed line) on antenna devices
- Influence of antenna device installation position
- Influence of materials and designs applied to terminal devices

For example, FIG. 12 illustrates the principle of controlling the spatial position of the beam in the assumed direction (beam steering). As illustrated in FIG. 12, there is no particular need to obtain the absolute phase and amplitude (power) values of the radio signal, which is a millimeter wave transmitted from each of the four antenna elements 265, and it is possible, as illustrated in the configuration of FIG. 4, to individually control the phase and amplitude (power) values for each antenna element 265 in each TXRU (Tx & Rx chain). Therefore, when the relative phase and amplitude (power) information between the four antenna elements 265 is known, it is possible to perform compensation such that the beam formed by beamforming during beam steering will be a plane wave that is coherent in the estimated direction.

In the measurement procedure described above, the intervals of the measurement grids are determined by a trade-off between the total measurement time and the accuracy related to the formation of the beam by each antenna device provided in the terminal device (in other words, the accuracy of phase and amplitude compensation based on the LUT). As a specific example, when measuring the phase and power of a radio signal which is a millimeter wave for each antenna element included in each antenna device included in the terminal device with a measurement grid having a step size of an angle of 3 degrees, the accuracy of beam formation during beamforming improves but the measurement time increases in proportion to the number of measurement points. In contrast, when measuring the phase and power of a radio signal which is a millimeter wave for each antenna element included in each antenna device included in the terminal device with a measurement grid having a step size of an angle of 10 degrees, the accuracy of beam formation during beamforming deteriorates but the measurement time decreases together with the decrease in the number of measurement points.

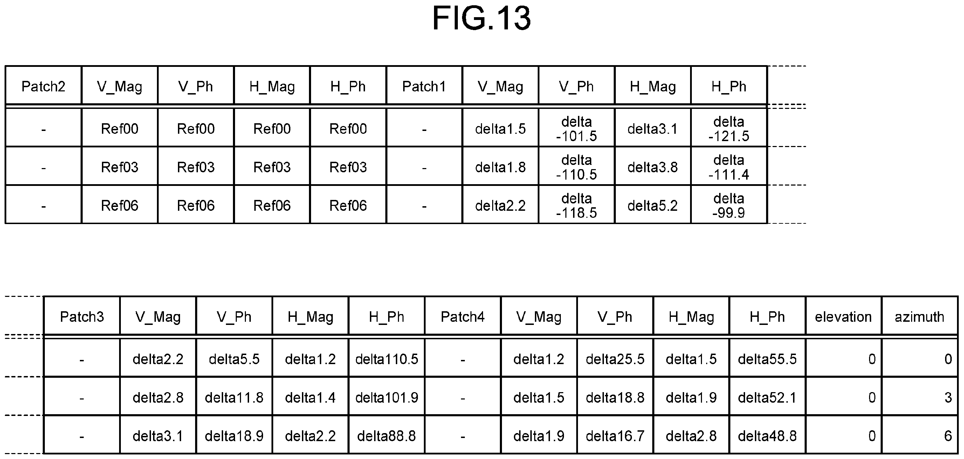

The following will describe, as an example, a case where the phase and power of a radio signal are measured for each antenna element included in each antenna device included in the terminal device with a measurement grid having a step size of an angle of 3 degrees. FIG. 13 is a diagram illustrating an example of measurement results of a phase and power of an antenna device related to generation of a LUT according to the first exemplary embodiment. In the example illustrated in FIG. 13, the measurement result of the antenna element 265b (Patch 2) among the antenna elements 265 of the antenna device 250 illustrated in FIG. 12 is set as a reference value. Furthermore, the example illustrated in FIG. 13 illustrates execution results of measurements when the posture of the antenna device 250 on the measurement grid with the step size set to an angle of 3 degrees and then the angles in the azimuth direction are set to 0 degrees, 3 degrees, and 6 degrees.

When the terminal device includes a plurality of antenna devices as in the example illustrated in FIG. 7, the above-described measurement is performed on each of the antenna devices, thereby acquiring the measurement data as illustrated in FIG. 13 for each of the antenna devices.

(Measurement of phase and amplitude)

Here, an example of a method for measuring the phase and amplitude (power) of each antenna device for acquiring the measurement data as illustrated in FIG. 13 will be described in detail below.

As described above, the information processing system according to the present disclosure sets one of the plurality of antenna elements 265 included in the antenna device 250 as the reference antenna element. Thereafter, each antenna element 265 is sequentially enabled to transmit a radio signal which is a millimeter wave, and then the phase and amplitude (power) of the radio signal are measured. At this time, based on the measurement result of the phase and amplitude (power) of the reference antenna element 265 as a reference value, the deviation of the phase and amplitude (power) of the other antenna element 265 from the reference value is measured.

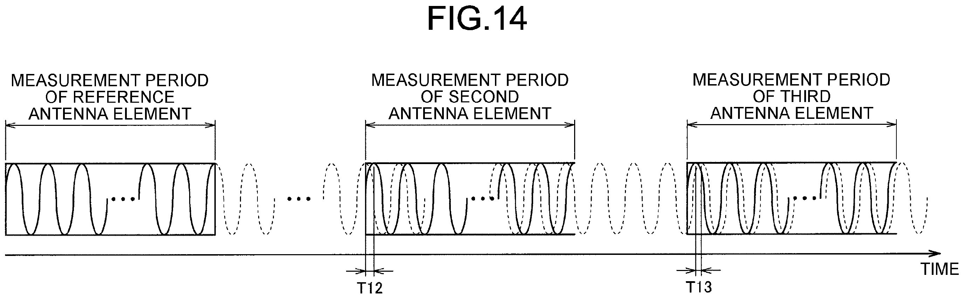

For example, FIG. 14 is a diagram for describing a method of measuring the phase of a radio signal which is a millimeter wave in the information processing system according to the present embodiment. As illustrated in FIG. 14, in the first measurement period, a radio signal which is a millimeter wave is transmitted from the reference antenna element, and the radio signal is captured in the vector signal analyzer 291.

Next, in the second measurement period, a radio signal being millimeter waves are transmitted from one of the antenna elements other than the reference antenna element (in other words, the antenna unit) (hereinafter, also referred to as "second antenna element"), and the radio signal is captured in the vector signal analyzer 291. At this time, the vector signal analyzer 291 compares the radio signal being a millimeter wave captured from the second antenna element with the radio signal being a millimeter wave captured by the reference antenna element on the time axis, thereby calculating a phase difference T12. That is, the phase difference T12 corresponds to a relative phase difference between the radio signals being millimeter waves each transmitted from the reference antenna element and the second antenna element. The calculated phase difference T12 is held as phase measurement data for the second antenna element.

Next, in the third measurement period, a radio signal being millimeter waves are transmitted from another one of the antenna elements other than the reference antenna element (in other words, the antenna unit) (hereinafter, also referred to as "third antenna element"), and the radio signal is captured in the vector signal analyzer 291. At this time, the vector signal analyzer 291 compares the radio signal being a millimeter wave captured from the third antenna element with the radio signal being a millimeter wave captured by the reference antenna element on the time axis, thereby calculating a phase difference T12. That is, the phase difference T13 corresponds to a relative phase difference between the radio signals being millimeter waves each transmitted from the reference antenna element and the third antenna element. The calculated phase difference T13 is held as phase measurement data for the third antenna element.

As described above, each antenna element (antenna unit) included in the antenna device is enabled and disabled in order, leading to acquisition of measurement data corresponding to the phase difference of the radio signal which is a millimeter wave transmitted from the antenna element.

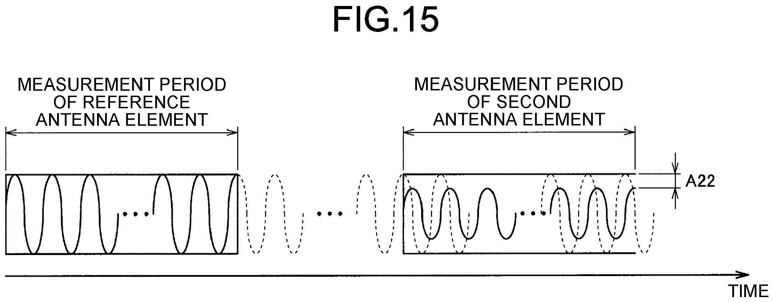

Furthermore, FIG. 15 is a diagram for describing a method of measuring the amplitude of a radio signal which is a millimeter wave in the information processing system according to the present embodiment. As illustrated in FIG. 15, in the first measurement period, a radio signal which is a millimeter wave is transmitted from the reference antenna element, and the radio signal is captured in the vector signal analyzer 291.

Next, in the second measurement period, a radio signal which is a millimeter wave is transmitted from the second antenna element, and the radio signal is captured in the vector signal analyzer 291. At this time, the vector signal analyzer 291 compares the radio signal being a millimeter wave captured from the second antenna element with the radio signal being a millimeter wave captured by the reference antenna element, thereby calculating an amplitude (power) difference A22. That is, the amplitude difference A22 corresponds to a relative amplitude difference between the radio signal being a millimeter wave transmitted from the reference antenna element and the second antenna element. The calculated amplitude difference A22 is held as phase measurement data for the second antenna element.

As described above, each antenna element included in the antenna device is sequentially enabled, leading to acquisition of the measurement data of the amplitude of the radio signal being a millimeter wave transmitted from the antenna element.

<Supplementary notes>

The information processing system according to the present embodiment has a configuration as illustrated in FIG. 11, by which there is no need to apply a configuration in which a hole is formed in the housing of the terminal device, a cable is connected to the BB modem included in the terminal device via the hole, and various signals related to the transmission of the radio signal are input from the VNA via the cable. Therefore, according to the information processing system of the present embodiment, it is possible to construct a measurement system without requiring complicated and delicate work. Furthermore, as described above, the terminal device 200 autonomously compensates for the frequency deviation by channel estimation or frequency tracking based on the reference signal transmitted from the LTE link antenna 289. Therefore, even in a situation where a frequency deviation can occur due to the influence of heat dissipation or the like under a long measurement time, the terminal device 200 will perform autonomous self-compensation for the frequency deviation.

In addition, the configuration in which the terminal device holds the above-described LUT results in the FR2 system operation having the capability (BC Capability) to mutually align the spatial positions of the beams between the base station side and the UE (5G terminal) side, making it possible to implement beamforming more suitably.

Meanwhile, regarding a method for measuring and evaluating the conformance of FR2 in 3GPP, it has been agreed in 3GPP RAN5 that the battery-powered DUT is to be tested only with the nominal voltage without a power cable. More specifically, measurement is to be performed using a single battery, that is, with no application of the extreme voltage, no application of a "dummy battery" or "charging with USB cable". The reason for this is that the influence of the connection cable due to the application of "dummy battery" and "charging with USB cable" can influence the measurement result of FR2.

In view of such a situation, the information processing system according to the present embodiment has a capability, regarding implementation of the measurement related to the above generation of the LUT, of selectively switching the method of controlling the measurement device (for example, vector signal analyzer 291) side and the terminal device (5G terminal) side depending on the situation. An example of a method of controlling the measurement device side and the UE (5G terminal) side will be described below as Example 1 and Example 2.

(Example 1)

When generating a LUT for each antenna device included in the terminal device (5G terminal), both the measurement device and the terminal device may be controlled by using a dedicated test SIM.

(Example 2)

When generating a LUT for each antenna device included in the terminal device (5G terminal), the control software is run on both the measurement device and the terminal device. At this time, on the measurement device side, the software may be controlled from an external device (for example, a PC or the like) via IEEE488 or Ethernet (registered trademark). Furthermore, the control of the terminal device side may be performed from the external device via a cable connection using a USB.

For example, as agreed in 3GPP RAN5, application of the above (Example 1) is recommended when there is a concern that the connection cable due to the application of "dummy battery" or "charging with USB cable" will influence the measurement result of FR2, for example.

In contrast, in a case where the measurement system can be set to avoid the influence of the USB cable on the terminal device (5G terminal) side on the measurement result of FR2, application of the above (Example 2) will make it possible to supply power to the terminal device via the USB cable. That is, in this case, even when the measurement time is prolonged, it is possible to prevent an occurrence of exhaustion of power needed for operation of the terminal device.

Needless to say, the above is only an example, and the method is not particularly limited as long as it is possible to control the measurement device side and the terminal device (5G terminal) side in time synchronization.

(Action/effects)

As described above, with the information processing system according to an embodiment of the present disclosure, even in a situation where a frequency deviation can occur due to the influence of heat dissipation or the like along with a long measurement time, the frequency deviation is autonomously self-compensated by the terminal device 200. From such characteristics, it is possible to prevent the occurrence of measurement error due to environmental factors such as heat dissipation when acquiring measurement data related to the generation of the LUT.

In addition, the information processing system according to the present embodiment has a configuration by which there is no need to apply a configuration in which a hole is formed in the housing of the terminal device, a cable is connected to the BB modem included in the terminal device via the hole, and various signals related to the transmission of the radio signal are input from the VNA via the cable. Due to such characteristics, it is possible to construct a measurement system without requiring complicated and delicate work.

<<4. Generation of control information (second exemplary embodiment)>>

Next, another example (second exemplary embodiment) of the control information generation method will be described.

<4-1. Problems in creating control information>

Before describing the method of generating control information, the problems related to the present exemplary embodiment will be described. Specifically, problems in creating a LUT used by a communication device (for example, the 5G terminal such as the terminal device 200) to perform millimeter wave operation will be described.

(Standards for radio wave protection)

The effects of radio waves on the human body have long been a concern. For frequencies of 6 GHz or less, an upper limit, which is the standard for radio wave protection, is defined based on Specific Absorption Rate (SAR: W/kg).

The upper limit to be a typical standard value can be broadly divided into the following two types.

- Upper limit defined by ICNIRP: 10g Average SAR 2.0W/kg
- Upper limit set by FCC: 1g Average SAR 1.6W/kg

Here, ICNIRP stands for International Commission on Non-Ionizing Radiation Protection, and FCC stands for Federal Communications Commission. Regarding the above-described radio wave protection, the upper limit and the measurement method as standards are different in each country in the world.

Similarly, there are concerns about the effects of radio waves on the human body even at frequencies of 6 GHz or more. At frequencies of 6 GHz or more, unlike frequencies of 6 GHz or less, the upper limit value to be the standard for radio wave protection is defined based on incident power density (PD:W/m$^2$).

The millimeter wave band (FR2, for example) is assumed as part of the frequency band of 6 GHz or more. Currently, the FCC in North America, the EU in Europe, Japan, etc. have newly defined upper limit values as standards for the services of 5G NR millimeter wave commercial terminals. In the case of millimeter waves as well, the upper limit value and measurement method as standards for radio wave protection differ from country to country.

For example, according to ICNIRP, 6-minute "temporal-averaging" is to be used up to 10 GHz. According to FCC, 4-second "temporal-averaging" is to be used for the range of 24GHz < f <42GHz. In addition, according to the Japanese Radio Law, 6-minute "temporal-averaging" is to be used for the range of 6GHz < f <30GHz. In this manner, the upper limit and the measurement method to be the standards for radio wave protection are different from country to country.

In 3GPP, the Rel-15 version of TS38.101-2 has been released as the core specifications of RF for millimeter wave operations. Here, the core specifications regarding Up Link MIMO (UL MIMO) in millimeter waves in the smartphone type (power class 3 (PC3)) are illustrated.

When a UE vendor commercializes a smartphone type (power class 3 (PC3)) 5G NR terminal that can support UL MIMO in millimeter waves, it is required to comply with national or regional standards (upper limit and measurement method) specified using incident power density (PD: W/m$^2$).

(Problems in communication using plurality of polarized waves)

In recent years, communication using a plurality of polarized waves has attracted attention. Examples of known communication using a plurality of polarized waves include communication using a dual polarized antenna (for example, dual polarized MIMO).

In 3GPP, the technical report (TR38.810) summarizing the measurement method of millimeter wave RF by Over The Air (OTA) is updated and specified at appropriate timings. TR38.810 describes that the total UL signal power is measured by sequentially combining the signals received in single polarization without simultaneously measuring the power obtained by the two orthogonally polarized antennas. With this measurement method, it is difficult to correctly perform simultaneous measurement of the characteristics of UL MIMO in millimeter wave operation.

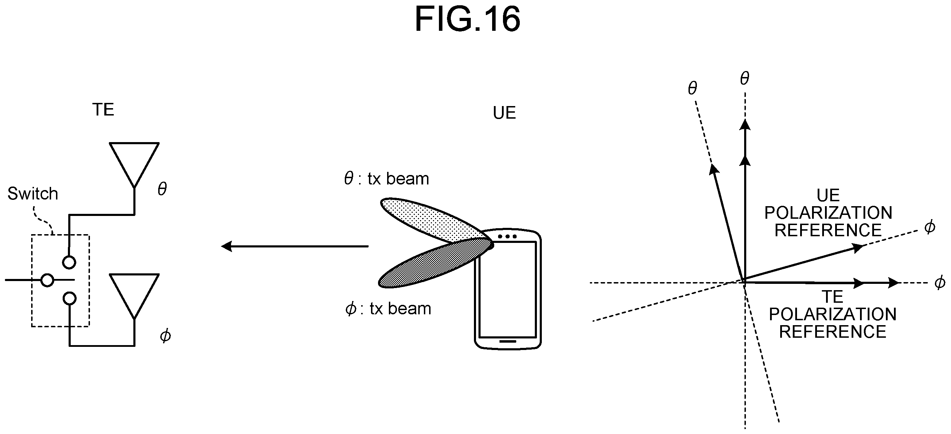

One of the major factors is the existence of a mismatch in the polarization reference between the User Equipment (UE) side and the Test Environment (TE) side. FIG. 16 is a diagram illustrating an image of the influence of the polarization mismatch on the transmission on the UE side. In the example of FIG. 16, the TE side performs measurement while switching between θ (here, V polarized wave) and ϕ (here, H polarized wave). Even when the DL signal on the TE side has orthogonally polarized waves properly at θ(V) and ϕ(H), there is a possibility that the UL signal on the UE side cannot generate orthogonally polarized waves properly at θ(V) and ϕ(H).

In this case, even when Beam Correspondence (BC) is correctly obtained on the Base Station (BS) side and UE side during UL MIMO, the ideal polarization gain cannot be obtained, leading to deterioration of actual MIMO throughput.

As described above, when a UE vendor commercializes a 5G NR terminal that supports UL MIMO in millimeter waves, it needs to comply with the criteria (upper limit and measurement method) for each country or region specified by using PD (incident power density: W/m$^2$).

However, when the UL signal generated by the UE side is not formed into a beam with polarized waves orthogonally polarized correctly with respect to θ(V) and ϕ(H), the above-described mismatch in polarization reference would lead to a result in which the PD measurement result for the beam having one dual polarized wave (V & H) in the spatially same direction varies every measurement. In addition, this also causes the result of large variation in individual differences in the measurement result.

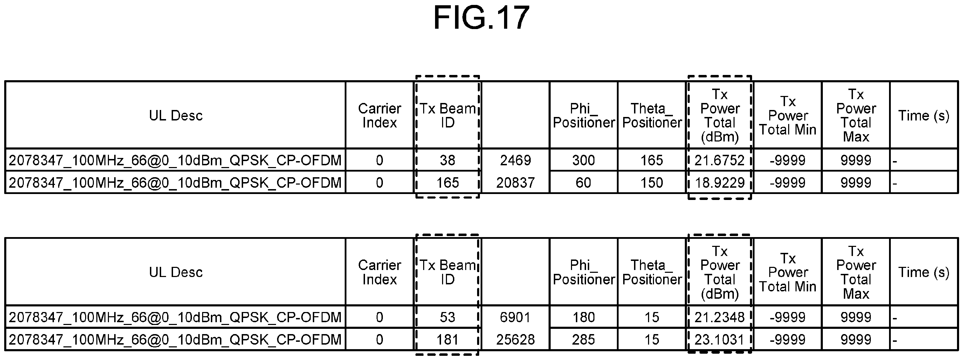

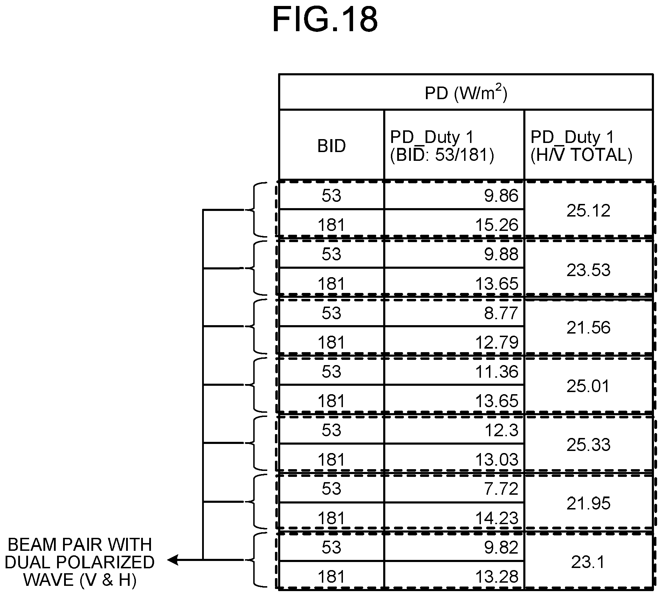

FIGS. 17 and 18 are diagrams each illustrating variations in the PD measurement results due to mismatch of the polarization reference. FIG. 17 is an example illustrating a case where mismatch of polarization reference has a result that the maximum EIRP values of a pair of beam IDs having one dual polarized wave (V & H) are different values. In addition, FIG. 18 is a diagram illustrating a case where the PD measurement results vary when a pair of beam IDs with one dual polarized wave (V & H) is not correctly generated as orthogonally polarized waves due to the variation difference of EIRP.

As illustrated in FIGS. 17 and 18, PD measurement results vary due to the mismatch of polarization reference. The variation in the PD measurement result causes deterioration of communication performance of the communication device controlled by using the PD measurement result. For example, it results in degradation of MIMO throughput.

Therefore, the second exemplary embodiment proposes a technique for solving the problem that the communication device cannot generate a beam having orthogonally polarized waves correctly for θ(V) and ϕ(H). More specifically, the second exemplary embodiment proposes a method of creating a look-up table (LUT) that can solve the above problems and that can comply with the regulations of radio wave protection for millimeter waves (Maximal Permissible Exposure (MPE)).

For example, an information processing device (for example, the control device 295) generates a LUT so that the communication device can have orthogonally polarized waves correctly for θ(V) and ϕ(H). This LUT corresponds to the control information of the present embodiment. The communication device uses this LUT to output radio waves. For example, a communication device uses this LUT to perform UL MIMO using millimeter waves.

This makes it possible for the communication device to compensate for the deviation of the phase and amplitude (power) of the radio signal due to the following factors. As a result, it is possible to spatially align the beam according to the ideal BC Capability.

- Influence of line routing (feed line) on antenna devices
- Influence of antenna device installation position
- Influence of materials and designs applied to terminal devices

As a result, the communication device can achieve high communication performance (for example, high MIMO throughput).

<4-2. Method of generating control information>

Hereinafter, the method of generating control information in the second exemplary embodiment will be specifically described.

The system configuration and equipment configuration of the second exemplary embodiment are similar to those of the first exemplary embodiment. For example, the configuration of the measurement system of the second exemplary embodiment is similar to the configuration of the measurement system (information processing system 10) of the first exemplary embodiment. Also in the second exemplary embodiment, the information processing device that generates the control information is the control device 295, for example. Needless to say, the information processing device that generates control information is not limited to the control device 295.

Similarly to the first exemplary embodiment, measurement performed by the information processing device of the second exemplary embodiment also sets the output of one antenna element out of a plurality of antenna elements as a reference value and measures outputs of the remaining antenna elements using this reference value. That is, the information processing device generates control information based on information indicating a measurement result of the radio signal transmitted from a first antenna element out of the plurality of antenna elements, and based on information indicating a relative difference between a measurement result of the radio signal transmitted from the first antenna element out of the plurality of antenna elements included in the antenna device and the radio signal transmitted from a second antenna element different from the first antenna element.

For example, suppose the antenna device has four patch antenna elements. At this time, the information processing device measures deviations in phase and/or amplitude (power) between the output (RF sine wave (continuous wave)) of one patch antenna element and the output (RF sine wave (continuous wave)) of each of the other three remaining patch antenna elements. This measurement may be performed by information processing using software. For example, the information processing device may calculate a data set to be a measurement result by performing a calculation based on the captured signal using software specialized in signal processing.

In the second exemplary embodiment, unlike the first exemplary embodiment, the information processing device also measures (calculates) the relative deviations in phase and amplitude (power) for $\theta$(V) and $\phi$(H) of a reference antenna element (for example, a patch antenna element to be measured first). That is, in the second exemplary embodiment, the information indicating the measurement result of the radio signal transmitted from the first antenna element includes: first information based on a measurement result of a first polarized wave (for example, V polarized wave) transmitted from the first antenna element; and second information indicating the relative difference between the first polarized wave (for example, V polarized wave) transmitted from the first antenna element, and a second polarized wave (for example, H polarized wave) transmitted from the first antenna element.

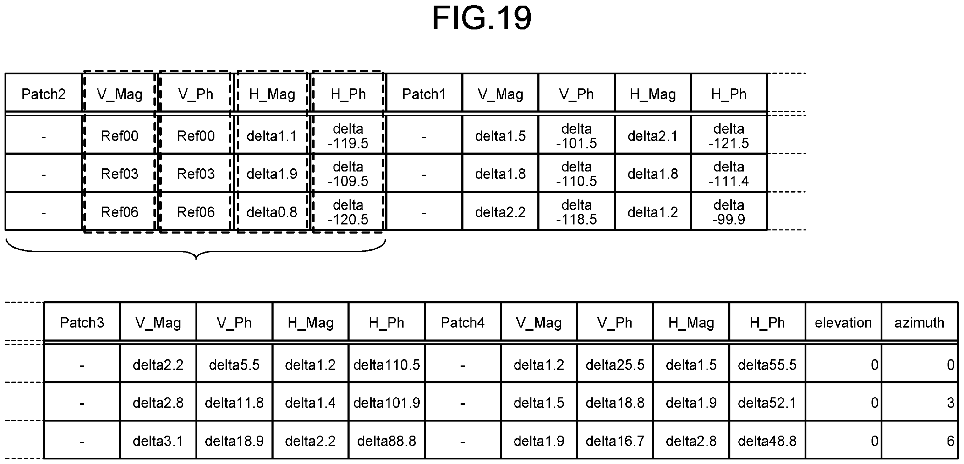

FIG. 19 is a diagram illustrating an example of measurement results of a phase and power of an antenna device related to generation of a LUT according to the second exemplary embodiment. Similarly to the first exemplary embodiment, the reference antenna element in the example of FIG. 19 is Patch 2 (hereinafter referred to as the first antenna element). As can be seen by comparing the measurement results of the second exemplary embodiment illustrated in FIG. 19 with the measurement results of the first exemplary embodiment illustrated in FIG. 13, the phase and amplitude (power) of the H polarized wave in the first antenna element (Patch 2) in the second exemplary embodiment correspond to deviation information based on the phase and amplitude (power) of the V polarized wave in the first antenna element (Patch 2).

That is, the measurement information used by the information processing device to generate the control information (LUT) includes: information (first information) based on the measurement result of the phase and amplitude of the W polarized wave transmitted from the first antenna element; information (second information) indicating the relative difference between the phase and amplitude of the V polarized wave transmitted from the first antenna element and the phase and amplitude of the H polarized wave transmitted from the first antenna element; and information (third information) indicating the relative difference between the phase and amplitude of the radio signals (V polarized wave and H polarized wave) transmitted from the first antenna element and the phase and amplitude of the radio signals (V polarized wave and H polarized wave) transmitted from the second antenna element (for example, Patch 1, 3, or 4). At this time, the third information may include information indicating the relative difference between the phase and amplitude of the V polarized wave and the H polarized wave transmitted from the first antenna element and the phase and amplitude of the V polarized wave and the H polarized wave transmitted from the second antenna element.

As illustrated in FIG. 16, it is assumed that the information processing device (TE side) measures by switching $\theta$(V) and $\phi$(H). Here, $\theta$(V) and $\phi$(H) are a pair of dual polarized beams spatially oriented in the same direction. As described with reference to FIG. 19, the information processing device also measures (calculates) the deviation of relative phase and amplitude (power) in $\theta$(V) and $\phi$(H) of the reference antenna element. Since it is expected that $\theta$(V) and $\phi$(H) on the information processing device side (TE side) are polarized waves being exactly orthogonal to each other, the measurement values of the relative phase and amplitude (power) of $\phi$(H) based on the $\theta$(V) phase and amplitude (power) are expected to be the correct phase and amplitude (power) values.

By controlling the antenna device using the control information (LUT) generated based on such accurate measurement information, the communication device can generate coherent beams in which the phase difference of $\phi$(H) is corrected exactly to 90 degrees, and/or the amplitude (power) of $\phi$(H) is corrected to be equal to the amplitude (power) of $\theta$(V). This also improves the variation in PD measurement results every measurement.

<4-3. Execution of power backoff>

(Standards for radio wave protection)

Meanwhile, as described above, regarding radio wave protection in the frequency band of 6 GHz or above (for example, millimeter wave band), the upper limit as a reference is defined by incident power density (PD: W/m$^2$) in each

country in the world.

It can be assumed that the terminal device (UE) supports not only radios using a frequency band of 6 GHz or more but also radios using a frequency band of 6 GHz or less. It can also be assumed that the terminal device (UE) will support a plurality of radios with different standards such as 3G, 4G, 5G, Wifi, and Bluetooth (registered trademark; BT). In this case, it is necessary to evaluate the RF exposure required for all radios installed on the UE side. As illustrated below, RF exposure is evaluated by Specific Absorption Rate (SAR) at frequency 6 GHz or less, and evaluated by incident power density (PD) at the frequency higher than 6 GHz.

- ≤ 6GHz: 3G, 4G, 5G, Wifi and BT
- > 6GHz: 5G NR millimeter wave (28 GHz, 39 GHz, etc.)

In addition, a standard upper limit is also defined for radio wave protection when a plurality of radios (for example, radios having different standards) installed on a UE is simultaneously transmitted. Examples of simultaneous transmission include, for example, simultaneous transmission of anchor LTE and 5G in NSA of 5G NR, interband carrier aggregation (CA) between FR1 and FR2 in 5G, or simultaneous transmission of cellular radio communication such as LTE or 5G and non-cellular radio communication such as Wifi or Bluetooth (registered trademark; BT).

Regarding radio wave protection at the time of simultaneous transmission of these radio communications, there is a need to consider the upper limit of RF exposure in the design as illustrated below.

- 3G + 4G + 5G NR (≤ 6GHz) + Wifi + BT +5G NR (> 6GHz)
- SAR (≤ 6GHz) + PD (> 6GHz)

The upper limit of RF exposure is expressed by the following equation (2).

$$\sum_{i=100kH_z}^{6GH_z} \frac{SAR_i}{SAR_{limit}} + \sum_{i>6GH_z}^{300GH_z} \frac{PD_i}{PD_{limit}} \leq 1 \qquad (2)$$

In equation (2), $SAR_i$ is the SAR caused by exposure at frequency i. $SAR_{limit}$ indicates a SAR limit. $PD_{limit}$ is the limit of power density. $PD_i$ is the power density at frequency i.

(Basic operation related to radio wave protection)

On the other hand, regarding radio wave protection in millimeter wave operation, there are some items agreed in RAN4 of 3GPP. As described above, in order to perform rapid and stable communication with the base station (gNB) side in the millimeter wave band for the UE (5G terminal) side performing millimeter wave operation, achieving a capability of beam correspondence (BC) which is a capability of aligning spatial position of the beams will be a very important characteristic and function.

However, from the viewpoint of radio wave protection described above, it might be necessary to decrease the transmission power to meet the PD limit regarding the beam between the base station (gNB) side and the UE (5G terminal) side where BC is maintained in stable communication in the "Connected state". In this case, a sudden decrease in transmission power may cause a beam failure between the base station (gNB) side and the UE (5G terminal) side. In this case, when beam recovery is not possible, the link between the base station (gNB) side and the UE (5G terminal) side may be disconnected due to a Radio Link Failure (RLF). Furthermore, in order to satisfy the radio wave protection in millimeter wave operation, there is a possibility that the area at the time of initial access and the coverage at the time of communication will be reduced.

From this point of view, in 3GPP RAN4, an agreement has been reached to maintain the link and coverage between the base station (gNB) side and the UE (5G terminal) side for radio wave protection in millimeter wave operation. More specifically, in RAN4 #91, it is permitted to make "maxUplinkDutyCycle-FR2" an option as the capability on the UE (5G terminal) side for radio wave protection in millimeter wave (FR2) operation. Items of agreement is summarized as the following (1) to (5).

(1) The value of the "dutycycle" option is to be {15%, 20%, 25%, 30%, 40%, 50%, 60%, 70%, 80%, 90%, 100%}.
(2) The evaluation period of "maxUplinkDutyCycle-FR2" is 1 second.
(3) When Uplink Duty Cycle in the above evaluation period is larger than "maxUplinkDutyCycle-FR2", the UE side can apply P-MPR$_f$ according to UL scheduling.
(4) "maxUplinkDutyCycle-FR2" shall be applicable to all power classes (PC) of FR2.

(5) The capability of "maxUplinkDutyCycle-FR2" is optional.

In the following description, the Power Management Maximum Power Reduction (P-MPR) illustrated in (3) above may be referred to as power backoff.

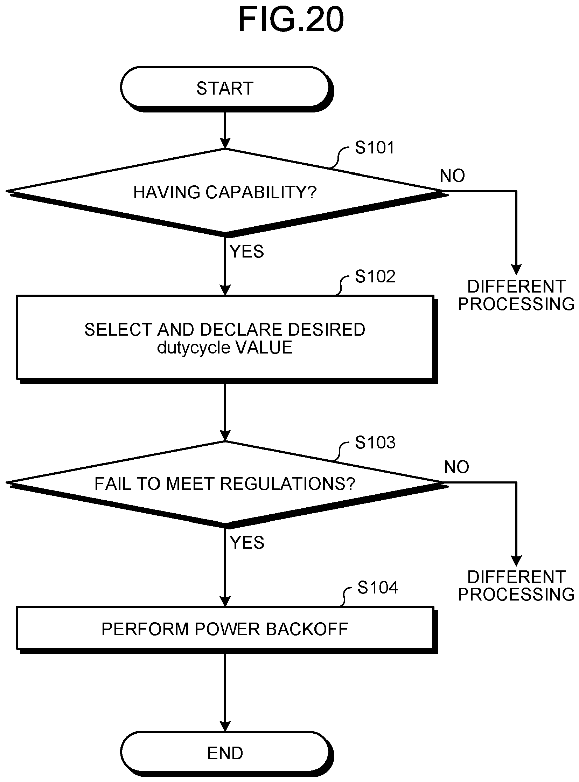

FIG. 20 is a flowchart illustrating a basic operation of a terminal device related to radio wave protection. Specifically, FIG. 20 is a flowchart illustrating an operation when the above items (items of agreement regarding PD of 3GPP) are applied to a terminal device (UE). The following operations are executed, for example, when the terminal device 200 communicates with the base station device 100 using millimeter waves. Hereinafter, the operation of the terminal device 200 will be described with reference to FIG. 20.

First, the terminal device 200 determines whether it has the capability of "maxUplinkDutyCycle-FR2" (step S101). When not having the ability of "maxUplinkDutyCycle-FR2" (step 101: No), the processing of step S102 and subsequent steps is not executed, and different processing will be executed.

When having the capability of "maxUplinkDutyCycle-FR2" (step 101: Yes), the terminal device 200 selects a desired duty cycle (dutycycle) value from among {15%, 20%, 25%, 30%, 40%, 50%, 60%, 70%, 80%, 90%, 100%} and make a declaration toward the base station device 100, for example (step S102).

The terminal device 200 determines whether the percentage (%) value of "maxUplinkDutyCycle-FR2" actually allocated from the base station device 100 as resource allocation is larger than the desired percentage (%) value in the evaluation period of 1 second. When the value is larger than the desired percentage (%) value, the terminal device 200 determines whether this percentage (%) fails to satisfy the PD regulation (step S103). When the percentage (%) value allocated as resource allocation is the desired percentage (%) value or below, or when the percentage (%) value allocated as resource allocation does not fail to meet the PD regulation (step S103: No), the terminal device 200 does not execute the processing of step S104 and subsequent steps, and executes different processing.

When the percentage (%) value allocated as resource allocation fails to meet the PD regulation (step S103: Yes), the terminal device 200 performs P-MPR (power backoff) so as to comply with the UL schedule of the base station device 100 and to comply with the PD regulation (step S104).

(Control example 1 using detection result of sensor)

As described above, it is necessary to evaluate RF exposure on all radios installed on the UE side. In this case, evaluation by SAR applies for the frequency 6 GHz or less, and evaluation by PD applies for the frequency higher than 6 GHz.

As described above, the SAR characteristics of the radio unit (for example, the communication unit 210) that can be transmitted simultaneously is to be grasped by actually measuring the SAR in each band at the development stage of the terminal device (UE). When it is necessary to perform power backoff in order to satisfy the calculation formula of radio wave protection at the time of simultaneous transmission indicated in the above equation (2), the terminal device refers to the LUT created based on the SAR characteristics. At this time, the LUT referred to by the terminal device is to be held in the storage unit (for example, the storage unit 220) in advance by the terminal device. This LUT is a table on which required "power backoff values" for each band are written. With reference to this LUT, the terminal device performs the optimum "power backoff" that can meet the SAR limit value stipulated by the regulations of each country.

Examples of assumable methods of actually activating the above "power backoff" on the terminal device (UE) side include a method using case classification into a case involving talking (for example, Voice over LTE (VoLTE) and a case not involving talking (for example, data communication). The terminal device (UE) uses various sensors such as a proximity sensor and an accelerometer to perform case classification into a case involving talking or a case not involving talking. Based on the result of the case, the terminal device (UE) selects a power backoff table to be actually used (LUT in which the power backoff value is written).

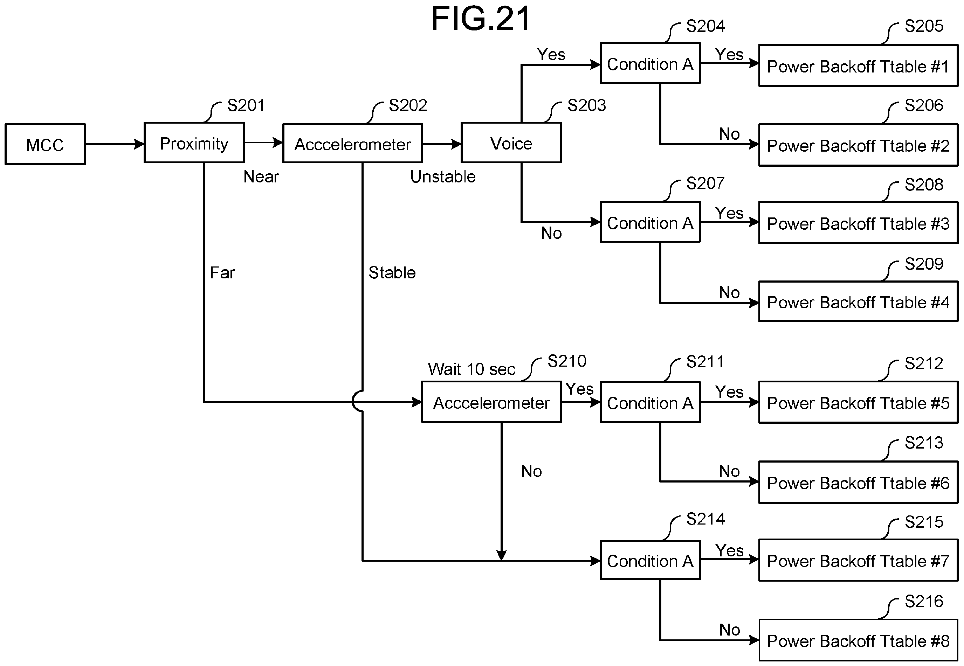

FIG. 21 is a flowchart illustrating the selection operation of the power backoff table. In the example of FIG. 21, the terminal device 200 includes a proximity sensor and an accelerometer. When triggering is performed, the terminal device 200 performs case classification into the case involving talking and the case not involving talking based on the detection results of these sensors. Subsequently, the terminal device 200 selects the power backoff table according to the result of the case classification. The processing illustrated in FIG. 21 may differ depending on the country or region. In the following description, the processing illustrated in FIG. 21 is assumed to be different for each Mobile Country Code (MCC) .

First, the terminal device 200 determines whether an object is near the sensor or far from the sensor based on the detection result of the proximity sensor (step S201). When the object is near the sensor (step S201: Yes), the terminal device 200 determines whether the state of the terminal device 200 is stable or unstable based on the detection result of the accelerometer (step S202). When the state is stable (step S202: Stable), the terminal device 200 proceeds to the processing of step S214.

When the state is unstable (step S202: Unstable), the terminal device 200 determines whether there is a voice input (step S203). When there is a voice input (step S203: Yes), the terminal device 200 determines whether its own state is condition A (step S204). In the case of condition A (step S204: Yes), the terminal device 200 selects power backoff table #1 (step S205). In contrast, when the condition is not A (step S204: No), the terminal device 200 selects power backoff table #2 (step S206).

Returning to step S203, when there is no voice input (step S203: No), the terminal device 200 determines whether its own state is condition A (step S207). In the case of condition A (step S207: Yes), the terminal device 200 selects power backoff table #3 (step S208). In contrast, when the condition is not A (step S207: No), the terminal device 200 selects power backoff table #4 (step S209).

Returning to step S201, when the object is far away (step S201: No), the terminal device 200 determines whether the detection result of the accelerometer meets a predetermined criterion after waiting for 10 seconds (step 210). For example, the terminal device 200 determines whether the state of the terminal device 200 is stable or unstable.

When the predetermined criterion is satisfied (step S210: Yes), the terminal device 200 determines whether its own state is condition A (step S211). In the case of condition A (step S211: Yes), the terminal device 200 selects power backoff table #5 (step S212). In contrast, when the condition is not A (step S211: No), the terminal device 200 selects power backoff table #6 (step S213).

Returning to step S210 or step S202, when the predetermined criterion is not satisfied (step S210: No) or when the state is stable (step S202: Unstable), the terminal device 200 determines whether its own state is condition A (step S214). In the case of condition A (step S214: Yes), the terminal device 200 selects power backoff table #7 (step S214). In contrast, when the condition is not A (step S214: No), the terminal device 200 selects power backoff table #8 (step S209).

(Configuration example of LUT considering power backoff)

As described above, when the frequency is higher than 6 GHz, evaluation by PD will be performed. In addition, for radio wave protection in millimeter wave operation, the flow as illustrated in FIG. 20 is agreed in RAN4 of 3GPP.

Regarding the SAR characteristics in the radio unit where there is a possibility of simultaneous transmission, it is possible to perform optimum "power backoff" by using the flow illustrated in FIG. 21, for example.

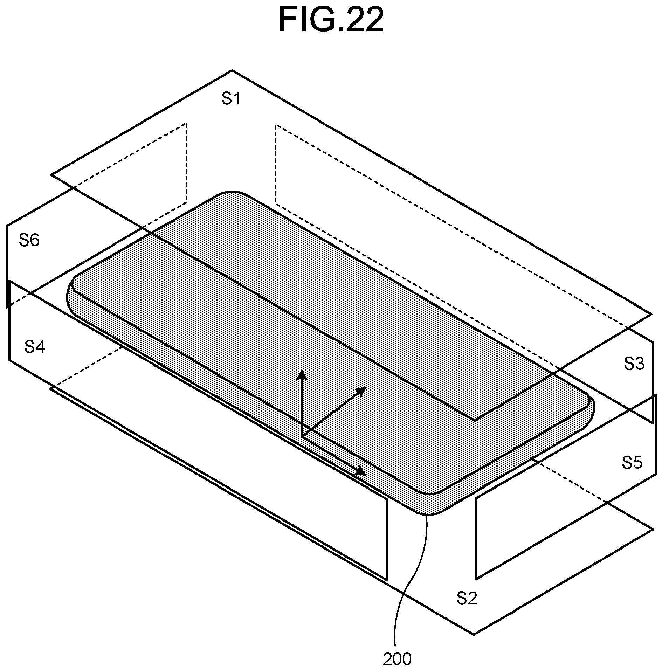

Even for radio wave protection in millimeter wave operation, the PD characteristics of the radio unit (for example, communication unit 210) that has a possibility of simultaneous transmission need to satisfy the Maximal Permissible Exposure (MPE) stipulated by the regulations of each country. FIG. 22 is a diagram for describing a method of measuring PD characteristics. The PD characteristics, in particular, depends on the arrangement of the millimeter wave antenna module on the UE side. Therefore, in order to comply with the FCC which is most demanding, there is a need, as illustrated in FIG. 22, to perform simulation and measurement of the PD characteristics at each band on each of six surfaces on the UE side and to specify the beam ID with the highest PD characteristics.

After specifying the beam ID with the highest PD characteristics in each band on each of the above six surfaces on the UE side, sequential check of whether the MPE value is satisfied is performed by comparison with the calculation formula in the above equation (2). At this time, PD measurement is performed with the setting of the "dutycycle" 100% in "maxUplinkDutyCycle-FR2". Subsequently, the information processing device calculates the PD value at individual option values {15%, 20%, 25%, 30%, 40%, 50%, 60%, 70%, 80%, 90%, 100%} with a margin (margin in specification). When the PD value at each of 15%, 20%, 25%, 30%, 40%, 50%, 60%, 70%, 80%, 90%, and 100% is known, it will be known which "dutycycle" percentage (%) is to be used for application of P-MPR. Note that "P-MPR" has the same meaning as "power backoff".

In other words, the terminal device 200 internally holds the LUT in which the P-MPR necessary to satisfy the MPE value is written for each of option values 15%, 20%, 25%, 30%, 40%, 50%, 60%, 70%, 80%, 90%, and 100%. The LUT may be created by the control device 295. The terminal device 200 refers to the LUT with the procedure according to the flowchart illustrated in FIG. 20, making it possible to satisfy the MPE limits stipulated by the regulations of each country.

In conventional LTE, triggering is performed to actually activate "power backoff" based on flow control based on a proximity sensor and an accelerometer. However, in the case of a 5G terminal (UE) with millimeter wave operation, there is a need to perform flow control using a sensor capable of detecting obstacles in the spatial direction of all beams emitted from the millimeter wave antenna module mounted on the UE. When triggering is performed based on the flow control, it is possible to select the optimum LUT that can satisfy the MPE.

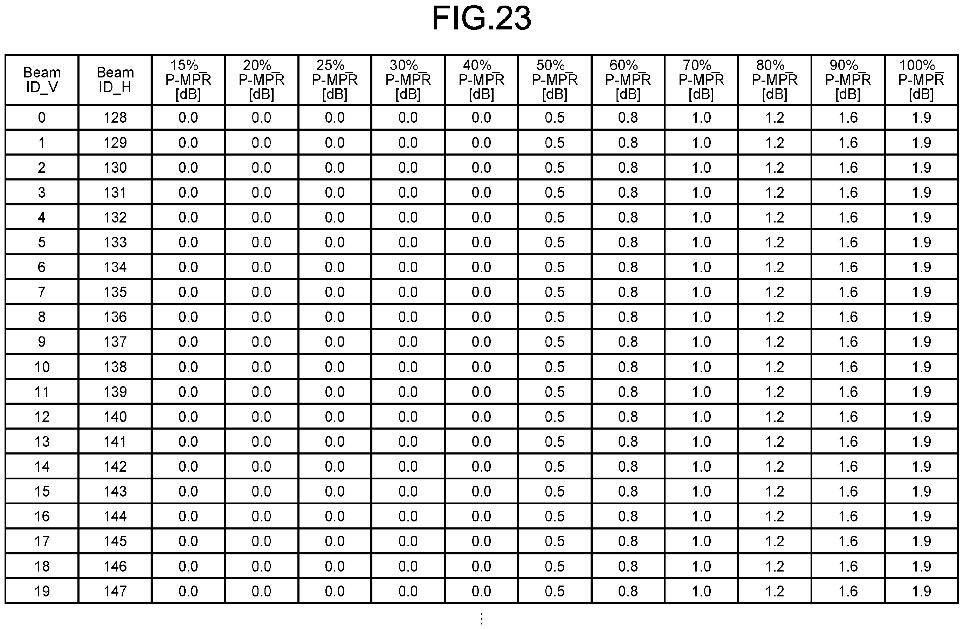

FIG. 23 is a diagram illustrating an example of a LUT in which a power backoff value is written. The LUT illustrated in FIG. 23 is a data table in the form of a flow (FIG. 20) for PD agreed by 3GPP. In the LUT illustrated in FIG. 23, the calculated P-MPR is written in each percentage (%) of the "dutycycle". More specifically, the LUT illustrated in FIG. 23 is an example of LUT in which each of P-MPR values required to satisfy the MPE for each dutycycle is written for all beams in each band emitted on all six surfaces on the UE side.

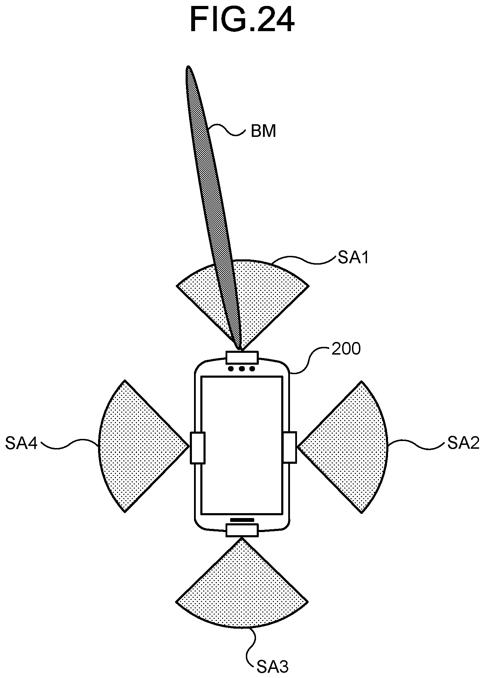

FIG. 24 is a diagram illustrating a state in which sensors are arranged in the terminal device 200. FIG. 24 illustrates an image of sensors capable of detecting obstacles in the spatial direction of all emitted beams. In FIG. 24, SA1 to SA4 illustrate ranges of sensors capable of detecting obstacles in the spatial direction of all beams emitted from the millimeter wave antenna module. Furthermore, in FIG. 24, BM illustrates a transmission/reception beam for communication having proper Beam Correspondence (BC) on both the BS side and the UE side.

The sensor included in the communication device (for example, the terminal device 200) is not limited to a specific sensor. For example, the sensor included in the communication device may be an obstacle sensor that can be realized in the future. Furthermore, the communication device may include a plurality of sensors. At this time, the combination of sensors included in the communication device is not limited to a specific combination. For example, the combination of sensors included in the communication device may be a combination of a radar and a camera.

(Control example 2 using detection result of sensor)

As described above, in the case of a terminal device (5G terminal) that performs millimeter wave operation, there is a need to perform flow control using a sensor capable of detecting obstacles in the spatial direction of all beams emitted from the millimeter wave antenna module mounted on the device.

When triggering is performed based on the flow control, the terminal device (UE) can select the optimum LUT so as to satisfy the MPE stipulated by the regulations of each country described above.

Here, it is assumed that the terminal device (UE) has the capability of "maxUplinkDutyCycle-FR2". Conversely, a terminal device (UE) without the "maxUplinkDutyCycle-FR2" capability would not be able to meet the MPE and give up millimeter wave operation. In this case, the terminal device (UE) is more likely to perform Hand Over (HO) to 5G of FR1 or fall back to LTE.

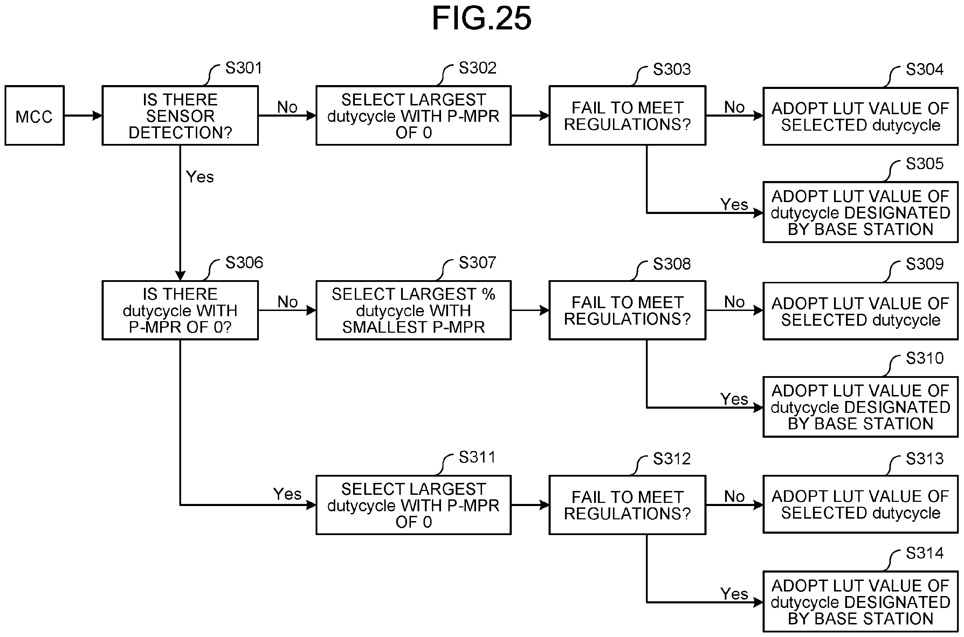

FIG. 25 is a flowchart illustrating a control example using detection results of a sensor. More specifically, FIG. 25 is a flowchart illustrating an example of control using a sensor capable of detecting obstacles in the spatial direction of all emitted beams. The processing illustrated in FIG. 25 may differ depending on the country or region. In the following description, the processing illustrated in FIG. 25 is assumed to be different for each Mobile Country Code (MCC).

First, the terminal device 200 determines whether there is detection of a sensor that detects an emitted beam, which is arranged in the vicinity of each antenna module (step S301). When there is no detection of the sensor (step S302), the terminal device 200 selects the largest dutycycle with a P-MPR of 0 dB in a LUT (for example, the LUT illustrated in FIG. 23) in which the value of each P-MPR needed to satisfy the MPE is written for each dutycycle (step S302).

The terminal device 200 determines whether the percentage (%) value of "maxUplinkDutyCycle-FR2" actually allocated from the base station device 100 as resource allocation is larger than the percentage (%) value of the dutycycle selected in step S302, in the evaluation period of 1 second. When the value is larger than the selected percentage (%) value, the terminal device 200 determines whether this percentage (%) fails to satisfy the PD regulation (step 303).

When the percentage (%) value of resource allocation is the selected percentage (%) value or below, or when the percentage (%) value of resource allocation does not fail to meet the PD regulation (step S303: No), the terminal device 200 adopts the LUT value at the percentage (%) value selected in step S302 (step S304). In contrast, when the percentage (%) value allocated as resource allocation fails to meet the PD regulation (step S303: Yes), the terminal device 200 adopts a LUT value (including P-MPR) at the percentage (%) value of the dutycycle corresponding to the percentage (%) value of "maxUplinkDutyCycle-FR2" allocated from the base station device 100 as resource allocation (step S305).

Returning to step S301, determination is made as to whether the dutycycle with a P-MPR of 0 dB exists in a LUT (for example, the LUT illustrated in FIG. 23) in which the value of each P-MPR needed to satisfy the MPE is written for each dutycycle (step S306). When there is no dutycycle with a P-MPR of 0 dB (step S306: No), the largest dutycycle with the smallest P-MPR is selected from the LUT (step S307).

The terminal device 200 determines whether the percentage (%) value of "maxUplinkDutyCycle-FR2" actually allocated from the base station device 100 as resource allocation is larger than the percentage (%) value of the dutycycle selected in step S307, in the evaluation period of 1 second. When the value is larger than the selected percentage (%) value, the terminal device 200 determines whether this percentage (%) fails to satisfy the PD regulation (step 308).

When the percentage (%) value allocated as resource allocation is the selected percentage (%) value or below, or when the percentage (%) value of resource allocation does not fail to meet the PD regulation (step S308: No), the terminal device 200 adopts the LUT value at the percentage (%) value selected in step S307 (step S309). In contrast, when the percentage (%) value allocated as resource allocation fails to meet the PD regulation (step S308: Yes), the terminal device 200 adopts a LUT value (including P-MPR) at the percentage (%) value of the dutycycle corresponding to the percentage (%) value of "maxUplinkDutyCycle-FR2" allocated from the base station device 100 as resource allocation (step S310).

Returning to step S306, when there is a dutycycle with P-MPR of 0 dB in the LUT (step S306: Yes), the largest dutycycle with P-MPR of 0 dB is selected from the LUT (step S311) .

The terminal device 200 determines whether the percentage (%) value of "maxUplinkDutyCycle-FR2" actually allocated from the base station device 100 as resource allocation is larger than the percentage (%) value of the dutycycle selected in step S311, in the evaluation period of 1 second. When the value is larger than the selected percentage (%) value, the terminal device 200 determines whether this percentage (%) fails to satisfy the PD regulation (step 312).

When the percentage (%) value allocated as resource allocation is the selected percentage (%) value or below, or when the percentage (%) value of resource allocation does not fail to meet the PD regulation (step S312: No), the terminal device 200 adopts the LUT value at the percentage (%) value selected in step S311 (step S313). In contrast, when the percentage (%) value allocated as resource allocation fails to meet the PD regulation (step S312: Yes), the terminal device 200 adopts a LUT value (including P-MPR) at the percentage (%) value of the dutycycle corresponding to the percentage (%) value of "maxUplinkDutyCycle-FR2" allocated from the base station device 100 as resource allocation (step S314).

<<5. Hardware configuration example>>

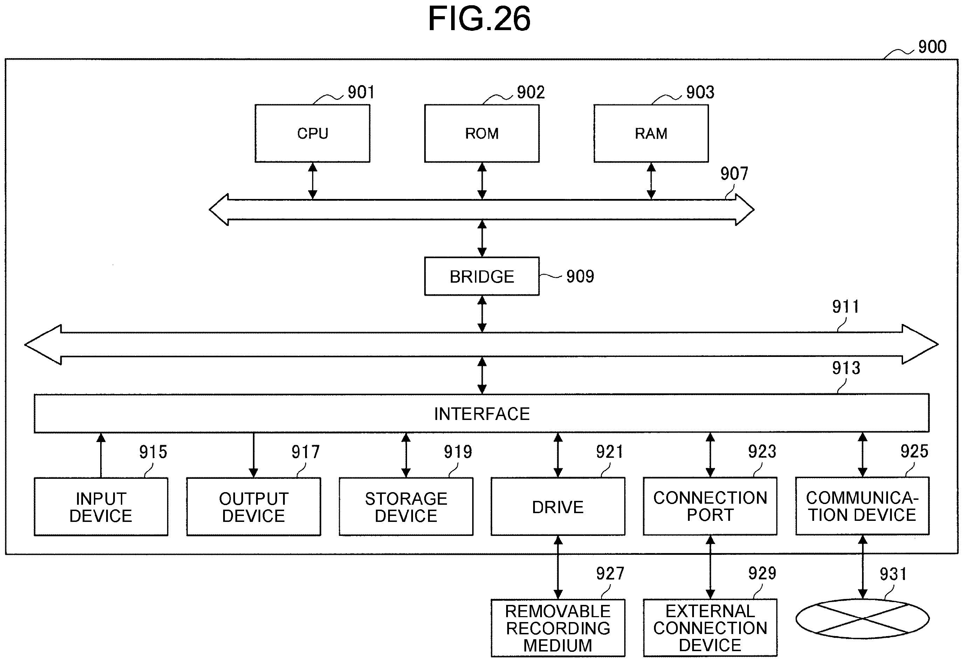

Subsequently, with reference to FIG. 26, an example of the hardware configuration of the information processing device constituting the system according to an embodiment of the present disclosure, including the base station device 100, the terminal device 200, and the control device 295 described above, will be described in detail. FIG. 26 is a functional block diagram illustrating a configuration example of a hardware configuration of an information processing device constituting the system according to an embodiment of the present disclosure.

An information processing device 900 constituting the system according to the present embodiment mainly includes a CPU 901, ROM 902, and RAM 903. The information processing device 900 further includes a host bus 907, a bridge 909, an external bus 911, an interface 913, an input device 915, an output device 917, a storage device 919, a drive 921, a connection port 923, and a communication device 925.

The CPU 901 functions as an arithmetic processing device and a control device, and controls all or part of the operation in the information processing device 900 according to various programs recorded in the ROM 902, the RAM 903, the storage device 919, or a removable recording medium 927. The ROM 902 stores programs and calculation parameters used by the CPU 901. The RAM 903 primarily stores programs used by the CPU 901, parameters that change as appropriate in execution of the programs, or the like. These are interconnected by the host bus 907 including an internal bus such as a CPU bus. For example, the control unit 140 of the base station device 100 illustrated in FIG. 2 and the control unit 240 of the terminal device 200 illustrated in FIG. 3 can be configured by the CPU 901. Furthermore, various functions of the control device 295 can be realized by the operation of the CPU 901.

The host bus 907 is connected to the external bus 911 such as a Peripheral Component Interconnect/Interface (PCI) bus via the bridge 909. In addition, the external bus 911 is connected with the input device 915, the output device 917, the storage device 919, the drive 921, the connection port 923, and the communication device 925, via the interface 913.

The input device 915 is an operation means operated by the user, such as a mouse, a keyboard, a touch panel, a button, a switch, a lever, and a pedal. Furthermore, the input device 915 may be, for example, a remote control means (also referred to as a remote controller) using infrared rays or other radio waves, or an external connection device 929 such as a mobile phone or a PDA that supports the operation of the information processing device 900. Furthermore, the input device 915 may include, for example, an input control circuit that generates an input signal based on the information input by the user using the above operation means and outputs the generated input signal to the CPU 901. By operating the input device 915, the user of the information processing device 900 can input various data to the information processing device 900 and give an instruction on the processing operation.

The output device 917 is constituted with a device capable of visually or audibly notifying the user of acquired information. Examples of such devices include display devices such as CRT display devices, liquid crystal display devices, plasma display devices, EL display devices, and lamps, audio output devices such as speakers and headphones, and printer devices. The output device 917 outputs results obtained by various processing performed by the information processing device 900, for example. Specifically, the display device displays the results obtained by various types of processing performed by the information processing device 900 in text or images. Meanwhile, the audio output device converts an audio signal composed of reproduced audio data, acoustic data, or the like into an analog signal and outputs the obtained signal.

The storage device 919 is a device for storing data configured as an example of the storage unit of the information processing device 900. The storage device 919 includes, for example, a magnetic storage unit device such as a hard disk drive (HDD), a semiconductor storage device, an optical storage device, a magneto-optical storage device, or the like. The storage device 919 stores programs executed by the CPU 901, various data, or the like. For example, the storage unit 120 of the base station device 100 illustrated in FIG. 2 and the storage unit 220 of the terminal device 200 illustrated in FIG. 3 can be configured with any of the storage devices 919, ROM 902, and RAM 903, or a combination of two or more of the storage devices 919, the ROM 902, and the RAM 903.

The drive 921 is a reader/writer for a recording medium, and is built in or externally connected to the information processing device 900. The drive 921 reads information recorded on a removable recording medium 927 such as a mounted magnetic disk, optical disk, magneto-optical disk, or semiconductor memory, and outputs the read information to the RAM 903. Furthermore, the drive 921 can also write a record on the mounted removable recording medium 927 such as a magnetic disk, an optical disk, a magneto-optical disk, or semiconductor memory. Examples of the removable recording medium 927 include a DVD medium, an HD-DVD medium, and a Blu-ray (registered trademark) medium. Furthermore, the removable recording medium 927 may be a Compact Flash (CF) (registered trademark), a flash drive, a secure digital (SD) memory card, or the like. Furthermore, the removable recording medium 927 may be an integrated circuit (IC) card having an embedded non-contact IC chip, an electronic device, or the like.

The connection port 923 is a port for directly connecting to the information processing device 900. Examples of the connection port 923 include a universal serial bus (USB) port, an IEEE 1394 port, a Small Computer System Interface (SCSI) port, or the like. Other examples of the connection port 923 include an RS -232C port, an optical audio terminal, and a High-Definition Multimedia Interface (HDMI) (registered trademark) port. With the external connection device 929 connected to the connection port 923, the information processing device 900 directly acquires various data from the external connection device 929 or provides various data to the external connection device 929.

The communication device 925 is, for example, a communication interface constituted with a communication device or the like for connecting to a network 931. The communication device 925 is, for example, a communication card for wired LAN, wireless LAN, Bluetooth (registered trademark) or Wireless USB (WUSB). Furthermore, the communication device 925 may be an optical communication router, an Asymmetric Digital Subscriber Line (ADSL) router, a modem for various communications, or the like. The communication device 925 can exchange signals or the like through the Internet and with other communication devices in accordance with a predetermined protocol such as TCP/IP. Furthermore, the communication network 931 connected to the communication device 925 includes a network or the like connected in a wired or wireless communication, and may be, for example, the Internet, a home LAN, infrared communication, radio wave communication, satellite communication, or the like. For example, the radio communication unit 110 and the network communication unit 130 of the base station device 100 illustrated in FIG. 2, and the communication unit 210 of the terminal device 200 illustrated in FIG. 3 can be configured by the communication device 925.

An example of the hardware configuration capable of implementing the functions of the information processing device 900 constituting the system according to the embodiment of the present disclosure has been described as above. Each of the above-described components may be constituted by using a general-purpose member, or may be constituted by hardware specialized for the function of each of the components. Accordingly, it is possible to appropriately change the hardware configuration to be used according to the technical level at the time of conducting the present embodiment. Note that, although not illustrated in FIG. 26, of course, the hardware configuration includes various components corresponding to the information processing device 900 included in the system.

Incidentally, it is possible to create a computer program for implementation of individual functions of the information processing device 900 constituting the system according to the present embodiment as described above and possible to install the created program on a personal computer or the like. Furthermore, it is also possible to provide a computer-readable recording medium storing such a computer program. Examples of the recording medium include a magnetic disk, an optical disk, a magneto-optical disk, a flash drive, or the like. Furthermore, the computer program described above may be distributed via a network, for example, without using a recording medium. Furthermore, the number of computers that execute the computer program is not particularly limited. For example, the computer program may be cooperatively executed by a plurality of computers (for example, a plurality of servers or the like).

<<6. Modification>>

Each of the above-described embodiments is an example, and various modifications and applications are possible.

<6-1. Example of application to other communication devices>

For example, the technique of the present disclosure is also applicable to devices other than communication terminals such as smartphones.

In recent years, a technology referred to as Internet of Things (IoT) that connects various things to a network has attracted attention, and thus it is expected that devices other than smartphones and tablet terminals can also be used for communication. Therefore, for example, by applying the technology according to the present disclosure to various mobile devices, it is possible to more suitably implement communication using millimeter waves for the devices as well.

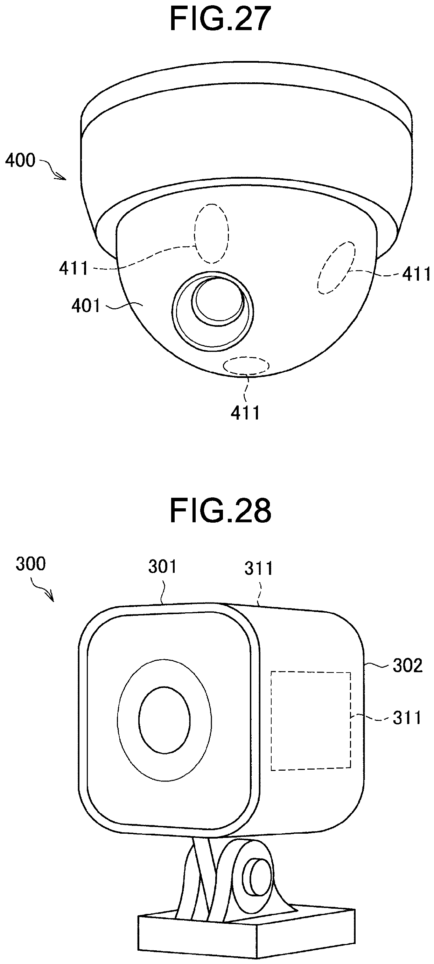

For example, FIG. 27 is a diagram for describing an application example of the communication device according to the present embodiment. Specifically, FIG. 27 is an example when the technology of the present disclosure is applied to a camera device. Specifically, in the example illustrated in FIG. 27, an antenna device according to an embodiment of the present disclosure is held so as to be located on outer surfaces of the housing of a camera device 300 in the vicinity of the surfaces 301 and 302 facing in mutually different directions. For example, reference numeral 311 schematically illustrates an antenna device according to an embodiment of the present disclosure. With such a configuration, the camera device 300 illustrated in FIG. 27 can transmit or receive a radio signal propagating in a direction substantially matching the normal direction of individual surfaces, that is, each of the surfaces 301 and 302. Note that the antenna device 311 may be provided not only on the surfaces 301 and 302 illustrated in FIG. 27 but also on other surfaces.

Based on the above configuration, by controlling the communication with another device (for example, the base station) using a directional beam in accordance with the change of posture of the camera device 300 based on the above-described technology according to the present disclosure, it is possible to more suitably implement communication using millimeter waves.

The technology according to the present disclosure can also be applied to an unmanned aerial vehicle referred to as a drone. For example, FIG. 28 is a diagram for describing another application example of the communication device according to the present embodiment. Specifically, FIG. 28 illustrates an example of applying the technology according to the present disclosure to a camera device installed at the bottom of a drone. Specifically, in the case of a drone flying in a high place, it is desirable that the radio signal (millimeter wave) arriving from each direction can be transmitted or received mainly on the lower side. Therefore, in the example illustrated in FIG. 28, an antenna device according to an embodiment of the present disclosure is held so as to be located on outer surfaces 401 of the housing of a camera device 400 mounted on the lower part of the drone, in the vicinity of the portions facing in mutually different directions. For example, reference numeral 411 schematically illustrates an antenna device according to an embodiment of the present disclosure. Although not illustrated in FIG. 28, the present invention is not limited to the camera device 400, and for example, an antenna device 411 may be provided in each part of the housing of the drone. Even in this case, it is particularly preferable that the antenna device 411 is provided on the lower side of the housing.

As illustrated in FIG. 28, when at least a part of the outer surface of the housing of the target device is formed as a surface that is curved (that is, a curved surface), the antenna device 411 is preferably held in the vicinity of each of a plurality of partial regions having normal directions intersecting each other or normal directions being twisted with each other, out of the partial regions in the curved surface. With such a configuration, the camera device 400 illustrated in FIG. 28 can transmit or receive a radio signal propagating in a direction substantially matching the normal direction of each of the partial regions.

Based on the above configuration, by controlling the communication with another device (for example, the base station) using a directional beam in accordance with the change of posture of the drone based on the above-described technology according to the present disclosure, it is possible to more suitably implement communication using millimeter waves.

The examples described with reference to FIGS. 27 and 28 are merely examples, and the technique according to the present disclosure is applicable to any device with no particular limitation as long as it is a device that performs communication using millimeter waves. For example, there are a wide variety of new business areas to be developed with 5G, such as the automobile field, industrial equipment field, home security field, smart meter field, and other IoT fields, and the technology according to the present disclosure is applicable to communication terminals applied in individual fields. More specific examples of items to which the technology according to the present disclosure can be applied include head-mounted wearable devices used for realizing AR and VR and various wearable devices used in telemedicine and the like. As another example, the technology according to the present disclosure can be applied to a device referred to as a portable game device, a broadcasting camcorder when the devices are equipped with radio communication function. Furthermore, in recent years, various robots referred to as autonomous robots such as customer service robots, robot bets, work robots, etc. have been proposed, and the technology according to the present disclosure can be applied even to such robots when they have a communication function. The technology according to the present disclosure may be applied not only to the drone described above but also to various moving objects such as automobiles, motorcycles, bicycles, and the like.

<6-2. Example of application to communication based on other communication standards>

The technology of the present disclosure is also applicable to communication standards other than communication using millimeter waves in 5G.

The above-described embodiment mainly focuses on 5G radio communication technology and includes an example of applying the technology of the present disclosure to the communication using millimeter waves between a base station device and a terminal device. However, the application of the technology according to the present disclosure is not necessarily limited to the communication between a base station device and a terminal device or communication using millimeter waves and can be applied to any communication using a directional beam.

As a specific example, the present disclosure is applicable to communications based on the IEEE802.11ad standard that uses the 60 GHz band, communications based on the IEEE802.11ay standard for which standardization work is underway, etc. among radio communications based on the Wi-Fi (registered trademark) standard.

Due to the great influence of free space reduction, absorption by oxygen, and rainfall attenuation in the communications under IEEE802.11ad standard and the IEEE802.11ay standard, the beamforming technology is used is these fields similarly to the above-described 5G radio communication technology. As a specific example, the beamforming procedure in the IEEE802.11ad standard is mainly divided into two stages: Sector Level Sweep (SLS) and Beam Refinement Protocol (BRP).

More specifically, the SLS searches for a communication partner and starts communication. The maximum number of sectors is 64 for one ANT, and 128 for the total of all ANTs. BRP is appropriately carried out after the end of SLS, for example, after the ring is disconnected. Such an operation is similar to the mechanism in the operation based on the IA procedure in the communication using millimeter waves in 5G, that is, the mechanism in which BPL is established by the wide beam and the BPL in the narrow beam is then established by the operation of Beam Refinement (BR) in the Beam Management (BM) in the CONNECTED mode.

The IEEE802.11ay standard, which is currently under development, has been examining the data rate improvement using a combination of channel bonding technology and higher-order modulation, similarly to the "contiguous" "intra-CA" in 5G millimeter wave communication.

From the above characteristics, it is also possible to apply the above-described technology according to the present disclosure to communication based on the IEEE802.11ad standard and the IEEE802.11ay standard.

Needless to say, the technology according to the present disclosure can also be applied to the standards succeeding the various standards described above when communication using the directional beam is assumed. In radio communication using a frequency band exceeding millimeter waves in particular, it is highly probable to apply the beamforming technology because this is more susceptible to free space attenuation, absorption by the atmosphere, rainfall attenuation, etc. than the communication using millimeter waves.

<6-3. Other modifications>

Although the above-described embodiment is an example in which the antenna element included in the antenna device 250 is a patch antenna, the antenna element is not limited to the patch antenna, and may be a dipole antenna, for example.

Furthermore, although the above-described embodiment is an example in which the antenna device 250 is a dual polarized antenna corresponding to vertically polarized waves and horizontally polarized waves, the polarized waves supported by the antenna device 250 are not limited to vertically polarized waves or horizontally polarized waves. For example, the antenna device 250 may support non-orthogonal polarized waves. The antenna device 250 may support three or more polarized waves.

The information processing device (control device) that controls the base station device 100, the terminal device 200, or the control device 295 of the present embodiment may be realized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the configuration of the information processing device. At this time, the information processing device may be an external device (for example, a personal computer) of the base station device 100, the terminal device 200, or the control device 295. The information processing device may be a device inside the base station device 100, the terminal device 200, or the control device 295 (for example, may be the control unit 140, the control unit 240, or a processor inside the control device 295).

Furthermore, the communication program may be stored in a disk device included in a server device on a network such as the Internet so as to be able to be downloaded to a computer, for example. Furthermore, the functions described above may be implemented by using operating system (OS) and application software in cooperation. In this case, the sections other than the OS may be stored in a medium for distribution, or the sections other than the OS may be stored in a server device so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be arbitrarily altered unless otherwise specified. For example, various types of information illustrated in each of the drawings are not limited to the information illustrated.

In addition, each of the components of each of the illustrated devices is provided as a functional and conceptual illustration and thus does not necessarily have to be physically configured as illustrated. That is, the specific form of distribution/integration of each of the devices is not limited to those illustrated in the drawings, and all or a part thereof may be functionally or physically distributed or integrated into arbitrary units according to various loads and use conditions.

Furthermore, the above-described embodiments can be appropriately combined within a range implementable without contradiction of processing. Furthermore, the order of individual steps illustrated in the flowcharts of the above-described embodiment can be changed as appropriate.

Furthermore, for example, the present embodiment can be implemented as any configuration constituting a device or a system, for example, a processor as a large scale integration (LSI) or the like, a module using a plurality of processors or the like, a unit using a plurality of modules or the like, and a set obtained by further adding other functions to the unit, or the like (that is, a configuration of a part of the device).

In the present embodiment, a system represents a set of a plurality of components (devices, modules (components), or the like), and whether all the components are in the same housing would not be a big issue. Therefore, a plurality of devices housed in separate housings and connected via a network, and one device in which a plurality of modules is housed in one housing, are both systems.

Furthermore, for example, the present embodiment can adopt a configuration of cloud computing in which one function is cooperatively shared and processed by a plurality of devices via a network.

<<7. Summary>>

As described above, the information processing device according to an embodiment of the present disclosure generates control information based on measurement information including: first information based on a measurement result of a first polarized wave (one of V polarized wave or H polarized wave) transmitted from a first antenna element; second information indicating a relative difference (for example, a difference in phase or amplitude) between the first polarized wave transmitted from the first antenna element and a second polarized wave (the other of V polarized wave or H polarized wave) transmitted from the first antenna element; and third information indicating a relative difference between a radio signal transmitted from the first antenna element and a radio signal transmitted from a second antenna element different from the first antenna element. At this time, the third information may include, for example, information indicating a phase difference between the V polarized wave output from the first antenna element and the V polarized wave output from the second antenna element, and information indicating a phase difference between the H polarized wave output from the first antenna element and the H polarized wave output from the second antenna element.

The communication device can control the directivity of the radio signal with high accuracy by controlling the antenna device using the control information generated by the information processing device. As a result, the communication device can achieve high communication performance (for example, high antenna gain).

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and a modification as appropriate.

The effects described in individual embodiments of the present specification are merely examples, and thus, there may be other effects, not limited to the exemplified effects.

Note that the present technology can also have the following configurations.

(1) An information processing device comprising:

an acquisition unit that acquires measurement information obtained by a plurality of antenna elements included in an antenna device that transmits a radio signal using a first polarized wave and a second polarized wave that is inclined by a predetermined angle with respect to the first polarized wave; and
a generation unit that generates control information for controlling directivity of the radio signal based on the measurement information,
wherein the measurement information includes:

first information based on a measurement result of a first polarized wave transmitted from a first antenna element among the plurality of antenna elements;
second information indicating a relative difference between the first polarized wave transmitted from the first antenna element and a second polarized wave transmitted from the first antenna element; and
third information indicating a relative difference between a radio signal transmitted from the first antenna element and a radio signal transmitted from a second antenna element different from the first antenna element.

(2) The information processing device according to (1),

wherein the first information includes information related to a measurement result of a phase of the first polarized wave transmitted from the first antenna element, and
the second information includes information indicating a relative difference between the phase of the first polarized wave transmitted from the first antenna element and a phase of the second polarized wave transmitted from the first antenna element.

(3) The information processing device according to (2),
wherein the third information includes information indicating a relative difference between the phase of the second polarized wave transmitted from the first antenna element and a phase of the second polarized wave transmitted from the second antenna element.
(4) The information processing device according to (2) or (3),

wherein the first information includes information related to a measurement result of amplitude of the first polarized wave transmitted from the first antenna element, and
the second information includes information indicating a relative difference between the amplitude of the first polarized wave transmitted from the first antenna element and amplitude of the second polarized wave transmitted from the first antenna element.

(5) The information processing device according to (4),
wherein the third information includes information indicating a relative difference between the amplitude of the second polarized wave transmitted from the first antenna element and amplitude of the second polarized wave transmitted from the second antenna element.
(6) The information processing device according to any one of (1) to (5),
wherein the second polarized wave is a polarized wave inclined by 90° with respect to the first polarized wave.
(7) The information processing device according to any one of (1) to (6),
wherein the control information is generated based on the first information, the second information, and the third information, which are acquired for each posture of the antenna device.
(8) The information processing device according to any one of (1) to (7),
wherein the generation unit generates a plurality of pieces of the control information for each output mode of a radio wave, and associates each of the plurality of pieces of control information with power backoff information for satisfying a predetermined criterion related to an influence of the radio wave on a human body.
(9) The information processing device according to (8),

wherein the output mode includes at least a duty cycle indicating a ratio of radio wave output to radio wave non-output, and
the generation unit generates the plurality of pieces of control information for each of a plurality of the duty cycles, and associates the power backoff information with each of the pieces of control information.

(10) A communication device comprising:

an antenna part including a plurality of antenna elements;
an acquisition unit that acquires control information for controlling directivity of a radio signal transmitted from the antenna part, the radio signal being transmitted by using at least a first polarized wave and a second polarized wave that is inclined by a predetermined angle with respect to the first polarized wave; and
a communication control unit that controls the directivity of the radio signal transmitted from the antenna part based on the control information,
wherein the control information is information generated based on:

first information based on a measurement result of a first polarized wave transmitted from a first antenna element among the plurality of antenna elements;
second information indicating a relative difference between the first polarized wave transmitted from the first antenna element and a second polarized wave transmitted from the first antenna element; and
third information indicating a relative difference between a radio signal transmitted from the first antenna element and a radio signal transmitted from a second antenna element different from the first antenna element.

(11) The communication device according to (10),

wherein each of a plurality of pieces of the control information for each output mode of a radio wave is associated with power backoff information for satisfying a predetermined criterion related to an influence of the radio wave on a human body, and

the communication control unit selects the control information to be used for transmitting the radio signal from among the plurality of pieces of control information in accordance with the output mode of the radio wave.

(12) An information processing method comprising:

acquiring measurement information obtained by a plurality of antenna elements included in an antenna device that transmits a radio signal using a first polarized wave and a second polarized wave that is inclined by a predetermined angle with respect to the first polarized wave; and

generating control information for controlling directivity of the radio signal based on the measurement information, wherein the measurement information includes:

first information based on a measurement result of a first polarized wave transmitted from a first antenna element among the plurality of antenna elements included in the antenna device that transmits the radio signal using the first polarized wave and the second polarized wave that is inclined by a predetermined angle with respect to the first polarized wave;

second information indicating a relative difference between the first polarized wave transmitted from the first antenna element and a second polarized wave transmitted from the first antenna element; and

third information indicating a relative difference between a radio signal transmitted from the first antenna element and a radio signal transmitted from a second antenna element different from the first antenna element.

(13) A communication method comprising:

acquiring control information for controlling directivity of a radio signal transmitted from an antenna part including a plurality of antenna elements, the radio signal being transmitted by using at least a first polarized wave and a second polarized wave that is inclined by a predetermined angle with respect to the first polarized wave; and

controlling the directivity of the radio signal transmitted from the antenna part based on the control information, wherein the control information is information generated based on:

first information based on a measurement result of a first polarized wave transmitted from a first antenna element among the plurality of antenna elements;

second information indicating a relative difference between the first polarized wave transmitted from the first antenna element and a second polarized wave transmitted from the first antenna element; and

third information indicating a relative difference between a radio signal transmitted from the first antenna element and a radio signal transmitted from a second antenna element different from the first antenna element.

(14) An information processing program that causes a computer to function as:

an acquisition unit that acquires measurement information obtained by a plurality of antenna elements included in an antenna device that transmits a radio signal using a first polarized wave and a second polarized wave that is inclined by a predetermined angle with respect to the first polarized wave; and

a generation unit that generates control information for controlling directivity of the radio signal based on the measurement information,

wherein the measurement information includes:

first information based on a measurement result of a first polarized wave transmitted from a first antenna element among the plurality of antenna elements;

second information indicating a relative difference between the first polarized wave transmitted from the first antenna element and a second polarized wave transmitted from the first antenna element; and

third information indicating a relative difference between a radio signal transmitted from the first antenna element and a radio signal transmitted from a second antenna element different from the first antenna element.

(15) A communication program that causes a computer to function as:

an acquisition unit that acquires control information for controlling directivity of a radio signal transmitted from an antenna part including a plurality of antenna elements, the radio signal being transmitted by using at least a first polarized wave and a second polarized wave that is inclined by a predetermined angle with respect to the first polarized wave; and

a communication control unit that controls the directivity of the radio signal transmitted from the antenna part based on the control information,

wherein the control information is information generated based on:

first information based on a measurement result of a first polarized wave transmitted from a first antenna element among the plurality of antenna elements;

second information indicating a relative difference between the first polarized wave transmitted from the first antenna element and a second polarized wave transmitted from the first antenna element; and

third information indicating a relative difference between a radio signal transmitted from the first antenna element and a radio signal transmitted from a second antenna element different from the first antenna element.

Reference Signs List

1 COMMUNICATION SYSTEM
10 INFORMATION PROCESSING SYSTEM
100 BASE STATION DEVICE
110 RADIO COMMUNICATION UNIT
111, 211 RECEPTION PROCESSING UNIT
112, 212 TRANSMISSION PROCESSING UNIT
113, 213 ANTENNA
120, 220 STORAGE UNIT
130, 230 NETWORK COMMUNICATION UNIT
140, 240 CONTROL UNIT
200 TERMINAL DEVICE
210 COMMUNICATION UNIT
241 COMMUNICATION CONTROL UNIT
250 ANTENNA DEVICE
251 MIXER
253 RF DIVIDER (COMBINER)
255 ANTENNA UNIT
257 PHASE SHIFTER
259a, 259b SWITCH
261 AMPLIFIER
263 AMPLIFIER
265 ANTENNA ELEMENT
281 POSTURE CONTROL DEVICE
283 POSITION CONTROLLER
285 REFLECTOR
287 FEED ANTENNA
289 LTE LINK ANTENNA
291 VECTOR SIGNAL ANALYZER
293 LTE SYSTEM SIMULATOR
295 CONTROL DEVICE

## Claims

1. An information processing device comprising:

an acquisition unit that acquires measurement information obtained by a plurality of antenna elements included in an antenna device that transmits a radio signal using a first polarized wave and a second polarized wave that is inclined by a predetermined angle with respect to the first polarized wave; and
a generation unit that generates control information for controlling directivity of the radio signal based on the measurement information,
wherein the measurement information includes:

first information based on a measurement result of a first polarized wave transmitted from a first antenna element among the plurality of antenna elements;
second information indicating a relative difference between the first polarized wave transmitted from the first antenna element and a second polarized wave transmitted from the first antenna element; and
third information indicating a relative difference between a radio signal transmitted from the first antenna element and a radio signal transmitted from a second antenna element different from the first antenna element.

2. The information processing device according to claim 1,

wherein the first information includes information related to a measurement result of a phase of the first polarized wave transmitted from the first antenna element, and
the second information includes information indicating a relative difference between the phase of the first polarized wave transmitted from the first antenna element and a phase of the second polarized wave transmitted from the first antenna element.

3. The information processing device according to claim 2,
wherein the third information includes information indicating a relative difference between the phase of the second polarized wave transmitted from the first antenna element and a phase of the second polarized wave transmitted from the second antenna element.

4. The information processing device according to claim 2,

wherein the first information includes information related to a measurement result of amplitude of the first polarized wave transmitted from the first antenna element, and
the second information includes information indicating a relative difference between the amplitude of the first polarized wave transmitted from the first antenna element and amplitude of the second polarized wave transmitted from the first antenna element.

5. The information processing device according to claim 4,
wherein the third information includes information indicating a relative difference between the amplitude of the second polarized wave transmitted from the first antenna element and amplitude of the second polarized wave transmitted from the second antenna element.

6. The information processing device according to claim 1,
wherein the second polarized wave is a polarized wave inclined by 90° with respect to the first polarized wave.

7. The information processing device according to claim 1,
wherein the control information is generated based on the first information, the second information, and the third information, which are acquired for each posture of the antenna device.

8. The information processing device according to claim 1,
wherein the generation unit generates a plurality of pieces of the control information for each output mode of a radio wave, and associates each of the plurality of pieces of control information with power backoff information for satisfying a predetermined criterion related to an influence of the radio wave on a human body.

9. The information processing device according to claim 8,

wherein the output mode includes at least a duty cycle indicating a ratio of radio wave output to radio wave non-output, and
the generation unit generates the plurality of pieces of control information for each of a plurality of the duty cycles, and associates the power backoff information with each of the pieces of control information.

**10.** A communication device comprising:

an antenna part including a plurality of antenna elements;
an acquisition unit that acquires control information for controlling directivity of a radio signal transmitted from the antenna part, the radio signal being transmitted by using at least a first polarized wave and a second polarized wave that is inclined by a predetermined angle with respect to the first polarized wave; and
a communication control unit that controls the directivity of the radio signal transmitted from the antenna part based on the control information,
wherein the control information is information generated based on:

first information based on a measurement result of a first polarized wave transmitted from a first antenna element among the plurality of antenna elements;
second information indicating a relative difference between the first polarized wave transmitted from the first antenna element and a second polarized wave transmitted from the first antenna element; and
third information indicating a relative difference between a radio signal transmitted from the first antenna element and a radio signal transmitted from a second antenna element different from the first antenna element.

**11.** The communication device according to claim 10,

wherein each of a plurality of pieces of the control information for each output mode of a radio wave is associated with power backoff information for satisfying a predetermined criterion related to an influence of the radio wave on a human body, and
the communication control unit selects the control information to be used for transmitting the radio signal from among the plurality of pieces of control information in accordance with the output mode of the radio wave.

**12.** An information processing method comprising:

acquiring measurement information obtained by a plurality of antenna elements included in an antenna device that transmits a radio signal using a first polarized wave and a second polarized wave that is inclined by a predetermined angle with respect to the first polarized wave; and
generating control information for controlling directivity of the radio signal based on the measurement information,
wherein the measurement information includes:

first information based on a measurement result of a first polarized wave transmitted from a first antenna element among the plurality of antenna elements included in the antenna device that transmits the radio signal using the first polarized wave and the second polarized wave that is inclined by a predetermined angle with respect to the first polarized wave;
second information indicating a relative difference between the first polarized wave transmitted from the first antenna element and a second polarized wave transmitted from the first antenna element; and
third information indicating a relative difference between a radio signal transmitted from the first antenna element and a radio signal transmitted from a second antenna element different from the first antenna element.

**13.** A communication method comprising:

acquiring control information for controlling directivity of a radio signal transmitted from an antenna part including a plurality of antenna elements, the radio signal being transmitted by using at least a first polarized wave and a second polarized wave that is inclined by a predetermined angle with respect to the first polarized wave; and
controlling the directivity of the radio signal transmitted from the antenna part based on the control information,
wherein the control information is information generated based on:

first information based on a measurement result of a first polarized wave transmitted from a first antenna element among the plurality of antenna elements;
second information indicating a relative difference between the first polarized wave transmitted from the first antenna element and a second polarized wave transmitted from the first antenna element; and
third information indicating a relative difference between a radio signal transmitted from the first antenna element and a radio signal transmitted from a second antenna element different from the first antenna element.

14. An information processing program that causes a computer to function as:

an acquisition unit that acquires measurement information obtained by a plurality of antenna elements included in an antenna device that transmits a radio signal using a first polarized wave and a second polarized wave that is inclined by a predetermined angle with respect to the first polarized wave; and
a generation unit that generates control information for controlling directivity of the radio signal based on the measurement information,
wherein the measurement information includes:

first information based on a measurement result of a first polarized wave transmitted from a first antenna element among the plurality of antenna elements;
second information indicating a relative difference between the first polarized wave transmitted from the first antenna element and a second polarized wave transmitted from the first antenna element; and
third information indicating a relative difference between a radio signal transmitted from the first antenna element and a radio signal transmitted from a second antenna element different from the first antenna element.

15. A communication program that causes a computer to function as:

an acquisition unit that acquires control information for controlling directivity of a radio signal transmitted from an antenna part including a plurality of antenna elements, the radio signal being transmitted by using at least a first polarized wave and a second polarized wave that is inclined by a predetermined angle with respect to the first polarized wave; and
a communication control unit that controls the directivity of the radio signal transmitted from the antenna part based on the control information,
wherein the control information is information generated based on:

first information based on a measurement result of a first polarized wave transmitted from a first antenna element among the plurality of antenna elements;
second information indicating a relative difference between the first polarized wave transmitted from the first antenna element and a second polarized wave transmitted from the first antenna element; and
third information indicating a relative difference between a radio signal transmitted from the first antenna element and a radio signal transmitted from a second antenna element different from the first antenna element.

# FIG.1

1

100A

| BASE STATION DEVICE |

100B

| BASE STATION DEVICE |

100C

| BASE STATION DEVICE | ...

200A

| TERMINAL DEVICE |

200B

| TERMINAL DEVICE |

200C

| TERMINAL DEVICE | ...

# FIG.2

100

BASE STATION DEVICE

113

110

RADIO COMMUNICATION UNIT

RECEPTION PROCESSING UNIT — 111

TRANSMISSION PROCESSING UNIT — 112

120

STORAGE UNIT

140

CONTROL UNIT

130

NETWORK COMMUNICATION UNIT

# FIG.3

200

TERMINAL DEVICE

210

COMMUNICATION UNIT

213

RECEPTION PROCESSING UNIT 211

TRANSMISSION PROCESSING UNIT 212

220

STORAGE UNIT

230

NETWORK COMMUNICATION
UNIT

240

CONTROL UNIT

# FIG.4

EP 4 016 864 A1

FIG.5

# FIG.6

EP 4 016 864 A1

# FIG.7 PROCEDURE P1: BEAM SELECTION AND BEAM RESELECTION

PROCEDURE P2: Tx BEAM REFINEMENT

PROCEDURE P3: Rx BEAM REFINEMENT

EP 4 016 864 A1

# FIG.8

EP 4 016 864 A1

# FIG.9

# FIG.10

Absorbers

CATR reflector

Parabolic curve

Feed at focal point

Plane wave front

θ

φ

NR LINK ANTENNA FOR 3GPP RMC

NR_FRI LINK ANTENNA

NR_FR1 SYSTEM SIMULATOR

NR_FR2 SYSTEM SIMULATOR

# FIG.11

EP 4 016 864 A1

# FIG.12

# FIG.13

| Patch2 | V_Mag | V_Ph | H_Mag | H_Ph | Patch1 | V_Mag | V_Ph | H_Mag | H_Ph |
|---|---|---|---|---|---|---|---|---|---|
| - | Ref00 | Ref00 | Ref00 | Ref00 | - | delta1.5 | delta -101.5 | delta3.1 | delta -121.5 |
| - | Ref03 | Ref03 | Ref03 | Ref03 | - | delta1.8 | delta -110.5 | delta3.8 | delta -111.4 |
| - | Ref06 | Ref06 | Ref06 | Ref06 | - | delta2.2 | delta -118.5 | delta5.2 | delta -99.9 |

| Patch3 | V_Mag | V_Ph | H_Mag | H_Ph | Patch4 | V_Mag | V_Ph | H_Mag | H_Ph | elevation | azimuth |
|---|---|---|---|---|---|---|---|---|---|---|---|
| - | delta2.2 | delta5.5 | delta1.2 | delta110.5 | - | delta1.2 | delta25.5 | delta1.5 | delta55.5 | 0 | 0 |
| - | delta2.8 | delta11.8 | delta1.4 | delta101.9 | - | delta1.5 | delta18.8 | delta1.9 | delta52.1 | 0 | 3 |
| - | delta3.1 | delta18.9 | delta2.2 | delta88.8 | - | delta1.9 | delta16.7 | delta2.8 | delta48.8 | 0 | 6 |

# FIG.14

MEASUREMENT PERIOD OF REFERENCE ANTENNA ELEMENT

MEASUREMENT PERIOD OF SECOND ANTENNA ELEMENT

MEASUREMENT PERIOD OF THIRD ANTENNA ELEMENT

TIME

T12

T13

EP 4 016 864 A1

# FIG.15

MEASUREMENT PERIOD
OF REFERENCE
ANTENNA ELEMENT

MEASUREMENT PERIOD
OF SECOND
ANTENNA ELEMENT

A22

TIME

FIG.16

# FIG.17

| UL Desc | Carrier Index | Tx Beam ID | | Phi_ Positioner | Theta_ Positioner | Tx Power Total (dBm) | Tx Power Total Min | Tx Power Total Max | Time (s) |
|---|---|---|---|---|---|---|---|---|---|
| 2078347_100MHz_66@0_10dBm_QPSK_CP-OFDM | 0 | 38 | 2469 | 300 | 165 | 21.6752 | -9999 | 9999 | - |
| 2078347_100MHz_66@0_10dBm_QPSK_CP-OFDM | 0 | 165 | 20837 | 60 | 150 | 18.9229 | -9999 | 9999 | - |

| UL Desc | Carrier Index | Tx Beam ID | | Phi_ Positioner | Theta_ Positioner | Tx Power Total (dBm) | Tx Power Total Min | Tx Power Total Max | Time (s) |
|---|---|---|---|---|---|---|---|---|---|
| 2078347_100MHz_66@0_10dBm_QPSK_CP-OFDM | 0 | 53 | 6901 | 180 | 15 | 21.2348 | -9999 | 9999 | - |
| 2078347_100MHz_66@0_10dBm_QPSK_CP-OFDM | 0 | 181 | 25628 | 285 | 15 | 23.1031 | -9999 | 9999 | - |

# FIG.18

| PD (W/m$^2$) | | |
|---|---|---|
| BID | PD_Duty 1 (BID: 53/181) | PD_Duty 1 (H/V TOTAL) |
| 53 | 9.86 | 25.12 |
| 181 | 15.26 | |
| 53 | 9.88 | 23.53 |
| 181 | 13.65 | |
| 53 | 8.77 | 21.56 |
| 181 | 12.79 | |
| 53 | 11.36 | 25.01 |
| 181 | 13.65 | |
| 53 | 12.3 | 25.33 |
| 181 | 13.03 | |
| 53 | 7.72 | 21.95 |
| 181 | 14.23 | |
| 53 | 9.82 | 23.1 |
| 181 | 13.28 | |

BEAM PAIR WITH DUAL POLARIZED WAVE (V & H)

## FIG.19

| Patch2 | V_Mag | V_Ph | H_Mag | H_Ph | Patch1 | V_Mag | V_Ph | H_Mag | H_Ph | |
|--------|-------|------|-------|------|--------|-------|------|-------|------|--|
| - | Ref00 | Ref00 | delta1.1 | delta -119.5 | - | delta1.5 | delta -101.5 | delta2.1 | delta -121.5 | |
| - | Ref03 | Ref03 | delta1.9 | delta -109.5 | - | delta1.8 | delta -110.5 | delta1.8 | delta -111.4 | |
| - | Ref06 | Ref06 | delta0.8 | delta -120.5 | - | delta2.2 | delta -118.5 | delta1.2 | delta -99.9 | |

| Patch3 | V_Mag | V_Ph | H_Mag | H_Ph | Patch4 | V_Mag | V_Ph | H_Mag | H_Ph | elevation | azimuth |
|--------|-------|------|-------|------|--------|-------|------|-------|------|-----------|---------|
| - | delta2.2 | delta5.5 | delta1.2 | delta110.5 | - | delta1.2 | delta25.5 | delta1.5 | delta55.5 | 0 | 0 |
| - | delta2.8 | delta11.8 | delta1.4 | delta101.9 | - | delta1.5 | delta18.8 | delta1.9 | delta52.1 | 0 | 3 |
| - | delta3.1 | delta18.9 | delta2.2 | delta88.8 | - | delta1.9 | delta16.7 | delta2.8 | delta48.8 | 0 | 6 |

EP 4 016 864 A1

# FIG.20

```
            ┌──────────────┐
            │    START     │
            └──────┬───────┘
                   │
                   ▼          ⌐S101
           ◇─────────────────◇        NO
           │ HAVING CAPABILITY? │──────────┐
           ◇─────────────────◇            │
                   │ YES                   ▼
                   │                  DIFFERENT
                   ▼         ⌐S102     PROCESSING
        ┌─────────────────────────┐
        │  SELECT AND DECLARE DESIRED │
        │     dutycycle VALUE      │
        └─────────────┬───────────┘
                      │
                      ▼        ⌐S103
           ◇─────────────────────◇       NO
           │ FAIL TO MEET REGULATIONS? │──────────┐
           ◇─────────────────────◇               │
                      │ YES                        ▼
                      │                       DIFFERENT
                      ▼        ⌐S104          PROCESSING
        ┌─────────────────────────┐
        │   PERFORM POWER BACKOFF   │
        └─────────────┬───────────┘
                      │
                      ▼
            ┌──────────────┐
            │     END      │
            └──────────────┘
```

# FIG.21

# FIG.22

## FIG.23

| Beam ID_V | Beam ID_H | 15% P-MPR [dB] | 20% P-MPR [dB] | 25% P-MPR [dB] | 30% P-MPR [dB] | 40% P-MPR [dB] | 50% P-MPR [dB] | 60% P-MPR [dB] | 70% P-MPR [dB] | 80% P-MPR [dB] | 90% P-MPR [dB] | 100% P-MPR [dB] |
|---|---|---|---|---|---|---|---|---|---|---|---|---|
| 0 | 128 | 0.0 | 0.0 | 0.0 | 0.0 | 0.0 | 0.5 | 0.8 | 1.0 | 1.2 | 1.6 | 1.9 |
| 1 | 129 | 0.0 | 0.0 | 0.0 | 0.0 | 0.0 | 0.5 | 0.8 | 1.0 | 1.2 | 1.6 | 1.9 |
| 2 | 130 | 0.0 | 0.0 | 0.0 | 0.0 | 0.0 | 0.5 | 0.8 | 1.0 | 1.2 | 1.6 | 1.9 |
| 3 | 131 | 0.0 | 0.0 | 0.0 | 0.0 | 0.0 | 0.5 | 0.8 | 1.0 | 1.2 | 1.6 | 1.9 |
| 4 | 132 | 0.0 | 0.0 | 0.0 | 0.0 | 0.0 | 0.5 | 0.8 | 1.0 | 1.2 | 1.6 | 1.9 |
| 5 | 133 | 0.0 | 0.0 | 0.0 | 0.0 | 0.0 | 0.5 | 0.8 | 1.0 | 1.2 | 1.6 | 1.9 |
| 6 | 134 | 0.0 | 0.0 | 0.0 | 0.0 | 0.0 | 0.5 | 0.8 | 1.0 | 1.2 | 1.6 | 1.9 |
| 7 | 135 | 0.0 | 0.0 | 0.0 | 0.0 | 0.0 | 0.5 | 0.8 | 1.0 | 1.2 | 1.6 | 1.9 |
| 8 | 136 | 0.0 | 0.0 | 0.0 | 0.0 | 0.0 | 0.5 | 0.8 | 1.0 | 1.2 | 1.6 | 1.9 |
| 9 | 137 | 0.0 | 0.0 | 0.0 | 0.0 | 0.0 | 0.5 | 0.8 | 1.0 | 1.2 | 1.6 | 1.9 |
| 10 | 138 | 0.0 | 0.0 | 0.0 | 0.0 | 0.0 | 0.5 | 0.8 | 1.0 | 1.2 | 1.6 | 1.9 |
| 11 | 139 | 0.0 | 0.0 | 0.0 | 0.0 | 0.0 | 0.5 | 0.8 | 1.0 | 1.2 | 1.6 | 1.9 |
| 12 | 140 | 0.0 | 0.0 | 0.0 | 0.0 | 0.0 | 0.5 | 0.8 | 1.0 | 1.2 | 1.6 | 1.9 |
| 13 | 141 | 0.0 | 0.0 | 0.0 | 0.0 | 0.0 | 0.5 | 0.8 | 1.0 | 1.2 | 1.6 | 1.9 |
| 14 | 142 | 0.0 | 0.0 | 0.0 | 0.0 | 0.0 | 0.5 | 0.8 | 1.0 | 1.2 | 1.6 | 1.9 |
| 15 | 143 | 0.0 | 0.0 | 0.0 | 0.0 | 0.0 | 0.5 | 0.8 | 1.0 | 1.2 | 1.6 | 1.9 |
| 16 | 144 | 0.0 | 0.0 | 0.0 | 0.0 | 0.0 | 0.5 | 0.8 | 1.0 | 1.2 | 1.6 | 1.9 |
| 17 | 145 | 0.0 | 0.0 | 0.0 | 0.0 | 0.0 | 0.5 | 0.8 | 1.0 | 1.2 | 1.6 | 1.9 |
| 18 | 146 | 0.0 | 0.0 | 0.0 | 0.0 | 0.0 | 0.5 | 0.8 | 1.0 | 1.2 | 1.6 | 1.9 |
| 19 | 147 | 0.0 | 0.0 | 0.0 | 0.0 | 0.0 | 0.5 | 0.8 | 1.0 | 1.2 | 1.6 | 1.9 |

⋮

EP 4 016 864 A1

# FIG.24

# FIG.25

```
        ┌─────┐        ┌──────────────┐ S301      ┌──────────────┐ S302      ┌──────────────┐ S303      ┌──────────────────┐ S304
        │ MCC │───────▶│  IS THERE    │────No────▶│ SELECT LARGEST│──────────▶│ FAIL TO MEET │────No────▶│ ADOPT LUT VALUE OF│
        └─────┘        │  SENSOR      │           │ dutycycle WITH│           │ REGULATIONS? │           │ SELECTED dutycycle│
                       │  DETECTION?  │           │ P-MPR OF 0    │           │              │           │                  │
                       └──────────────┘           └──────────────┘           └──────────────┘           └──────────────────┘
                              │                                                      │
                             Yes                                                    Yes
```

FIG.25

**S301** IS THERE SENSOR DETECTION?

**S302** SELECT LARGEST dutycycle WITH P-MPR OF 0

**S303** FAIL TO MEET REGULATIONS?

**S304** ADOPT LUT VALUE OF SELECTED dutycycle

**S305** ADOPT LUT VALUE OF dutycycle DESIGNATED BY BASE STATION

**S306** IS THERE dutycycle WITH P-MPR OF 0?

**S307** SELECT LARGEST % dutycycle WITH SMALLEST P-MPR

**S308** FAIL TO MEET REGULATIONS?

**S309** ADOPT LUT VALUE OF SELECTED dutycycle

**S310** ADOPT LUT VALUE OF dutycycle DESIGNATED BY BASE STATION

**S311** SELECT LARGEST dutycycle WITH P-MPR OF 0

**S312** FAIL TO MEET REGULATIONS?

**S313** ADOPT LUT VALUE OF SELECTED dutycycle

**S314** ADOPT LUT VALUE OF dutycycle DESIGNATED BY BASE STATION

EP 4 016 864 A1

# FIG.26

EP 4 016 864 A1

# FIG.27

# FIG.28

## INTERNATIONAL SEARCH REPORT

International application No.

PCT/JP2019/042230

### A. CLASSIFICATION OF SUBJECT MATTER
Int.Cl. H04B7/06(2006.01)i, H04B7/08(2006.01)i, H04B7/10(2006.01)i
FI: H04B7/10B, H04B7/06950, H04B7/08800

According to International Patent Classification (IPC) or to both national classification and IPC

### B. FIELDS SEARCHED
Minimum documentation searched (classification system followed by classification symbols)
Int.Cl. H04B7/06, H04B7/08, H04B7/10

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2009-81792 A (NIPPON TELEGRAPH AND TELEPHONE CORPORATION) 16.04.2009 (2009-04-16), claims 3-7, paragraph [0027] | 1-15 |
| A | JP 2017-163370 A (NEC CORPORATION) 14.09.2017 (2017-09-14), abstract | 1-15 |
| A | JP 2016-21686 A (NEC CORPORATION) 04.02.2016 (2016-02-04), abstract | 1-15 |
| A | US 2014/0323174 A1 (MILOTTA, G.) 30.10.2014 (2014-10-30), abstract | 1-15 |

☐ Further documents are listed in the continuation of Box C.      ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08.01.2020 | 28.01.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2019/042230 |

```
JP 2009-81792 A    16.04.2009    (Family: none)

JP 2017-163370 A   14.09.2017    (Family: none)

JP 2016-21686 A    04.02.2016    (Family: none)

US 2014/0323174 A1 30.10.2014    WO 2013/091713 A1
                                 abstract
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **SATOSHI SUYAMA et al.** 5G Multi-Antenna Technology. *NTT DOCOMO Technical Journal,* 2016, vol. 23 (4), 30-39